(19) **Europäisches Patentamt**
**European Patent Office**
**Office européen des brevets**

(11) **EP 2 390 064 A1**

(12) **EUROPEAN PATENT APPLICATION**
published in accordance with Art. 153(4) EPC

(43) Date of publication:
30.11.2011 Bulletin 2011/48

(51) Int Cl.:
*B25J 9/10* (2006.01)       *B25J 9/22* (2006.01)

(21) Application number: 10733351.0

(22) Date of filing: 20.01.2010

(86) International application number:
PCT/JP2010/000293

(87) International publication number:
WO 2010/084743 (29.07.2010 Gazette 2010/30)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 22.01.2009 JP 2009011810

(71) Applicant: Panasonic Corporation
Kadoma-shi
Osaka 571-8501 (JP)

(72) Inventor: TSUSAKA, Yuko
Osaka 540-6207 (JP)

(74) Representative: Eisenführ, Speiser & Partner
Johannes-Brahms-Platz 1
20355 Hamburg (DE)

(54) **APPARATUS AND METHOD FOR CONTROLLING ROBOT ARM, ROBOT, PROGRAM FOR CONTROLLING ROBOT ARM, AND INTEGRATED ELECTRONIC CIRCUIT**

(57) A control apparatus for a robot arm, which controls an operation of the robot arm (5) so as to carry out a job by using the robot arm (5), is designed to correct operation information based on operation correcting information relating to a correcting method for operation information relating to operation of the robot arm in response to a manipulation of the person on the robot arm, and a force of the person detected by a force detection unit (53) during an operation of the robot arm (5), by an operation correcting unit (20).

Fig.2

**Description**

TECHNICAL FIELD

The present invention relates to a control apparatus and a control method for a robot arm, used for generating operations of a robot as well as for teaching the operations to the robot, a robot provided with the control apparatus for a robot arm, a control program, and an integrated electronic circuit for a robot arm.

BACKGROUND ART

In recent years, house-service robots, such as nursing robots or housekeeping support robots, have been vigorously developed. Different from an industrial robot, the house-service robot is operated by amateurs in home; therefore, it is necessary to easily teach operations to the robot. Moreover, since there are various operation environments in which the robot carries out a job depending on homes, it is necessary for the robot to flexibly adjust to the corresponding home environment.

For example, a teaching method for the robot device has been proposed in which a force sensor is attached to a wrist or the like of a robot, and a teaching person directly grabs a handle attached to a tip of the force sensor, and directs the robot to teaching points so that teaching processes for positions of the robot are carried out (see Patent Document 1).

PRIOR ART DOCUMENT

PATENT DOCUMENT

Patent Document 1: Japanese Unexamined Patent Publication No. 59-157715

SUMMARY OF THE INVENTION

ISSUES TO BE SOLVED BY THE INVENTION

In Patent Document 1, however, since all teaching points need to be taught by a teaching person, a teaching process takes long time, resulting in time-consuming troublesome tasks. Moreover, in the industrial field, upon revising one portion of taught movements, the revision needs to be made through a programming process by using a remote control apparatus called a teaching pendant, or all the operations need to be taught all over again from the beginning, failing to provide an efficient process.

Moreover, the home environment is varied from moment to moment with the result that it is difficult to predict all the environmental fluctuations at the time of a teaching process, and even when the fluctuations are detected by installing a large number of sensors therein, an erroneous operation might occur in the case where the detection precision is not 100%.

In particular, in the case of a house-service robot, the teaching time needs to be made as short as possible. Moreover, a combined use of the programming process by the remote control apparatus such as the teaching pendant causes an increase in operation steps, and learning of programming languages is required, with the result that this method becomes very difficult for amateurs at home.

Moreover, in the industrial robot, a teaching job for teaching operations to the robot, and a main job actually carried out by the robot are clearly divided and carried out respectively; however, in the case of the house-service robot, since an amateur in home carries out manipulations thereof, it is difficult to carry out the teaching job and the main job separately, resulting in time-consuming troublesome tasks (see Patent Document 1).

Therefore, by allowing a person to recognize a situation with respect to a robot in operation and transmit the situation to the robot each time, the operation can be carried out without making the person conscious of the teaching process, and even when an unexpected fluctuation in the environment occurs at the time of teaching, by allowing the person to teach the fluctuation each time, the robot can be operated properly.

In this method, however, since the operation correction is carried out by allowing the person to manipulate the robot in operation, a problem arises in that, since an operation parameter inputted by the person tends to fluctuate in comparison with a conventional teaching process given at the time of stoppage, it is not possible to carry out the operation correction appropriately. For example, in the case where, during an operation, the velocity is fast, upon correction of the operation by the person, in particular, upon starting the manipulation or completing the manipulation, the hand of the person tends to shake and the correction is carried out with the hand shake contained therein, with the result that the operation correction cannot be carried out properly. Moreover, since a correction by the person is carried out during the operation, the correction is also carried out in a section in which a great force is erroneously applied instantaneously, for example, in such a case as an erroneous collision by the person, to cause a failure to provide an accurate correction. Moreover, even in the case where only the force to be applied to a job target is desirably corrected, the position or the velocity or the like might be erroneously corrected simultaneously, to cause a failure to provide an accurate correction. Furthermore, the operation of the person tends to be influenced by an accelerating or decelerating direction of the operation of the robot arm, making it difficult for the person to carry out an accurate correction. In the case where a correction is made as repetitive operations, the repetitive operations tend to fluctuate due to degrees of the applied force by the person, failing to provide an accurate correction. Moreover, since the person tends to manipulate without understanding detailed characteristics of the robot arm, such as its movable range, it is not possible to make a desired correction on the operation near the movable range. Moreover, in the case where an elder person, a handicapped person, a child or the like carries out a manipulation, since a force to be desirably applied to the job object tends to become insufficient, failing to make an accurate correction. In the same manner, when, in an attempt to operate a robot arm at a high speed, the person is unable to carry out the operation at the corresponding speed, it is not possible to make an accurate correction.

The present invention has been devised in view of these problems, and an object thereof is to provide a control apparatus and a control method for a robot arm, which achieves a robot controlling process that allows an operator to give a teaching process to the robot easily in a short period of time, even in the event of an unpredictable environmental fluctuation, and the present invention also relates to a robot, a control program for a robot arm, and an integrated electronic circuit in which such a control apparatus for a robot arm is used.

MEANS FOR SOLVING THE ISSUES

In order to achieve the above-mentioned object, the present invention has the following structures. according to a first aspect of the present invention, there is provided a

According to the first aspect of the present invention, there is provided a control apparatus for a robot arm, which controls an operation of the robot arm so as to carry out a job by using the robot arm, comprising:

an operation information acquiring unit that acquires at least one or more pieces of time series operation information relating to a position, an orientation, a velocity, and a force of the robot arm, in association with the operation;

an operation correcting information acquiring unit that acquires operation correcting information relating to a correcting method for the operation information carried out by the robot arm;

an alternation condition setting unit that, while the robot arm is being operated based upon the operation information, during the operation of the robot arm, after switching has been made, by applying a force of the person to the robot arm, from a control mode in which the operation of the robot arm is prevented from being corrected by a manipulation of the person to a control mode in which the operation of the robot arm is corrected by the manipulation by the person, sets an alternation condition for use in altering the operation of the robot arm by the manipulation of the person, based upon a force of the person applied to the robot arm, the operation information of the robot arm that is in operation, and the operation correcting information; and

an operation correcting unit which, in a case where any correction is required in response to the alternation condition set by the alternation condition setting unit, corrects at least one or more pieces of operation information relating to the position, the orientation, the velocity, and the force of the robot arm, acquired by the operation information acquiring unit,

wherein based upon the operation information corrected by the operation correcting unit, the operation of the robot arm is controlled.

According to the 22nd aspect of the present invention, there is provided a control method for a robot arm, which controls an operation of the robot arm so as to carry out a job by using the robot arm, comprising:

acquiring at least one or more pieces of time series operation information relating to a position, an orientation, a velocity, and a force of the robot arm, in association with the operation, by an operation information acquiring unit;

acquiring operation correcting information relating to a correcting method for the operation information carried out by the robot arm, by an operation correcting information acquiring unit;

while operating the robot arm based upon the operation information, during the operation of the robot arm, after switching has been made, by applying a force of the person to the robot arm, from a control mode in which the operation of the robot arm is prevented from being corrected by a manipulation of the person to a control mode in which the operation of the robot arm is corrected by the manipulation by the person, setting an alternation condition for use in altering the operation of the robot arm by a manipulation of the person, based upon the force of the person applied to the robot arm, the operation information of the robot arm that is in operation, and the operation correcting information, by an alternation condition setting unit;

in a case where a correction is required in response to the alternation condition set by the alternation condition setting unit, correcting at least one or more pieces of operation information relating to the position, the orientation, the velocity, and the force of the robot arm, acquired by the operation information acquiring unit, by an operation correcting unit; and

based upon the operation information corrected by the operation correcting unit, controlling the operation of the robot arm.

According to the 23rd aspect of the present invention, there is provided a robot comprising:

the robot arm; and
the control apparatus for a robot arm according to any one of the first to 21st aspects, which controls the operation of the robot arm.

According to the 24th aspect of the present invention, there is provided a control program for a robot arm, which controls an operation of the robot arm so as to carry out a job by using the robot arm, allowing a computer to execute steps of:

acquiring at least one or more pieces of time series operation information relating to a position, an orientation, a velocity, and a force of the robot arm, in association with the operation, by an operation information acquiring unit;
acquiring operation correcting information relating to a correcting method for the operation information carried out by the robot arm, by an operation correcting information acquiring unit;
while operating the robot arm based upon the operation information, during the operation of the robot arm, after switching has been made, by applying a force of the person to the robot arm, from a control mode in which the operation of the robot arm is prevented from being corrected by a manipulation of the person to a control mode in which the operation of the robot arm is corrected by the manipulation by the person, setting an alternation condition for use in altering the operation of the robot arm by the manipulation of the person, based upon the force of the person applied to the robot arm, the operation information of the robot arm that is in operation, and the operation correcting information, by an alternation condition setting unit;
in a case where a correction is required in response to the alternation condition set by the alternation condition setting unit, correcting at least one or more pieces of operation information relating to the position, the orientation, the velocity, and the force of the robot arm, acquired by the operation information acquiring unit; and
based upon the operation information corrected by the operation correcting unit, controlling the operation of the robot arm.

According to the 25th aspect of the present invention, there is provided an integrated electronic circuit for a robot arm, which controls an operation of the robot arm so as to carry out a job by using the robot arm, comprising:

acquiring at least one or more pieces of time series operation information relating to a position, an orientation, a velocity, and a force of the robot arm, in association with the operation, by an operation information acquiring unit;
acquiring operation correcting information relating to a correcting method for the operation information carried out by the robot arm by an operation correcting information acquiring unit;
while operating the robot arm based upon the operation information, during the operation of the robot arm, after switching has been made, by applying a force of the person to the robot arm, from a control mode in which the operation of the robot arm is prevented from being corrected by a manipulation of the person to a control mode in which the operation of the robot arm is corrected by the manipulation by the person, setting an alternation condition for use in altering the operation of the robot arm by the manipulation of the person, based upon the force of the person applied to the robot arm, the operation information of the robot arm that is in operation, and the operation correcting information, by an alternation condition setting unit;
in a case where a correction is required in response to the alternation condition set by the alternation condition setting unit, correcting at least one or more pieces of operation information relating to the position, the orientation, the velocity, and the force of the robot arm, acquired by the operation information acquiring unit, by an operation correcting unit; and
based upon the operation information corrected by the operation correcting unit, controlling the operation of the robot arm.

EFFECTS OF THE INVENTION

As described above, in accordance with a control apparatus for a robot arm and a robot provided with the control apparatus for a robot arm of the present invention, since the operation information acquiring unit, the operation correcting information acquiring unit, the alternation condition setting unit, and the operation correcting unit are prepared, it is possible to carry out a controlling operation of the robot arm by which the operation of the robot arm described as operation information can be easily corrected in response to a force applied by a person and the operation correcting information. Moreover, it is possible to carry out an operation correcting process in which fluctuations of operation parameters inputted by the person are taken into consideration.

Moreover, in accordance with the control method for a robot arm, the control program for the robot arm, and the integrated electronic circuit of the present invention, it is possible to provide a control process for a robot arm by which an operation of a robot arm described as operation information can be easily corrected, while taking into consideration fluctuations of operation parameters inputted by the person.

BRIEF DESCRIPTION OF THE DRAWINGS

These and other aspects and features of the present invention will become clear from the following description taken in conjunction with the preferred embodiments thereof with reference to the accompanying drawings, in which:

Fig. 1 is a view showing schematic structures of a control apparatus for a robot in a first embodiment of the present invention;

Fig. 2 is a view showing detailed structures of the control apparatus and a robot arm to be controlled that form a robot system in the first embodiment of the present invention;

Fig. 3 is a block view showing the structure of a control unit of the control apparatus in the first embodiment of the present invention;

Fig. 4A is an explanatory view showing a list of operation information of an operation information database of the control apparatus in the first embodiment;

Fig. 4B is an explanatory view showing a list of another operation information of an operation information database of the control apparatus in the first embodiment;

Fig. 5 is an explanatory view showing flag information of the operation information database of the control apparatus in the first embodiment;

Fig. 6 is an explanatory view showing information relating to correction parameter flags of the operation information database of the control apparatus in the first embodiment;

Fig. 7 is a view showing an operation state of the control apparatus of the robot arm in the first embodiment of the present invention;

Fig. 8A is a view showing an operation of the control apparatus of the robot arm in the first embodiment of the present invention;

Fig. 8B is a view showing an operation of the control apparatus of the robot arm and an operation state of a person in the first embodiment of the present invention;

Fig. 8C is a view showing an operation of the control apparatus of the robot arm in the first embodiment of the present invention;

Fig. 9 is a view showing an operation of the control apparatus of the robot arm in the first embodiment of the present invention;

Fig. 10 is a view showing an operation of the control apparatus of the robot arm in the first embodiment of the present invention;

Fig. 11 is a flow chart showing operation steps of a control unit of the control apparatus in the first embodiment of the present invention;

Fig. 12A is an explanatory view showing a list of operation correcting information of an operation correcting information database of the control apparatus in the first embodiment;

Fig. 12B is an explanatory view showing a list of operation correcting information of the operation correcting information database of the control apparatus in the first embodiment;

Fig. 13 is an explanatory view showing a list of operation information of the robot arm in the first embodiment of the present invention;

Fig. 14 is a flow chart showing operation steps of an alternation condition setting unit, an operation correcting unit, an operation instruction unit, an operation storage unit, an operation information database, an operation correcting information database, and a control parameter managing unit of the control apparatus in the first embodiment of the present invention;

Fig. 15A is an explanatory view showing a list of operation information of a robot arm in a control apparatus for a robot arm in a second embodiment of the present invention;

Fig. 15B is a view illustrating operation information of the robot arm in the control apparatus for a robot arm in the second embodiment of the present invention;

Fig. 16 is an explanatory view showing a list of operation information of an operation correcting information database of the control apparatus for a robot arm in the second embodiment of the present invention;

Fig. 17A is an explanatory view showing a list of operation information of a robot arm in a control apparatus for a robot arm in a third embodiment of the present invention;

Fig. 17B is a view illustrating operation information of the robot arm in the control apparatus for a robot arm in the third embodiment of the present invention;

Fig. 17C is a view illustrating operation information of the robot arm in the control apparatus for a robot arm in the third embodiment of the present invention;

Fig. 18 is an explanatory view showing a list of operation correcting information of an operation correcting information database of the control apparatus for a robot arm in the third embodiment of the present invention;

Fig. 19 is a view showing detailed structures of the control apparatus and the robot arm forming a control target that form a robot system in a fourth embodiment of the present invention;

Fig. 20 is an explanatory view showing a list of operation correcting information of an operation correcting information database of the control apparatus for a robot arm in the fourth embodiment of the present invention;

Fig. 21 is an explanatory view showing a list of operation information of a robot arm in the control apparatus in the fourth embodiment of the present invention;

Fig. 22 is an explanatory view showing a list of operation information of an operation correcting information database of a control apparatus for a robot arm in a fifth embodiment of the present invention;

Fig. 23A is an explanatory view showing a list of operation information of a robot arm in the control apparatus in the fifth embodiment of the present invention;

Fig. 23B is a view illustrating operation information of the robot arm in the control apparatus in the fifth embodiment of the present invention;

Fig. 23C is a view illustrating operation information of the robot arm in the control apparatus in the fifth embodiment of the present invention;

Fig. 23D is a view illustrating operation information of the robot arm in the control apparatus in the fifth embodiment of the present invention;

Fig. 23E is a view illustrating operation information of the robot arm in the control apparatus in the fifth embodiment of the present invention;

Fig. 24 is an explanatory view showing a list of operation correcting information of an operation correcting information database of the control apparatus for a robot arm in a sixth embodiment of the present invention;

Fig. 25A is an explanatory view showing a list of operation information of a robot arm in the control apparatus in the sixth embodiment of the present invention;

Fig. 25B is a view illustrating operation information of the robot arm in the control apparatus in the sixth embodiment of the present invention;

Fig. 25C is a view illustrating operation information of the robot arm in the control apparatus in the sixth embodiment of the present invention;

Fig. 26A is a view showing an operation of the control apparatus of the robot arm in the eighth embodiment of the present invention;

Fig. 26B is a view showing an operation of the control apparatus of the robot arm in the eighth embodiment of the present invention;

Fig. 27A is a view showing an operation of the control apparatus of the robot arm and an operation state of a person in the eighth embodiment of the present invention;

Fig. 27B is a view showing an operation of the control apparatus of the robot arm and an operation state of a person in the eighth embodiment of the present invention;

Fig. 28 is an explanatory view showing a list of operation correcting information of an operation correcting information database;

Fig. 29 is an explanatory view showing a list of operation correcting information of the operation correcting information database of the control apparatus for a robot arm in the eighth embodiment;

Fig. 30 is a view showing an operation of the control apparatus of the robot arm in the eighth embodiment of the present invention;

Fig. 31 is a view showing detailed structures of the control apparatus and a robot arm forming a control target that form a robot system in a seventh embodiment of the present invention;

Fig. 32A is a view showing an operation of the control apparatus of the robot arm and an operation state of a person in a ninth embodiment of the present invention;

Fig. 32B is a view showing an operation of the control apparatus of the robot arm and an operation state of the person in the ninth embodiment of the present invention;

Fig. 32C is a view showing an operation of the control apparatus of the robot arm and an operation state of the person in the ninth embodiment of the present invention;

Fig. 33 is an explanatory view showing a list of operation correcting information of the operation correcting information database of the control apparatus for a robot arm in the ninth embodiment;

Fig. 34 is an explanatory view showing a list of operation information of the robot arm of the control apparatus for a robot arm in the ninth embodiment of the present invention;

Fig. 35 is an explanatory view showing a list of assist values of an assist value calculation unit in the control apparatus in the eighth embodiment of the present invention;

Fig. 36 is an explanatory view showing a list of assist values of an assist value calculation unit in the control apparatus for a robot arm in the ninth embodiment of the present invention;

Fig. 37 is an explanatory view showing a list of operation correcting information of the operation correcting information database of the control apparatus for a robot arm in the ninth embodiment;

Fig. 38A is a view illustrating information relating to a movable range of the robot arm in the seventh embodiment of the present invention;

Fig. 38B is a view illustrating information relating to the movable range of the robot arm in the seventh embodiment of the present invention;

Fig. 39 is an explanatory view showing a list of operation information of an operation history information database of the robot arm in the control apparatus in the seventh embodiment of the present invention;

Fig. 40 is a view illustrating information relating to the movable range of the robot arm of the control apparatus in the seventh embodiment of the present invention;

Fig. 41 is a view illustrating information relating to the movable range of the robot arm of the control apparatus in the seventh embodiment of the present invention;

Fig. 42 is a view showing detailed structures of the control apparatus and a robot arm forming a control target that form a robot system in a tenth embodiment of the present invention;

Fig. 43A is an explanatory view showing a list of correction history information of an operation correcting information database of the control apparatus in the tenth embodiment;

Fig. 43B is an explanatory view showing a list of correction history information of the operation correcting information database of the control apparatus in the tenth embodiment;

Fig. 44 is a view showing a display unit attached to the robot system in the tenth embodiment of the present invention;

Fig. 45A is a view showing a coordinate system of the robot arm of the control apparatus in the first embodiment of the present invention;

Fig. 45B is a view showing the coordinate system of the robot arm of the control apparatus in the first embodiment of the present invention;

Fig. 45C is a view showing the coordinate system of the robot arm of the control apparatus in the first embodiment of the present invention; and

Fig. 46 is a flow chart showing an application order of the respective correcting methods in the operation correcting unit of the control apparatus for a robot arm in an eleventh embodiment of the present invention.

## DESCRIPTION OF EMBODIMENTS

Referring to Figures, the following description will discuss embodiments of the present invention in detail.

Prior to the detailed explanation of embodiments of the present invention by reference to Figures, various modes of the present invention will be described.

According to a first aspect of the present invention, there is provided a control apparatus for a robot arm, which controls an operation of the robot arm so as to carry out a job by using the robot arm, comprising:

an operation information acquiring unit that acquires at least one or more pieces of time series operation information relating to a position, an orientation, a velocity, and a force of the robot arm, in association with the operation;

an operation correcting information acquiring unit that acquires operation correcting information relating to a correcting method for the operation information carried out by the robot arm;

an alternation condition setting unit that, while the robot arm is being operated based upon the operation information, during the operation of the robot arm, after switching has been made, by applying a force of the person to the robot arm, from a control mode in which the operation of the robot arm is prevented from being corrected by a manipulation of the person to a control mode in which the operation of the robot arm is corrected by the manipulation by the person, sets an alternation condition for use in altering the operation of the robot arm by the manipulation of the person, based upon a force of the person applied to the robot arm, the operation information of the robot arm that is in operation, and the operation correcting information; and

an operation correcting unit which, in a case where any correction is required in response to the alternation condition set by the alternation condition setting unit, corrects at least one or more pieces of operation information relating to the position, the orientation, the velocity, and the force of the robot arm, acquired by the operation information acquiring unit,
wherein based upon the operation information corrected by the operation correcting unit, the operation of the robot arm is controlled.

According to a second aspect of the present invention, there is provided the control apparatus for a robot arm according to the first aspect, wherein the operation correcting information acquiring unit acquires a piece of operation correcting information relating to a correcting method described so as to carry out a correction by deleting one portion of a section of the operation information relating to the manipulation by the person on the robot arm of the person.

According to a third aspect of the present invention, there is provided the control apparatus for a robot arm according to the first aspect, wherein the operation correcting information acquiring unit acquires operation correcting information relating to a correcting method designed so as to carry out a correction on one portion of a section of the operation information relating to the manipulation by the person on the robot arm, by assisting at least one or more values among values of a position or a velocity of the robot arm or a force applied to the robot arm.

According to a fourth aspect of the present invention, there is provided the control apparatus for a robot arm according to any one of the first, second, and third aspects, further comprising:

a force detection unit that detects a force externally applied to the robot arm,
wherein the operation information acquired by the operation information acquiring unit is at least one of pieces of positional information of a hand of the robot arm, orientation information of the robot arm, velocity information of the robot arm, and information of a force applied to the hand of the robot arm, obtained at respective points of time in accordance with the operation carried out by the robot arm, and
in a case where a correction is required in response to the alternation condition set by using the alternation condition setting unit by the operation correcting unit, and also in a case where during an operation of the robot arm, the operation information, acquired by the operation information acquiring unit, is corrected in accordance with the force of the person detected by the force detection unit and the operation correcting information, by using at least one of the pieces of the positional information of a hand of the robot arm, the orientation information of the robot arm, the velocity information of the robot arm, and the force information, obtained at respective points of time in accordance with the operation carried out by the robot arm, the operation information acquired by the operation information acquiring unit is corrected.

According to a fifth aspect of the present invention, there is provided the control apparatus for a robot arm according to the third aspect, further comprising:

a force detection unit that detects a force externally applied to the robot arm,
wherein the operation correcting information acquired by the operation information acquiring unit relates to at least one of pieces of information for a periodicity correcting method that detects a periodic section from a track of the operation information relating to the manipulation of the person so as to make a correction and information for an assist correcting method that carries out a correction, after detection as to whether or not the correction is carried out by assisting one or more values of the position or the velocity of the robot arm, or the force to be applied to the robot arm on one portion of a section with respect to the operation that is being corrected by the person, and
in a case where a correction is required in response to the alternation condition set by using the alternation condition setting unit, during an operation of the robot arm, the operation correcting unit corrects the operation information acquired by the operation information acquiring unit in accordance with at least one of pieces of information relating to the force of the person detected by the force detection unit, the periodicity correcting method, and the assist correcting method.

According to a sixth aspect of the present invention, there is provided the control apparatus for a robot arm according to the second aspect, further comprising:

a force detection unit that detects a force externally applied to the robot arm,
wherein the operation correcting information acquired by the operation correcting information acquiring unit relates to a correcting method in which a correction is carried out by deleting at least one of sections of a section corresponding to a certain elapsed period of time from start of the manipulation of the robot arm by the person and a section immediately before completion of the manipulation of the robot arm by the person, and
in a case where a correction is required in response to the alternation condition set by the alternation condition setting unit, during the operation of the robot arm, the operation correcting unit corrects the operation information acquired by the operation information acquiring unit by using the force of the person detected by the force detection unit and the correcting method for deleting at least one of following sections (I) and (II):

(I) the section corresponding to the certain elapsed period of time from the start of the manipulation of the robot arm by the person, and
(II) the section immediately before the completion of the manipulation of the robot arm by the person, with lengths of the sections (I) and (II) being determined by a velocity of the robot arm.

According to a seventh aspect of the present invention, there is provided the control apparatus for a robot arm according to the second aspect, further comprising:

a force detection unit that detects a force externally applied to the robot arm,
wherein the operation correcting information relates to a correcting method in which a correction is carried out by deleting a section other than a section in which the force of the person is not less than a threshold value for use in force and a period of time that is not less than a threshold value for use in time is continuously elapsed, and
in a case where a correction is required in response to the alternation condition set by the alternation condition setting unit, during the operation of the robot arm, based upon the operation correcting unit corrects the operation information acquired by the operation information acquiring unit by using the force of the person detected by the force detection unit, and the correcting method for deleting the section in which the force of the person is not less than the threshold value for use in force and the period of time is not less than the threshold value for use in time is continuously elapsed.

According to an eighth aspect of the present invention, there is provided the control apparatus for a robot arm according to the second aspect, further comprising:

a force detection unit that detects a force externally applied to the robot arm,
wherein the operation correcting information relates to a correcting method in which, in a case where the force of the person is not less than a threshold value for use in force within a period of time that is a threshold value for use in time or less, a manipulation section within the corresponding period of time is deleted, and
in a case where a correction is required in response to the alternation condition set by the alternation condition setting unit, during the operation of the robot arm, the operation correcting unit corrects the operation information acquired by the operation information acquiring unit by using the force of the person detected by the force detection unit, and the correcting method in which, in a case where the force of the person is not less than the threshold value for use in force within the period of time that is the threshold value for use in time or less, a manipulation section within the corresponding period of time is deleted.

According to a ninth aspect of the present invention, there is provided the control apparatus for a robot arm according to the second aspect, further comprising:

a force detection unit that detects a force externally applied to the robot arm; and
a correcting method type determination unit that determines a type of a parameter to be corrected among the pieces of operation information acquired by the operation information acquiring unit,
wherein the operation correcting information relates to a correcting method that deletes parameters other than the type of the parameter determined by the correcting method type determination unit, and
in a case where a correction is required in response to the alternation condition set by the alternation condition setting unit, during the operation of the robot arm, the operation correcting unit corrects the operation information acquired by the operation information acquiring unit by using the force of the person detected by the force detection unit, and the correcting method for deleting a parameter except for the parameter having the type determined by the correcting method type determination unit.

According to a 10th aspect of the present invention, there is provided the control apparatus for a robot arm according to the fifth aspect, wherein the periodicity correcting method relates to a correcting method in which, in a section where there is a bias relating to one or more pieces of information among the pieces of information of the position, orientation, velocity, and force of the robot arm, a correction is made so as to eliminate the bias, and
in a case where a correction is required in response to the alternation condition set by the alternation condition setting unit, during the operation of the robot arm, the operation correcting unit corrects the operation information acquired by the operation information acquiring unit by using the force of the person detected by the force detection unit, and the correcting method for correcting pieces of information of the position and orientation of the robot arm so as to delete the bias in the section where the bias exists with respect to the piece of information relating to the position, the orientation, the velocity, or the force of the robot arm.
According to an 11th aspect of the present invention, there is provided the control apparatus for a robot arm according to the fifth aspect, wherein the periodicity correcting method relates to a correcting method in which, in a section where there are periodic repetitions relating to the piece of information of the position, orientation, velocity, or force of the robot arm, a correction is made so as to average the respective pieces of the information of the position, orientation, velocity or force of the robot arm in the repetitive section, and

in a case where a correction is required in response to the alternation condition set by the alternation condition setting unit, during the operation of the robot arm, the operation correcting unit corrects the operation information acquired by the operation information acquiring unit by using the force of the person detected by the force detection unit, and a correcting method which, in the section where there are periodic repetitions relating to the piece of information relating to the position, orientation, velocity, or force of the robot arm, carries out a correction so as to average the respective pieces of information relating to the position, orientation, velocity, or force of the robot arm, in the repetitive section.

According to a 12th aspect of the present invention, there is provided the control apparatus for a robot arm according to the fifth aspect, wherein the assist correcting method relates to a correcting method in which, in a case where manipulation of the robot arm by the person is continuously carried out number of times in a range of from a lower limit threshold value or more to an upper limit threshold value or less, as well as in a case where, with respect to one or more pieces of operation information of the position, orientation, velocity, and force, before and after the manipulation of the person, a difference between values of the one or more pieces of operation information before and after the manipulation is not less than a threshold value, corrects the operation information, and

in a case where a correction is required in response to the alternation condition set by the alternation condition setting unit, during the operation of the robot arm, the operation correcting unit corrects the operation information acquired by the operation information acquiring unit by using the force of the person detected by the force detection unit, and the correcting method which, in a case where manipulation by the person is continuously carried out number of times in the range of from the lower limit threshold value or more to the upper limit threshold value or less, as well as in a case where, with respect to one or more pieces of operation information of the position, orientation, velocity, and force, before and after the manipulation of the person, a difference between values of the one or more pieces of operation information before and after the manipulation is not less than the threshold value, carries out a correction on the operation information that has been changed.

According to a 13th aspect of the present invention, there is provided the control apparatus for a robot arm according to the 12th aspect, wherein the assist correcting method relates to a correcting method in which, in a case where manipulation by the person is continuously carried out number of times in a range of from the lower limit threshold value or more to the upper limit threshold value or less, as well as in a case where the positional information of the hand of the robot arm is changed from that before the manipulation of the person, with number of times in which the changed positional information is out of a movable range of the robot arm being not less than a threshold value for use in the movable range, the operation correcting unit corrects the positional information so as to be located within the movable range of the robot arm, and

in a case where a correction is required in response to the alternation condition set by the alternation condition setting unit, the operation correcting unit corrects the operation information acquired by the operation information acquiring unit by using the correcting method which, with manipulation by the person being continuously carried out number of times in the range of from the lower limit threshold value or more to the upper limit threshold value or less, as well as in a case where the positional information of the hand of the robot arm is changed from before the manipulation of the person, with the number of times in which the changed positional information is out of the movable range of the robot arm being not less than the threshold value or more for use in the movable range, corrects the positional information so as to be located within the movable range.

According to a 14th aspect of the present invention, there is provided the control apparatus for a robot arm according to the 12th aspect, wherein the force detection unit detects information relating to a force applied to the hand of the robot arm, and

the assist correcting method relates to a correcting method which, in a case where manipulation by the person is continuously carried out number of times in the range of from the lower limit threshold value or more to the upper limit threshold value or less, as well as in a case where the information relating to the force applied to the hand of the robot arm indicates that the applied force after the manipulation increases by a threshold value for use in force information or more in comparison with that before the manipulation, corrects the force information so as to increase the force information, and

in a case where a correction is required in response to the alternation condition set by the alternation condition setting unit, during the operation of the robot arm, the operation correcting unit corrects the operation information acquired by the operation information acquiring unit by using the force of the person detected by the force detection unit, and a correcting method which, with manipulation by the person being continuously carried out number of times in the range of from the lower limit threshold value or more to the upper limit threshold value or less, as well as in a case where the information relating to the force applied to the hand of the robot arm indicates that the applied force after the manipulation increases by the threshold value for use in force information or more in comparison with that before the manipulation, corrects the force information so as to increase the force information.

According to a 15th aspect of the present invention, there is provided the control apparatus for a robot arm according to the 12th aspect, wherein the assist correcting method relates to a correcting method which, in a case where manipulation by the person is continuously carried out number of times in the range of from the lower limit threshold value or more to the upper limit threshold value or less, as well as in a case where the information relating to a velocity applied to the hand of the robot arm indicates that an applied velocity after the manipulation increases by a threshold value for use in velocity information or more in comparison with that before the manipulation, corrects the velocity information so as to increase the velocity information, and

in a case where a correction is required in response to the alternation condition set by the alternation condition setting unit, during the operation of the robot arm, the operation correcting unit corrects the operation information acquired by the operation information acquiring unit by using the force of the person detected by the force detection unit, and a correcting method which, with manipulation by the person being continuously carried out number of times in the range of from the lower limit threshold value or more to the upper limit threshold value or less, as well as in a case where the information relating to a velocity applied to the hand of the robot arm indicates that an applied velocity after the manipulation increases by a threshold value for use in velocity information or more in comparison with that before the manipulation, corrects the velocity information so as to increase the velocity information.

According to a 16th aspect of the present invention, there is provided the control apparatus for a robot arm according to the 12th aspect, further comprising:

an assist value calculation unit that calculates a value used for correcting the operation information acquired by the operation information acquiring unit,

wherein the assist value calculation unit calculates the value in accordance with a number of times of manipulation on the robot arm by the person.

According to a 17th aspect of the present invention, there is provided the control apparatus for a robot arm according to any one of the first, second, and third aspects, further comprising:

a force detection unit that detects a force externally applied to the robot arm,

wherein in a case where manipulation of the robot arm by the person is continuously carried out number of times that is equal to a lower threshold value or more of the number of manipulation thereof, the operation information acquired by the operation information acquiring unit is corrected only by the force of the person detected by the force detection unit.

According to an 18th aspect of the present invention, there is provided the control apparatus for a robot arm according to any one of the first, second, and third aspects, further comprising:

a force detection unit that detects a force externally applied to the robot arm,

wherein in a case where a correction is required in response to the alternation condition set by the alternation condition setting unit, based upon the operation information, the operation correcting unit sets at least one or more of following three kinds of control modes for each of rotation axes of joint portions of the robot arm separately:

(I) a hybrid impedance control mode in which during the operation of the robot arm, in response to a force detected by the force detection unit and applied to the robot arm, the robot arm is actuated,

(II) an impedance control mode in which in response to a force detected by the force detection unit and applied to the robot arm in a stopped state from the person, the robot arm is actuated, and

(III) a force control mode in which the robot arm is actuated by applying a specified force thereto,

and midway during an operation of the robot arm by setting the control mode (III) to at least one of the directions of the rotation axes, with respect to the direction in which the control mode (III) has been set, switching is made to a control mode by which, upon manipulation by the person, the robot arm is not moved by a manipulation of the person during the operation of the robot arm so that, upon carrying out an operation by exerting the specified force of the operation information acquired by the operation information acquiring unit, the force is corrected.

According to a 19th aspect of the present invention, there is provided the control apparatus for a robot arm according to any one of the first, second, and third aspects, wherein in the case where a correction is required in response to the alternation condition set by the alternation condition setting unit, based upon the operation information, the operation correcting unit sets at least one or more of following three kinds of control modes for each of rotation axes of joint portions of the robot arm separately:

(I) a hybrid impedance control mode in which during the operation of the robot arm, in response to a force detected by the force detection unit and applied to the robot arm, the robot arm is actuated,

(II) an impedance control mode in which in response to a force detected by the force detection unit and applied to the robot arm in a stopped state from the person, the robot arm is actuated, and

(III) a force control mode in which the robot arm is actuated by applying a specified force thereto,

and midway during an operation of the robot arm by setting the control mode (II) to at least one of the directions of the rotation axes, with respect to the direction in which the control mode (I) or (II) has been set, switching is made to the hybrid impedance control mode, upon manipulation by the person, in response to the operation correcting information so that the operation information acquired by the operation information acquiring unit is corrected.

According to a 20th aspect of the present invention, there is provided the control apparatus for a robot arm according to any one of the first, second, and third aspects, further comprising:

a display unit that displays information relating to a piece of advice on the manipulation of the person based upon information relating to history of the operation correcting information applied at a time of the correction by the operation correcting unit.

According to a 21st aspect of the present invention, there is provided the control apparatus for a robot arm according to any one of the first second, and third aspects, wherein in a case where a correction is required in response to the alternation condition set by the alternation condition setting unit, after correcting the operation information acquired by the operation information acquiring unit by using a correction method designed to make a correction by deleting one portion of sections of the operation information relating to the manipulation of the robot arm by the person, the operation correcting unit makes a correction on the one portion of sections of the operation information relating to the manipulation of the robot arm by the person, while assisting the one portion thereof.

According to a 22nd aspect of the present invention, there is provided a control method for a robot arm, which controls an operation of the robot arm so as to carry out a job by using the robot arm, comprising:

acquiring at least one or more pieces of time series operation information relating to a position, an orientation, a velocity, and a force of the robot arm, in association with the operation, by an operation information acquiring unit;

acquiring operation correcting information relating to a correcting method for the operation information carried out by the robot arm, by an operation correcting information acquiring unit;

while operating the robot arm based upon the operation information, during the operation of the robot arm, after switching has been made, by applying a force of the person to the robot arm, from a control mode in which the operation of the robot arm is prevented from being corrected by a manipulation of the person to a control mode in which the operation of the robot arm is corrected by the manipulation by the person, setting an alternation condition for use in altering the operation of the robot arm by a manipulation of the person, based upon the force of the person applied to the robot arm, the operation information of the robot arm that is in operation, and the operation correcting information, by an alternation condition setting unit;

in a case where a correction is required in response to the alternation condition set by the alternation condition setting unit, correcting at least one or more pieces of operation information relating to the position, the orientation, the velocity, and the force of the robot arm, acquired by the operation information acquiring unit, by an operation correcting unit; and

based upon the operation information corrected by the operation correcting unit, controlling the operation of the robot arm.

According to a 23rd aspect of the present invention, there is provided a robot comprising:

the robot arm; and

the control apparatus for a robot arm according to any one of the first to 21st aspects, which controls the operation of the robot arm.

According to a 24th aspect of the present invention, there is provided a control program for a robot arm, which controls an operation of the robot arm so as to carry out a job by using the robot arm, allowing a computer to execute steps of:

acquiring at least one or more pieces of time series operation information relating to a position, an orientation, a velocity, and a force of the robot arm, in association with the operation, by an operation information acquiring unit;

acquiring operation correcting information relating to a correcting method for the operation information carried out by the robot arm, by an operation correcting information acquiring unit;

while operating the robot arm based upon the operation information, during the operation of the robot arm, after switching has been made, by applying a force of the person to the robot arm, from a control mode in which the operation of the robot arm is prevented from being corrected by a manipulation of the person to a control mode in which the operation of the robot arm is corrected by the manipulation by the person, setting an alternation condition for use in altering the operation of the robot arm by the manipulation of the person, based upon the force of the person applied to the robot arm, the operation information of the robot arm that is in operation, and the operation correcting information, by an alternation condition setting unit;

in a case where a correction is required in response to the alternation condition set by the alternation condition setting unit, correcting at least one or more pieces of operation information relating to the position, the orientation, the velocity, and the force of the robot arm, acquired by the operation information acquiring unit; and

based upon the operation information corrected by the operation correcting unit, controlling the operation of the robot arm.

According to a 25th aspect of the present invention, there is provided an integrated electronic circuit for a robot arm, which controls an operation of the robot arm so as to carry out a job by using the robot arm, comprising:

acquiring at least one or more pieces of time series operation information relating to a position, an orientation, a velocity, and a force of the robot arm, in association with the operation, by an operation information acquiring unit;

acquiring operation correcting information relating to a correcting method for the operation information carried out by the robot arm by an operation correcting information acquiring unit;

while operating the robot arm based upon the operation information, during the operation of the robot arm, after switching has been made, by applying a force of the person to the robot arm, from a control mode in which the operation of the robot arm is prevented from being corrected by a manipulation of the person to a control mode in which the operation of the robot arm is corrected by the manipulation by the person, setting an alternation condition for use in altering the operation of the robot arm by the manipulation of the person, based upon the force of the person applied to the robot arm, the operation information of the robot arm that is in operation, and the operation correcting information, by an alternation condition setting unit;

in a case where a correction is required in response to the alternation condition set by the alternation condition setting unit, correcting at least one or more pieces of operation information relating to the position, the orientation, the velocity, and the force of the robot arm, acquired by the operation information acquiring unit, by an operation correcting unit; and

based upon the operation information corrected by the operation correcting unit, controlling the operation of the robot arm.

Hereinafter, embodiments of the present invention will be described in detail with reference to the drawing.

(First Embodiment)

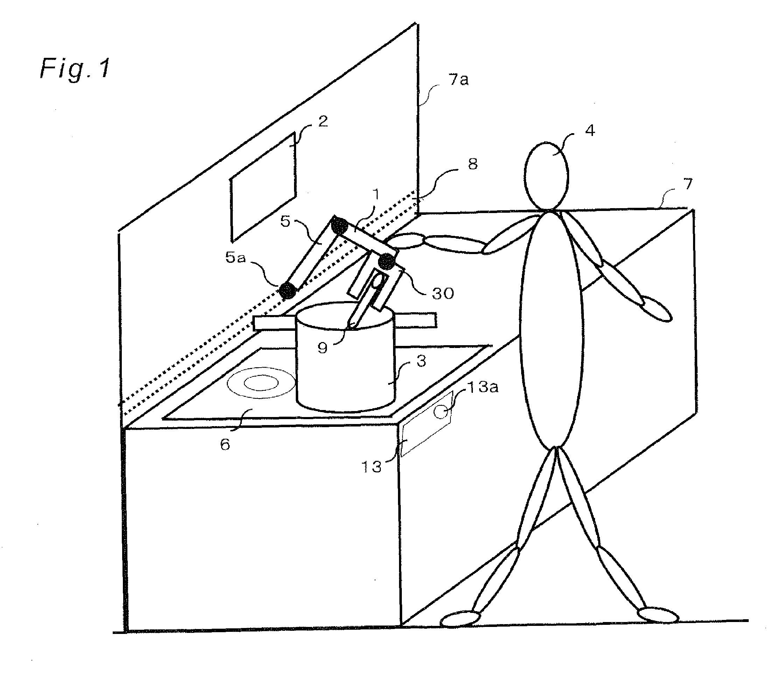

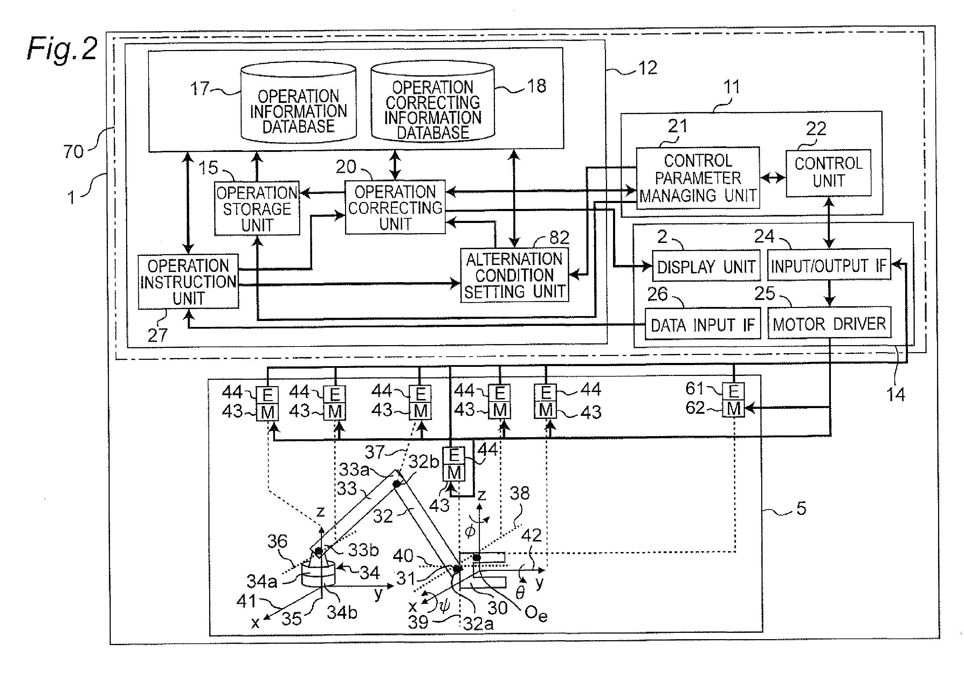

First, a structure of a robot system 1 provided with a robot arm control apparatus in a first embodiment of the present invention will be described. Figs. 1 and 2 are views that schematically show the robot system 1 provided with a robot arm 5 and its control apparatus 70 in the first embodiment of the present invention.

As shown in Fig. 1, the robot arm 5 of the robot system 1 is attached to a wall surface 7a of, for example, a kitchen in a home or a work bench 7 such as a table. The base end 5a of the robot arm 5 is shiftably supported on a rail 8 secured onto the wall surface 7a so that the robot arm 5 is allowed to move on the rail 8 in lateral directions (for example, in horizontal directions) along the rail 8, by a force of a person 4.

The robot system 1 is a system for carrying out a job in a home that is executed by the robot arm 5 and the person 4 in cooperation with each other, for example, by using the robot arm 5, a job for mixing cooking materials in a pot 3 or a job for wiping off stains 91 in the kitchen. Fig. 1 shows an example of a robot system that carries out a mixing job in the pot 3.

First, the person 4 directly grabs the robot arm 5 so that the person 4 applies a force to the robot arm 5. Thus, by the force applied to the robot arm 5 from the person 4, the robot arm 5 is allowed to move along the rail 8 so that the robot arm 5 is directed to the vicinity of a cooking apparatus 3, such as a pot.

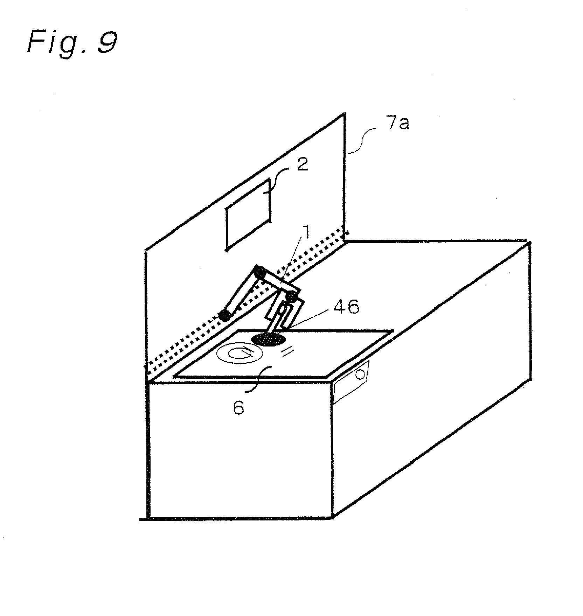

Next, the person 4 attaches a cooking tool 9 such as a ladle to be used for a mixing job or a cleaning tool 46 (see Fig. 9) such as a sponge to be used for a wiping job to a hand 30 on a tip of the robot arm 5 of the robot arm system 1.

Next, when the person 4, for example, pushes a button 13a of an operation panel 13 of the robot system 1, placed on a side surface or the like of a cooking apparatus 6, such as an IH heater or a gas heater, so that an operation starting instruction is inputted to the robot arm by using a data input IF 26, the robot arm 5 is activated, and a job selected in advance, that is, a mixing job or a wiping job, is started.

For example, first, a case in which the robot arm 5 carries out a mixing job will be exemplified.

In the case where, while the robot arm 5 is carrying out the mixing job in the pot 3 by using the ladle 9 grabbed by its hand 30, the person 4 confirms a state of the cooking materials that are being mixed, the person 4 directly grabs the robot arm 5 of the robot system 1, and by applying a force in a direction in which a correction is desirably made, the person 4 corrects the operation of the robot arm 5 of the robot system 1.

The rail 8 is disposed on the wall surface 7a of the work bench 7; however, in the case of an island kitchen without wall surfaces, it may be attached to a suitable place for a job, such as a ceiling surface or a side surface of a top plate of the island kitchen.

Moreover, although the operation panel 13 is secured to a side surface of the cooking apparatus 6, a remote control unit capable of carrying out remote operations may be used in place of the operation panel 13.

Fig. 2 is a view showing detailed structures of the robot arm 5 to be controlled and the control apparatus 70 for the robot arm 5 that form the robot system 1. As shown in Fig. 2, the control apparatus 70 of the robot arm 5 is provided with a control apparatus main body 11, an operation generating device 12 for generating operations of the robot arm 5, and a peripheral apparatus 14.

-Robot Arm-

For example, the robot arm 5 in the first embodiment is prepared as a multi-joint robot arm made of a multi-link manipulator having six degrees of freedom. The robot arm 5 is provided with the hand 30, a fore-arm link 32 with a wrist portion 31 to which the hand 30 is attached formed on its tip 32a, an upper arm link 33 having its tip 33a rotatably coupled to the base end 32b of the fore-arm link 32, and a base portion 34 to which the base end 33b of the upper arm link 33 is rotatably coupled so as to be supported thereon. The base portion 34 is shiftably coupled to the rail 8; however, this may be secured to a fixed position. The wrist portion 31 has three rotation axes relating to a fourth joint portion 38, a fifth joint portion 39, and a sixth joint portion 40 so that the relative orientation (direction) of the hand 30 to the fore-arm link 32 can be changed. That is, in Fig. 2, the fourth joint portion 38 makes it possible to change the relative orientation of the hand 30 to the wrist portion 31 around the lateral axis ($\psi$). The fifth joint portion 39 makes it possible to change the relative orientation of the hand 30 to the wrist portion 31 around the longitudinal axis ($\phi$) that is orthogonal to the lateral axis of the fourth joint portion 38. The sixth joint portion 40 makes it possible to change the relative orientation of the hand 30 to the wrist portion 31 around the lateral axis ($\theta$) that is respectively orthogonal to the lateral axis ($\psi$) of the fourth joint portion 38 and the longitudinal axis ($\phi$) of the fifth joint portion 39. The other end of the fore-arm link 32 is allowed to rotate around a third joint portion 37 relative to a tip of the upper arm link 33, that is, around a lateral axis in parallel with the lateral axis of the fourth joint portion 38. The other end of the upper arm link 33 is allowed to rotate around a second joint portion 36 relative to the base portion 34, that is, around a lateral axis in parallel with the lateral axis of the fourth joint portion 38. Moreover, an upper movable portion 34a of the base portion 34 is allowed to rotate around a first joint portion 35 relative to a lower-side fixed portion 34b of the base portion 34, that is, around a longitudinal axis in parallel with the longitudinal axis of the fifth joint portion 39.

As a result, the robot arm 5 is allowed to rotate around the total six axes to form the multi-link manipulator having six degrees of freedom.

Each of the joint portions forming the rotation portions of the respective axes is provided with a rotation driving device, such as a motor 43, and an encoder 44 used for detecting a rotation phase angle (that is, a joint angle) of the rotation axis of the motor 43. The motor 43 in the first embodiment is installed in the inside of each of the joint portions of the robot arm 5. The motor 43 is drive-controlled by a motor driver 25, which will be described later, installed in one of link members of two link members forming each of the joint portions. The rotation axis of the motor 43 that is installed in one of the link members of each joint portion is coupled to the other link member, and the rotation axis is thus forwardly/reversely rotated so that the other link member is allowed to rotate around each of the axes relative to the one of the link members.

Reference numeral 41 represents an absolute coordinate system in which the relative positional relationship is secured to the lower-side securing unit 34b of the base portion 34, and 42 represents a tip-unit coordinate system in which the positional relationship is fixed relative to the hand 30. The origin position $0_e$ (X, Y, Z) of the tip-unit coordinate system 42 viewed from the absolute coordinate system 41 is defined as a hand position (position of the hand 30) of the robot arm 5, and the orientation of the tip-unit coordinate system 42, viewed from the absolute coordinate system 41, is represented by coordinates ($\phi$, $\theta$, $\psi$), using the roll angle, pitch angle, and yaw angle, and defined as the tip-unit orientation of the robot arm 5, and the hand position and orientation vectors are defined as vectors r = $[x, y, z, \phi, \theta, \psi]^T$.

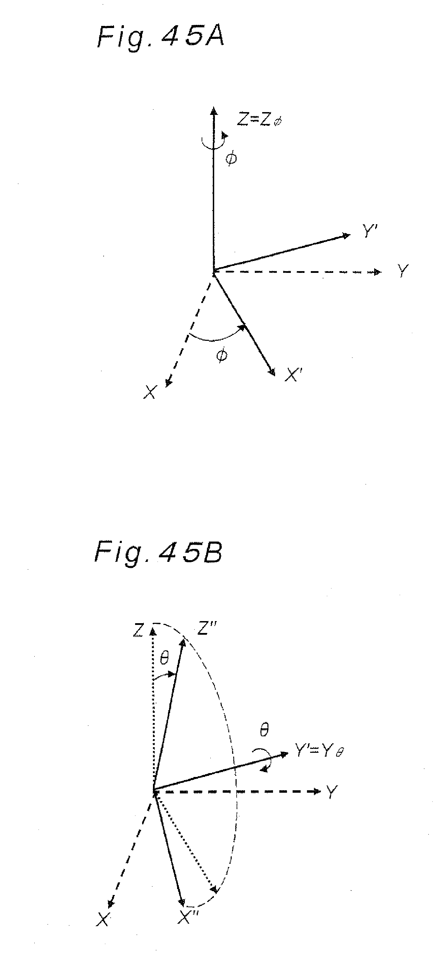

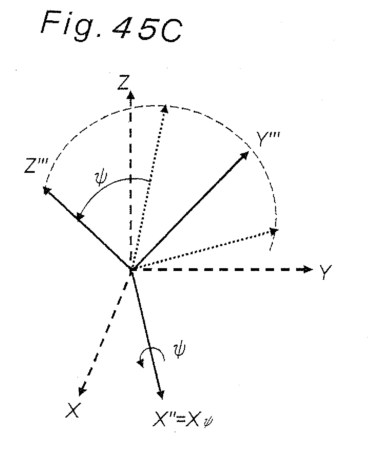

In the first embodiment, a coordinate system obtained by rotating the absolute coordinate system 35 by an angle $\phi$ with the Z-axis serving as the rotation axis is prepared (see Fig. 45A). The coordinate axes at this time are indicated by [X', Y', Z]. Next, this coordinate system is rotated by an angle $\theta$ with the Y'-axis serving as the rotation axis (see Fig. 45B), and the coordinate axes at this time are indicated by [X'', Y', Z'']. Lastly, this coordinate system is rotated by an angle $\psi$ with the X''-axis serving as the rotation axis (see Fig. 45C). The orientation of the coordinate system at this time is represented by a roll angle $\phi$, a pitch angle $\theta$, and a yaw angle $\psi$ so that the orientation vectors at this time are given as $(\phi, \theta, \psi)$. In the case where a coordinate system, obtained by parallel shifting the origin position of the coordinate system of the orientation $(\phi, \theta, \psi)$ to the origin position $O_e$ (x, y, z) of the tip-unit coordinate system 42, is coincident with the tip-unit coordinate system 42, the orientation vectors of the tip-unit orientation system are defined as $(\phi, \theta, \psi)$.

Upon controlling the tip-unit position and orientation of the robot arm 5, the tip-unit position and orientation vectors r are made to follow tip-unit position and orientation target vectors $r_d$ generated in a target track generation unit 55, which will be described later.

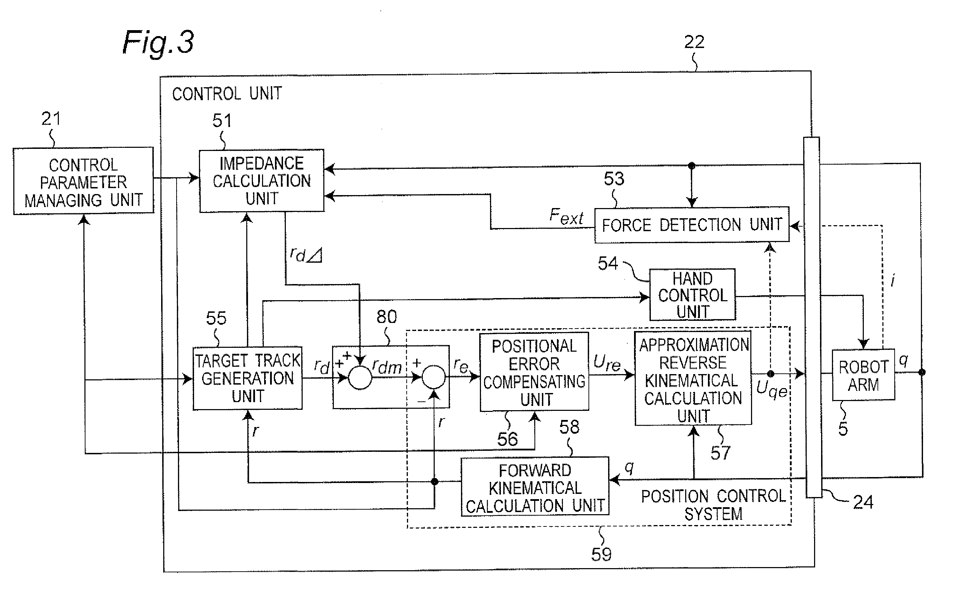

In order to control operations of the robot arm 5, respective operations of the operation generating device 12, the control apparatus main body unit 11, and the peripheral apparatus 14 are executed so that pieces of information of the respective joint angles, outputted from the encoders 44 to be described later of the respective joint portions of the robot arm 5, are acquired by the control apparatus main body unit 11 through counter boards of the input/output IF 24, and based upon the respective pieces of joint angle information thus acquired, the control apparatus main body unit 11 calculates control instruction values for rotating operations of the respective joint portions. The respective control instruction values, thus calculated, are given to the motor driver 25 used for drive-controlling the respective joint portions of the robot arm 5 through the D/A board of the input/output IF 24, and based upon the respective control instruction values sent from the motor driver 25, the motors 43 of the respective joint portions of the robot arm 5 are driven. Moreover, a hand driving motor 62, as one example of a hand driving device drive-controlled by the motor driver 25, and an encoder 61 used for detecting a rotation phase angle of the rotation axis of the hand driving motor 62 are further installed in the hand 30 so that the rotation angle information, detected by the encoder 61, is acquired by the control apparatus main body unit 11 through the counter board of the input/output IF 24, and based upon the rotation angle information thus acquired, control instruction values in open/close operations of the hand 30 are calculated by the hand control unit 54 (shown in Fig. 3) of the control unit 22 of the control apparatus main body unit 11. The control instruction values, thus calculated, are given to the motor driver 25 that also carries out open/close driving operations of the hand 30 through a D/A board of the input/output IF 24 so that the rotations of the motor 62 are drive-controlled in accordance with the respective control instruction values sent from the motor driver 25; thus, the rotation axis of the hand driving motor 62 is forwardly/reversely rotated so that the hand 30 is opened and closed.

For example, the control apparatus main unit 11, the operation generating device 12, and the peripheral apparatus 14 are respectively constituted by generally-used personal computers.

(Operation Generating Device 12)

The operation generating device 12 is designed to have an operation information database 17 that functions as one example of an operation information acquiring unit, an operation correcting information database that functions as one example of an operation correcting information acquiring unit, an operation instruction unit 27, an operation correcting unit 20, an alternation condition setting unit 82, and an operation storage unit 15. Between the operation correcting unit 20 and the control parameter managing unit 21, as well as between the alternation condition setting unit 82 and the control parameter managing unit 21, information of the hand position and orientation of the robot arm 5, information of a force applied by the person 4, an operation instruction and the like are inputted and outputted thereto and therefrom. The hand position and orientation of the robot arm 5, information of a force applied by the person 4 and the like are outputted to the operation storage unit 15 from the control parameter managing unit 21. The hand position and orientation of the robot arm 5, the information of a force applied by the person 4 and the like are outputted to the correcting method type determination unit 23. Additionally, detailed descriptions of respective control modes ((i) position control mode, (ii) impedance control mode, (iii) hybrid impedance control mode, and (v) force hybrid impedance mode) in the operation generating device 12 will be given in the description of the control parameter managing unit 21 of the control apparatus main unit 11.

-Operation Information Database-

The operation information database 17 stores pieces of information (operation information) of the robot arm 5 relating to the operations of the hand position, orientation and the like of the robot arm 5 at a certain point of time. The operation information is stored by the operation storage unit 15. Operation information is inputted/outputted between the operation information database 17 and the operation instruction unit 27, and operation information is also inputted/outputted between the operation information database 17 and the operation correcting unit 20 so that various pieces of operation information are inputted thereto and stored therein by the operation storage unit 15. Moreover, operation information is inputted/outputted between the operation information database 17 and the alternation condition setting unit 82 so that various pieces of operation information are inputted thereto and stored therein by the operation storage unit 15. Alternation conditions, set in the alternation condition setting unit 82, are inputted from the alternation condition setting unit 82 to the operation correcting unit 20. An instruction for starting an operation correction is inputted from the operation instruction unit 27 to the alternation condition setting unit 82.

The following description will discuss the operation information database 17 in detail.

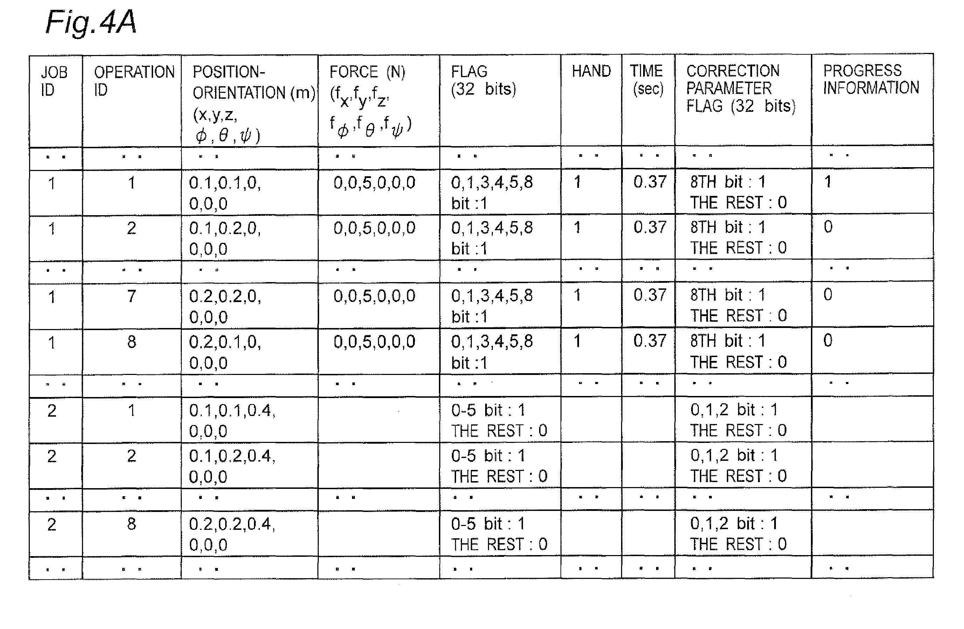

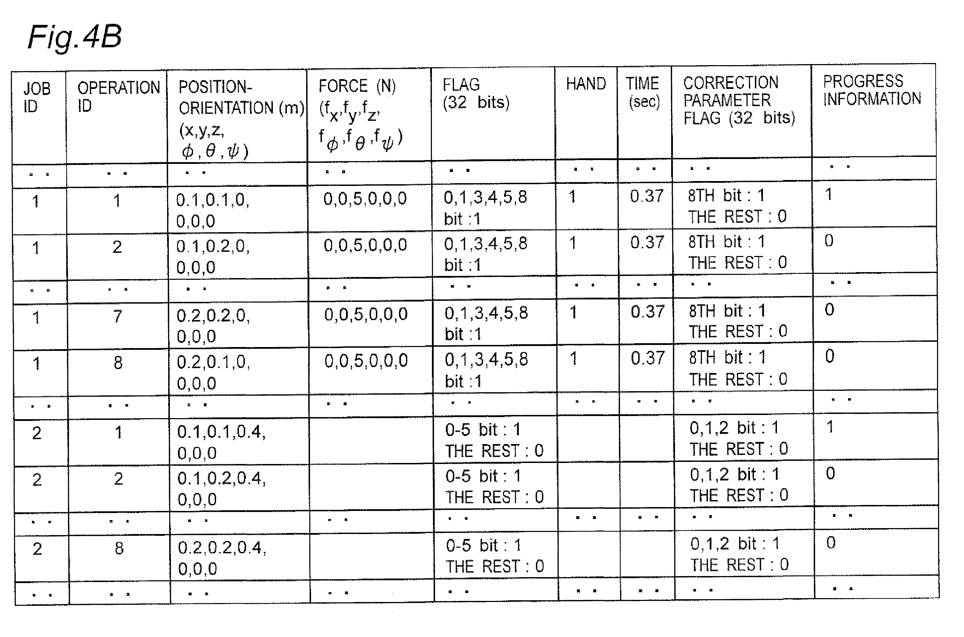

In the operation information database 17, for example, pieces of information relating to operations of the robot arm 5 (operation information), shown in Figs. 4A and 4B, are stored by the operation storage unit 15. Specific data examples of the operation information are shown below:

(1) Job ID numbers (see columns "job ID" of Figs. 4A and 4B) used for identifying jobs.

(2) Operation ID numbers (see columns "operation ID" of Figs. 4A and 4B) used for identifying individual operations in a job.

(3) Information relating to the hand position and orientation of the robot arm 5 in the operation (see columns "position-orientation" in Figs. 4A and 4B).

(4) Information relating to a force to be applied to a target object upon carrying out the operation by the robot arm 5 (see columns "force" in Figs. 4A and 4B).

(5) Information relating to a flag that indicates which piece of information relating to parameters of the hand position, orientation, and force of the robot arm 5 is valid (see columns "flag" in Figs. 4A and 4B).

(6) Information indicating an open/close state of the hand, that is, as to whether the hand 30 is opened or closed (see columns "hand" in Figs. 4A and 4B).

(7) Information relating to periods of time during which the respective operations are executed (see columns "time" in Figs. 4A and 4B).

(8) Information relating to a type of a parameter to be corrected upon correcting operation information of the operation information database 17 by the operation correcting unit 20 and the alternation condition setting unit 82 (see columns "correction parameter flag" in Figs. 4A and 4B), which will be described later.

(9) Progress information indicating whether or not an operation of the robot arm 5 is being executed (see columns "progress information in Figs. 4A and 4B).

In this case, the job ID is a mark used for identifying information relating to the corresponding job, and the operation ID is a mark used for identifying information relating to the corresponding operation.

The "position-orientation" in the operation information database 17 of Figs. 4A and 4B, that is, the information relating to the hand position and orientation of the robot arm 5, represents the hand position and orientation of the robot arm 5, and is indicated by $(x, y, z, \phi, \theta, \psi)$ based upon the coordinates of the origin position $O_e$ and the orientation.

The information relating to "force" represents information relating to a force to be applied by the robot arm 5 to an object to be subjected to the job thereof, and components in $x, y, z, \phi, \theta, \psi$ directions of the force are indicated by $(f_x, f_y, f_z, f_\phi, f_\theta, f_\psi)$. For example, in the case where $f_z = 5[N]$, this means that the job is carried out by applying a force of 5[N] in the z-axis direction. More specifically, this corresponds to, for example, a case in which, upon carrying out a wiping job on the top plate of an IH cooking heater 6 or the like, the wiping job is carried out by applying a force on the surface of the top plate.

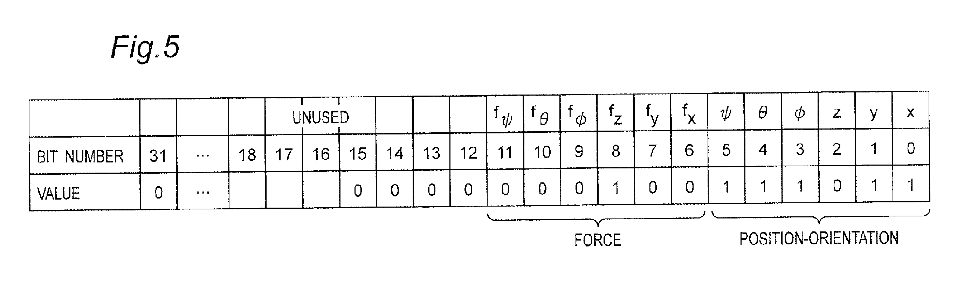

The information relating to "flag" of Figs. 4A and 4B gives a value that indicates which piece of information is valid among the hand position, orientation, and force of the robot arm 5 based upon the operation information indicated by the respective "operation IDs". More specifically, it is indicated by a numeric value of 32 bits shown in Fig. 5. In Fig. 5, when the respective values of the hand position, orientation , and force are valid in the respective bits, these are indicated by "1", while, when the respective values of the hand position, orientation, and force are invalid therein, these are indicated by "0". For example, in the 0th bit, when the value of the x-coordinate of the hand position of the robot arm 5 is valid, "1" is given thereto, while, when the value thereof is invalid, "0" is given thereto. Moreover, in the 1st bit, when the value of the y-coordinate of the hand position of the robot arm 5 is valid, "1" is given thereto, while, when the value thereof is invalid, "0" is given thereto. In the 2nd bit, when the value of the z-coordinate of the hand position of the robot arm 5 is valid, "1" is given thereto, while, when the value of the z-coordinate thereof is invalid, "0" is given thereto. Successively, in the 3rd, 4th, and 5th bits, the validity of each of parameters $\phi, \theta, \psi$ of the orientation is indicated (that is, "1" is given thereto when it is valid, while "0" is given thereto when it is invalid). Moreover, in the 6th bit to the 11th bit, the validity or invalidity of each of components of a force is indicated (that is, "1" is given thereto when it is valid, while "0" is given thereto when it is invalid). With respect to the information relating to "flag", since more bits (32 bits) are prepared for expansion in the future, bits from the 12th bit to the 31st bit are not used so that "0" is given to each of these bits; however, only the 12th bit may be prepared as a variable to be stored. In Fig. 5, since "1" is given to the 0th bit and the 1st bit, the 3rd bit to 5th bit, and 8th bit, these indicate that only $x, y, \phi, \theta, \psi$ information as the hand position and the orientation information of the operation information and $f_z$ as the force information are valid. As a result, among pieces of operation information, since "0" is given to the 2nd bit, 6th to 7th bits, and 9th to 11th bits, even when any value is stored as each of the values of $z, f_x, f_y, f_z, f_\phi, f_\theta, f_\psi$, the value is defined as invalid.

The information relating to "hand" that corresponds to information as to whether the hand 30 is opened or closed in the operation information database 17 of Figs. 4A and 4B is given as a flag indicating the presence or absence of the open/close of the hand 30 during an operation of the robot arm 5, and when the hand 30 is opened, "0" is given thereto, while, when it is closed, "1" is given thereto.

The information relating to "time" in the operation information database 17 of Figs. 4A and 4B corresponds to a period of time during which each of the operations of the robot arm 5 is executed, and indicates that the operation stored in the corresponding "operation ID" is executed in a period of time stored as this information relating to "time". That is, the period of time represents not the absolute period of time, but a relative period of time from the previous operation. In other words, the information represents the period of time during which the hand 30 of the robot arm 5 is shifted to the "position-orientation" indicated by the "operation ID", or the period of time during which the force applied thereby has reached "force" indicated by the "operation ID".

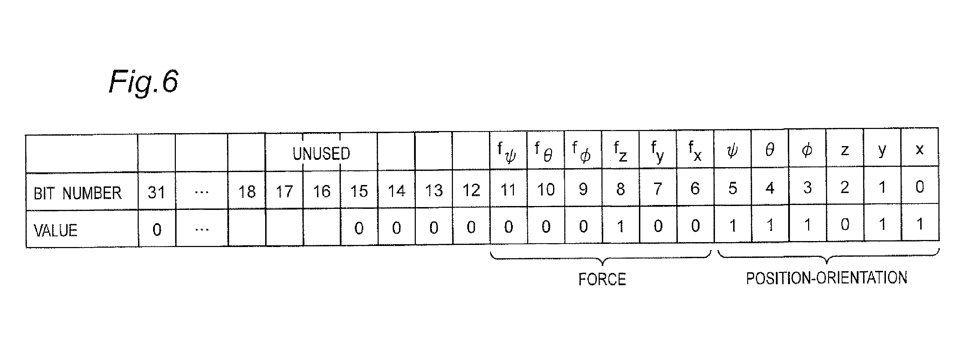

The information relating to "correction parameter flag" in the operation information database 17 of Figs. 4A and 4B gives information as to which parameter should be corrected in the operation correcting unit 20 and alternation condition setting unit 82, which will be described later. More specifically, it is indicated by a numeric value of 32 bits shown in Fig. 6. In Fig. 6, when the respective values of the hand position, orientation, and force can be corrected in the respective bits, these are indicated by "1", while, when the respective values of the hand position, orientation, and force cannot be corrected, these are indicated by "0". For example, in the 0th bit, when the value of the x-coordinate of the hand position can be corrected, "1" is given thereto, while, when the value of the x-coordinate of the hand position cannot be corrected, "0" is given thereto. Moreover, in the 1st bit, when the value of the y-coordinate of the hand position can be corrected, "1" is given thereto, while, when the value of the y-coordinate of the hand position cannot be corrected, "0" is given thereto. In the 2nd bit, when the value of the z-coordinate of the hand position can be corrected, "1" is given thereto, while, when the value of the z-coordinate of the hand position cannot be corrected, "0" is given thereto. Successively, in the 3rd, 4th, and 5th bits, the possibility of correction of each of parameters $\phi$, $\theta$, $\psi$ of the orientation is indicated (that is, "1" is given thereto when the correction can be made, while "0" is given thereto when the correction cannot be made). Moreover, in the 6th bit to the 11th bit, the possibility of correction of each of components of a force is indicated (that is, "1" is given thereto when the correction can be made, while "0" is given thereto when the correction cannot be made). With respect to the information relating to "flag", since more bits (32 bits) are prepared for expansion in the future, bits from the 12th bit to the 31st bit are not used so that "0" is given to each of these bits; however, only the 12th bit may be prepared as a variable to be stored.

The information relating to "progress information" in the operation information database 17 of Figs. 4A and 4B corresponds to information that indicates whether or not the corresponding operation is currently being executed, and in the case where the operation is currently being executed, "1" is given thereto, while, in the case where it is not the operation that is currently being executed, "0" is given thereto, and the resulting bits are stored in the operation information database 17 by the operation storage unit 15. More specifically, when the person 4 starts a job by the operation instruction unit 27 of Fig. 5, among the respective operations of the job, with respect to the operation that is currently being carried out (executed), "1" is stored by the operation storage unit 15, and with respect to an operation that is not currently being carried out (executed), "0" is stored by the operation storage unit 15.

-Operation Instruction Unit-

To the operation instruction unit 27, an instruction for starting operations of a job corresponding to "job ID" specified by the person 4 through the input IF 26 is inputted. Upon receipt of the instruction for starting the operations of the job corresponding to the specified "job ID", the operation instruction unit 27 starts the operations of the job having the specified "job ID". More specifically, "1" is set to the "progress information" of the "operation ID" currently being executed, by the operation information instruction unit 27, and stored in the operation information database 17 by the operation storage unit 15. With respect to the pieces of "progress information" of the other "operation IDs", "0" is given thereto by the operation instruction unit 27, and stored in the operation information database 17 by the operation storage unit 15. All the operations of the job having the specified job ID are executed by the operation instruction unit 27 successively, starting from a job having the smallest number of the "operation ID", and when the last operation has been executed, the process returns to the operation of the leading "operation ID" of the "job ID" so that the process of operations is executed repeatedly.

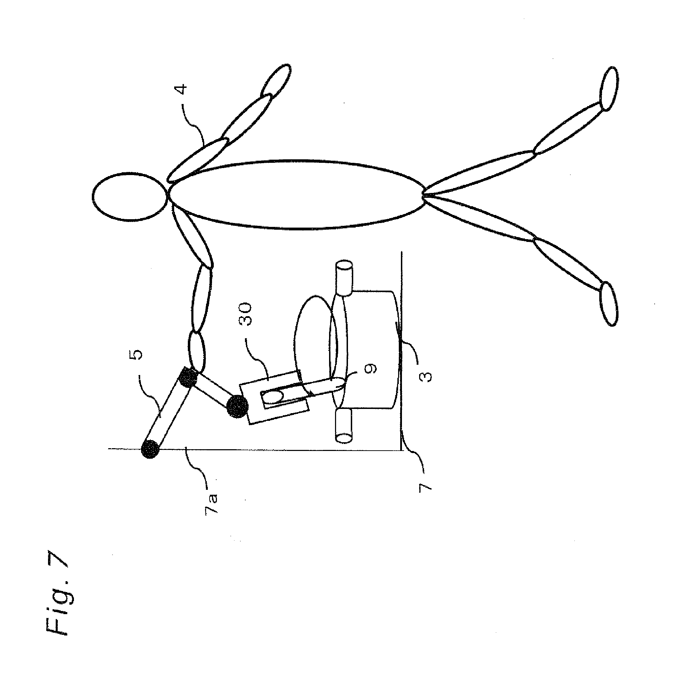

The pieces of information of the position and orientation of the hand and time of the robot arm 5 in the operation information database 17 are formed by processes in which, for example, as shown in Fig. 7, the person 4 directly grabs the robot arm 5, and moves the robot arm 5 in an impedance control mode, which will be described later, so that information of the hand position and orientation of the robot arm 5 is obtained every certain fixed period of time (for example, every 0.2 msec.) and stored in the operation information database 17 by the operation storage unit 15 together with the corresponding period of time. Moreover, the information of force in the operation information database 17 is formed by inputting a value of a desired force to be applied, through the data input IF 26. Additionally, in Fig. 7, reference numeral 3 represents a pot serving as one example of a cooking tool, and reference numeral 9 represents a ladle serving as one example of a cooking tool, grabbed by the hand 30 and used for mixing the pot 3.

-Operation Correcting Information Database-

The following description will discuss the operation correcting database 18 in detail.

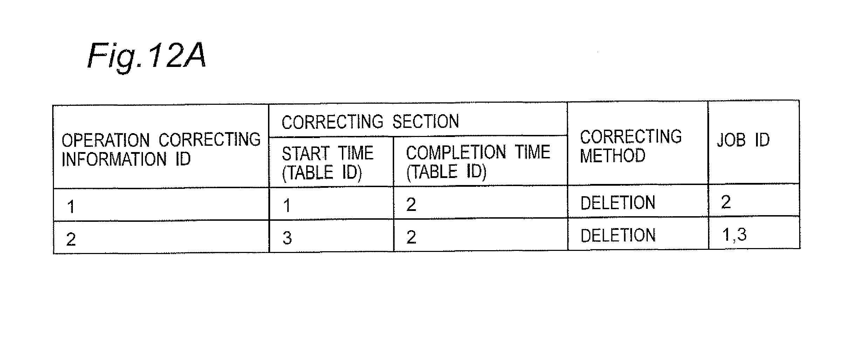

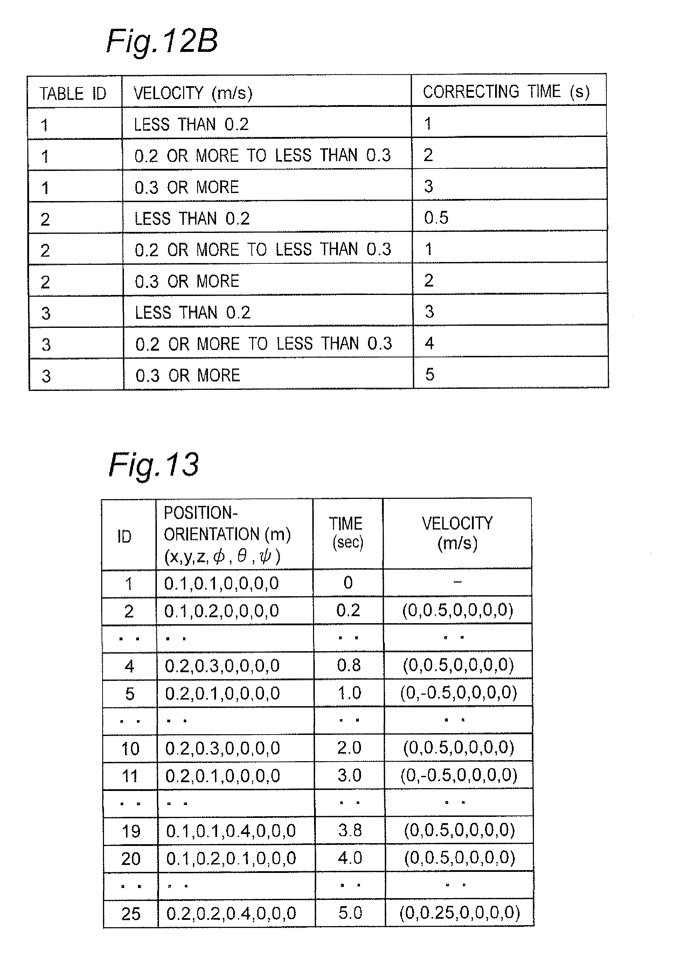

The operation correcting information database 18 stores pieces of information (operation correcting information) relating correcting methods for the operations of the robot arm 5, for example, shown in Fig. 12A. Specific pieces of operation correcting information are designed to include: operation correcting information ID numbers (see columns of "operation correcting information ID" of Fig. 12A) corresponding to IDs used for identifying pieces of operation correcting information, information relating to correcting sections (see columns of "operation correcting information ID" of Fig. 12A), that is, information relating to starting time indicating a relative period of time from the time at which the person 4 started operating the robot arm 5 midway during an operation carried out based upon the operation information (see columns of "starting time" of Fig. 12A), information relating to time immediately before the completion of the operation of the robot arm 5 by the person 4 (see columns of "completion time" of Fig. 12A), information relating to correcting methods for operation information (see columns of "correcting method" of Fig. 12A), and "job IDs" that are identification numbers used for identifying which job the operation correcting information having the ID indicated by the "operation correcting information ID" should be applied to (see columns of "job ID" of Fig. 12A). "Starting time" and "completion time" correspond to any of IDs of table IDs shown in Fig. 12B. The "Job ID" corresponds to any one of values of "job IDs" of the operation information database 17, and in the case where the correcting information is applicable to a plurality of jobs, a plurality of ID's, such as "1, 3", may be stored, as shown in "2" in the "operation correcting IDs" shown in Fig. 12A.

-Alternation Condition Setting Unit-

The alternation condition setting unit 82 has a function for setting an alternation condition of the operation of the robot arm 5 (alternation conditions including a condition as to whether or not a correcting operation of the robot arm 5 is carried out), that is, it has such a function that, for example, by estimating an intention of a manipulation of the person 4 with respect to the operation of the robot arm 5, a target value of operation information relating to an operation of the robot arm 5 (a value relating to a hand position, or an orientation, or the like at which the robot arm 5 will finally arrive, or a value relating to a hand position or an orientation at which the robot arm 5 will not finally arrive, but which forms a target value when the hand position, or the orientation, or the like is moved) is estimated. The alternation condition setting unit 82 receives an instruction for starting an operation correction together with the operation correcting unit 20 from the data input IF 26 through the operation instruction unit 27, midway during an operation of the robot arm 5 in any one of modes including an impedance control mode, a position control mode, and a force control mode, which will be described later, or a control mode in which these modes are combined with one another in respectively different directions, based upon pieces of information relating to the position and orientation as well as force and time of the operation information database 17. Then, based upon the operation correcting information of the operation correcting information database 18, the alternation condition setting unit 82 exerts such a function that it sets an alternation condition (for example, estimates a target value) that is used when the person 4 applies a force to the robot arm 5 so as to correct the operation information of the robot arm 5 in the operation information database 17.

-Operation Correcting Unit-

The operation correcting unit 20 receives an instruction for starting an operation correction by using the operation correcting unit 20 from the data input IF 26 through the operation instruction unit 27, midway during an operation of the robot arm 5 in any one of modes including an impedance control mode, a position control mode, and a force control mode, which will be described later, or a control mode in which these modes are combined with one another in respectively different directions, based upon pieces of information relating to the position and orientation as well as force and time of the operation information database 17. Then, the operation correcting unit 20 has such a function that it corrects the operation information of the robot arm 5 of the operation information database 17 in accordance with the alternation condition (for example, an estimated target value of operation information) set by the alternation condition setting unit 82. Additionally, the operation correcting unit 20 may be proposed to also include the function of the alternation condition setting unit 82; however, in the present specification, the operation correcting unit 20 and the alternation condition setting unit 82 are arranged separately depending on the above-mentioned functions.

The following description will discuss functions of the operation correcting unit 20 and alternation condition setting unit 82.

The person 4 selects a job that is desirably executed by the robot arm 5 among "operation IDs" of jobs in the operation information database 17 through the data input IF 26, and inputs the selected information to the operation instruction unit 27 to be specified. With respect to the "job ID" specified by the person 4 through the data input IF26, the instruction of the job selection is received by the alternation condition setting unit 82 and the operation instruction unit 27, and the operation instruction unit 27 gives an instruction for selecting the job to the alternation condition setting unit 82 and the operation correcting unit 20. The operation correcting unit 20 gives an instruction to the control parameter managing unit 21 so as to execute the operation information of the job having the "job ID" selected among the operation information database 17 (more specifically, information relating to the position information, orientation information, time information, and force information) in accordance with the flag, with the control mode being set to be operated.

More specifically, in the case where the job having "1" of the "job ID" of Fig. 4A is selected, in the case of the operation having "1" of the "job ID", with "1" of the "operation ID", since the "flag" is "1" in each of the 0th, 1st, 3rd, 4th, and 5th bits, this indicates that x, y, $\phi$, $\theta$, $\psi$ of the hand position of the robot arm 5 are valid. Therefore, with respect to x, y, $\phi$, $\theta$, $\psi$, operations are carried out in the position control mode, and with respect to the z-axis, since the 8th bit of the "flag" is "1", the operation correcting unit 20 gives an instruction to the control parameter managing unit 21 so as to carry out the operation in the force control mode (in the same manner as in the instruction for the force hybrid impedance mode).

In the same manner, in the case where the job having "2" of the "job ID" of Fig. 4B is selected, in the case of an operation having "2" of the "job ID", with "1" of the "operation ID", since the "flag" is "1" in each of the 0th to 5th bits, an instruction is given from the operation correcting unit 20 to the control parameter managing unit 21 so as to operate all the axes of x, y, z, $\phi$, $\theta$, $\psi$ in the position control mode.

Next, the person 4 gives an instruction for starting the operation of the selected job to the operation instruction unit 27 through the data input IF 26.

In the case where a job having "1" in the "job ID" is selected, upon receipt of an instruction from the operation instruction unit 27 by the alternation condition setting unit 82 and the operation correcting unit 20, the operation correcting unit 20 gives an instruction to the control parameter managing unit 21 so as to carry out jobs in the force control mode in the z-axis direction, with the other axes being operated in the position control mode. Then, as shown in Fig. 9, the robot arm 5 starts carrying out a wiping job on the top plate of the IH cooking heater 6 or the like.

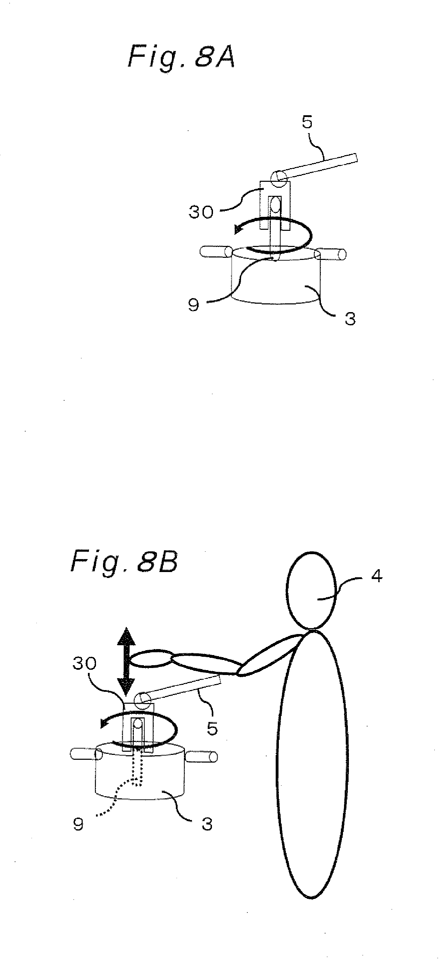

In the case where a job having "2" in the "job ID" is selected, upon receipt of an instruction from the operation instruction unit 27 by the alternation condition setting unit 82 and the operation correcting unit 20, the operation correcting unit 20 gives an instruction to the control parameter managing unit 21 so as to carry out a mixing operation in the position control mode. Then, as shown in Fig. 8A, the robot arm 5 starts carrying out the mixing operation.

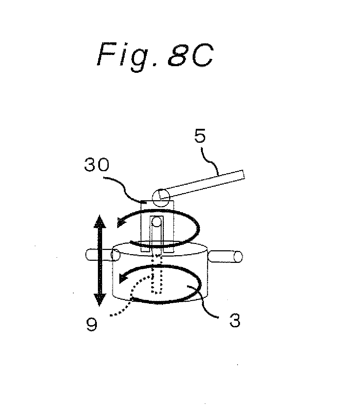

An explanation will be given by exemplifying a case in which the person 4 confirms the state of cooking materials in the pot 3, and, as shown in Fig. 8C, corrects the job so as to carry out the mixing job, with a ladle 9 grabbed by the hand 30 of the robot arm 5 being allowed to mix the materials in the pot 3 circularly, while being moved from the upper surface of the pot 3 toward the bottom of the pot, and further to repeatedly carry out the mixing job circularly on the materials in the pot 3 while being moved from the bottom of the pot toward the upper surface of the pot 3.

Upon trying to start the correction, the person 4 gives an instruction for starting the correction to the operation instruction unit 27 by using the data input IF 26. Upon receipt of the instruction for starting the correction through the data input IF 26, the operation instruction unit 27 gives an output to the operation correcting unit 20 and the alternation condition setting unit 82 so as to start the correction.

Upon receipt of the instruction for starting the correction from the data input IF 26, the operation correcting unit 20 gives an instruction to the control parameter managing unit 21 so as to carry out the operation with the control mode being set in accordance with the correction parameter flag in the operation information database 17 and the alternation condition set by the alternation condition setting unit 82.

In the same manner, while a job having "2" in the "job ID" of Fig. 4B is being carried out (operation having "1" in the progress information), since the correction parameter flag of the "operation ID" in Fig. 4B is set to "1" only in each of the 0th, 1st and 2nd bits, with the other flags being set to "0", this represents that only the x, y and z-axes can be corrected with respect to the operations of the robot arm 5. Therefore, in order to allow the person 4 to make corrections in the x, y and z-axes by applying a force, the operation correcting unit 20 gives an instruction to the control parameter managing unit 21 so as to carry out operations in the x, y and z-axes while being moved in the position control mode as well as in the hybrid impedance control mode (a mode in which, while being moved in the position control mode, a shift is made in a direction in which the force of the person 4 is detected in the impedance control mode).

Next, in the case where, as shown in Fig. 8B, the person 4 directly grabs the robot arm 5 and applies a force thereto downward so as to carry out a mixing job on the bottom of the pot, it is possible to move the robot arm 5 in the z-axis direction, that is, in a direction in which the force is applied by detecting the force of the person 4 in the impedance mode, while the robot arm 5 is being moved in the position control mode under the hybrid impedance control mode. Since the person 4 attempts to correct the job so as to mix circularly on the x, y plane, while the robot arm 5 being shifted vertically, the person 4 applies a force to the robot arm 5 vertically so that the robot arm 5 is moved vertically as shown in Fig. 8B.

Upon correction by the person 4 during the above-mentioned operation, in particular, at the time of starting the manipulation or completing the manipulation of the robot arm 5, the hand of the person 4 tends to shake and the correction is carried out with the hand shake contained therein, with the result that the operation correction cannot be carried out properly. In most cases, the hand shake becomes greater as the operation of the robot arm 5 becomes faster.

Therefore, the alternation condition setting unit 82 acquires pieces of information relating to the hand position and orientation of the robot arm 5 from the point of time when the person 4 started the correction until the completion thereof, from the control unit 22 through the control parameter managing unit 21, every certain fixed period of time (for example, every 0.2 sec.). Fig. 13 shows acquired data as a specific example. In Fig. 13, "ID" represents an identification number used for identifying each of acquired data, "position-orientation" represents the acquired position and orientation of the hand of the robot arm 5, and "time" represents a relative period of time from the start of the correction by the person 4, with the starting point of time being set to 0.

Next, the operation correcting unit 20 retrieves operation correcting information having the same ID as the "job ID" that is currently in operation in the operation correcting information database 18. In this example, since the job having "2" in the "job ID" of the operation information database 17 of Fig. 4B is being carried out, the operation correcting information having "2" in the "job ID" corresponds to "1" in the "operation correcting information ID". Based upon Fig. 12A, the alternation condition setting unit 82 acquires information having a table ID "1" in "starting time", a table ID "2" in "completion time" ,and "deletion" in "correcting method", as the operation correcting information having "1" in the "operation correcting information ID". By using this operation correcting information, the alternation condition setting unit 82 corrects the data of Fig. 13 previously acquired. More specifically, among the data acquired by the operation correcting unit 20, by using the smallest ID of the "IDs" as a reference, the alternation condition setting unit 82 calculates velocities in the respectively different directions of the position and orientation. More specifically, the velocity of each of the IDs is found by the alternation condition setting unit 82 based upon an equation (the position and orientation of the current ID - the position and orientation of the previous ID by one)/(time of the current ID - time of the previous ID by one). The velocities found by the alternation condition setting unit 82 are shown in the columns of velocity in Fig. 13. Next, since the velocity of the ID number of the manipulation start, that is, the velocity of ID "2" in this case, corresponds to (0, 0.5, 0, 0, 0, 0) (m/s), the fastest velocity in those in respectively different directions is 0.5 (m/s) ; therefore, since "starting time" of Fig. 12A corresponds to table "1" of Fig. 12B, and since the velocity 0.5 (m/s) previously found is 0.3 (m/s) or more, it is acquired by the alternation condition setting unit 82 that the starting time corresponds to 3(s).

Next, by using the smallest ID of the "IDs" of Fig. 13 as a reference, the alternation condition setting unit 82 calculates elapsed periods of time in succession, and the section in which the elapsed period of time has reached the "starting time" ("3 seconds" in this example), previously calculated, is corrected by the operation correcting unit 20 by using the method described in the correcting method in the operation correcting information ("deletion" in this example). In the example of Fig. 13, since the elapsed period of time from "1" to "11" in the "IDs" corresponds to 3 seconds, those data in the section are deleted by the operation correcting unit 20.

Next, the "completion time" is calculated by the alternation condition setting unit 82. More specifically, the "completion time (table ID)" of Fig. 12A is set to "2" based upon the table of Fig. 12B. Since the velocity of the greatest ID of the "table IDs" is 0.25 (m/s) in its fastest velocity in the respectively different directions among (0, 0.25, 0, 0, 0, 0) (m/s) of the example of Fig. 13, the velocity of 0.25 (m/s) corresponds to "0.2 or more to less than 0.3" when the "table ID" is "2" in accordance with Fig. 12B; therefore, information corresponding to 1 (sec) in completion time ("correcting time") is acquired by the alternation condition setting unit 82.

Next, by using the greatest ID of the "IDs" among the data acquired by the alternation condition setting unit 82 as a reference, the alternation condition setting unit 82 calculates elapsed periods of time backward in succession, and the section in which the elapsed period of time has reached the "completion time" ("1 second" in this example), previously calculated by the alternation condition setting unit 82, is corrected by the operation correcting unit 20 by using the method described in the correcting method in the operation correcting information ("deletion" in this example). In the example of Fig. 13, since the elapsed period of time from "25" to "20" in the "IDs" corresponds to 1 second, those data in the section are deleted by the operation correcting unit 20. In this manner, the information relating to the hand position and orientation, acquired by the alternation condition setting unit 82, is outputted from the alternation condition setting unit 82, and stored in the operation information database 17 by the operation storage unit 15 so that, as shown in Fig. 8C, the operation of the ladle 9 at the tip of the robot arm can be corrected to an operation in which the mixing process is carried out circularly, with the ladle being moved upward and downward.

Additionally, in this example, as shown in Fig. 12A, since a hand shake tends to occur more often immediately after the start of the correcting process than that upon completion of the correcting process, the table is set in such a manner that the deletion is made in a longer section immediately after the start of the correcting process than that upon completion of the correcting process. Moreover, in this example, the "table ID" is set to "1" or "2"; however, for example, when a hand shake tends to occur more often even if the robot arm 5 is being moved slowly, as is often the case with an elder person or a child, the period of time for deletion may be set to a longer period even at a slow speed, by switching the "table IDs". In this case, in order to identify whether the operator is "an elder person" or "a child" or "the other", an ID used for identifying "an elder person" or "a child" may be inputted through the data input IF. In contrast, in the case where the velocity of the robot arm 5 in operation is slow so that the person 4 who is operating the robot arm 5 can positively operate the robot arm 5, by setting the correction time of Fig. 12B to 0 second, the setting may be made so as not to execute the correction.

Moreover, depending on jobs, in the case where, even during a fast operation, the correction can be made without causing a hand shake so much, or in the case where, in contrast, even during a slow operation, the job causes a hand shake in most cases, it becomes possible to set a correction period of time suitable for the corresponding job, by switching the table IDs for each of the job IDs. At this time, as to the determination between the former case and the latter case, without carrying out the determination automatically, the table of Fig. 12A may be preliminarily prepared in association of the job IDs.

As described above, by carrying out the correction using the operation correcting information, at the time of the operation start and upon completion of the operation for correction, even if a hand shake occurs in the hand of the person 4 due to the velocity of the robot arm 5 in operation, it is possible to prevent the correction from being made out with the shake being included.

Additionally, in this example, since an attempt is made to correct only the operation in the z-axis direction, only the 2nd bit of the correction parameter flag of Fig. 4B is set to "1", and the corresponding correcting instruction is given to the control parameter managing unit 21 from the operation correcting unit 20 so that an operation can be carried out only in the z-axis direction in the impedance control mode.

As described above, the alternation condition setting unit 82 and the operation correcting unit 20 make it possible to make a correction while preventing a hand shake of the hand of the person 4 at the time of the operation start and upon completion of the operation for correction caused when the person 4 applies a force to the robot arm 5 while the robot arm 5 is being operated based upon the operation information of the operation information database 17.

Accordingly, the operation correcting unit 20 can make the correction, while preventing a hand shake of the hand of the person 4 at the time of the operation start and upon completion of the operation for correction caused when the person 4 applies a force to the robot arm 5 while the robot arm 5 is being operated based upon the operation information of the operation information database 17.

-Operation Storage Unit-

Reference numeral 15 represents an operation storage unit that stores operation information corrected by the operation correcting unit 20 in the operation information database 17. Moreover, to the operation storage unit 15, pieces of information of the hand position (position of the hand 30) and orientation of the robot arm 5 and a force applied to the robot arm 5 by the person 4 are also inputted from the control parameter managing unit 21, and stored by the operation storage unit 15.

(Control Device Main Unit 11)

The control apparatus main unit 11 is designed to have a control parameter managing unit 21 and a control unit 22. Tip unit positions and information of force or the like of the robot arm 5 are inputted and outputted to and from each other between the control unit 22 and the control parameter managing unit 21.

-Control Parameter Managing Unit-

The following description will discuss the control parameter managing unit 21 in detail.

The control parameter managing unit 21 carries out a setting by which control modes of the robot arm 5 are switched among three modes, that is, the hybrid impedance control mode, the force hybrid impedance control mode, and the high-rigidity position control mode, based upon an instruction of the operation correcting unit 20. Moreover, the control parameter managing unit 21 carries out a setting process of mechanical impedance setting values at the time of the hybrid impedance control mode as well as at the time of the force hybrid impedance control mode. Furthermore, the control parameter managing unit 21 also carries out a setting process of the hand position and orientation target correcting output $r_{d\Delta}$ to be outputted by the impedance calculation unit 51, which will be described later, and a setting process of operation information to be sent to the target track generation unit 55. Based upon an instruction from the operation correcting unit 20, the control parameter managing unit 21 gives an instruction to the control unit 22 so as to operate the robot arm 5 in accordance with the set control mode so that the robot arm 5 is operated under control of the control unit 22. Moreover, the control parameter managing unit 21 sends information of the tip-unit position or force of the robot arm 5, or the like, from the control unit 22 to the operation correcting unit 20 and the alternation condition setting unit 82.

(i) Position Control Mode

The position control mode is a mode in which the robot arm 5 is operated based upon the hand position and orientation target vector instruction of the target track generation unit 55, which will be described later, that is, a mode in a control method for controlling the operation of the robot arm 5 so as not to be moved even upon application of the force to the robot arm 5 by the person 4. More specifically, the position control mode is a mode in which the robot arm 5 is operated during a job such as a mixing job or a wiping job.

(ii) Impedance Control Mode

The impedance control mode corresponds to a mode for a control method in which the operation of the robot arm 5 is controlled in response to a force that is detected by the force detection unit 53 and applied to the robot arm 5 by the person 4, or the like. For example, as shown in Fig. 7, the impedance control mode corresponds to a mode in which the person 4 directly holds the robot arm 5, and directs the robot arm 5 to a work place (position of a pot 3 in Fig. 7).

(iii) Hybrid Impedance Control Mode

The hybrid impedance control mode is a mode of a control method for controlling operations of the robot arm 5 so that, during an operation of the robot arm 5 in the position control mode, a force applied to the robot arm 5 is detected by the force detection unit 53 and the robot arm 5 is actuated in response to the force detected by the force detection unit 53. More specifically, in the case where, as shown in Fig. 8A, while the robot arm 5 is carrying out a mixing job in the position control mode, the person 4 confirms the state of cooking materials in the pot 3 and attempts to correct the operation of the robot arm 5 so as to mix a portion on the bottom side of the pot 3, the control parameter managing unit 21 outputs an instruction to the control unit 22 so as to switch the mode to the hybrid impedance control mode. As a result, as shown in Fig. 8B, by allowing the person 4 to apply a force downward to the robot arm 5 while grabbing the robot arm 5 in the hybrid impedance control mode (see a downward arrow in Fig. 8B), it is possible to correct the operation of the robot arm 5 to a mixing job for mixing in the vertical direction, i.e., a portion on the bottom side of the pot, as shown by a downward arrow and an arrow in a rotation direction on the lower side of Fig. 8C, while carrying out the mixing job in the horizontal direction in the position control mode. This control method corresponds to the hybrid impedance control mode.

(iv) Force Control Mode

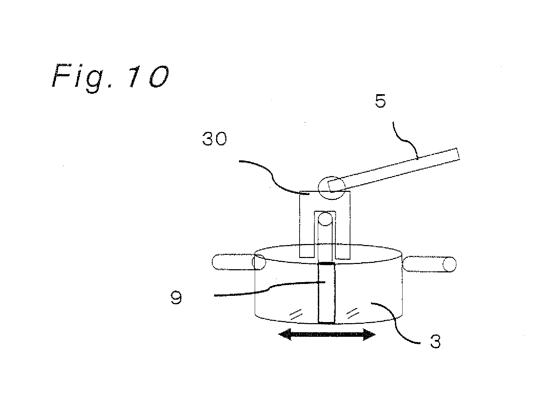

The force control mode is a control mode for a control method in which the operation of the robot arm 5 is controlled so that the operation is carried out, with a target object being pressed by the robot arm 5 with a force that is set to the control parameter managing unit 21 from the operation correcting unit 20. For example, as shown in Fig. 9, in the case where, upon carrying out a wiping job on the top plate of an IH cooking heater 6, such a wiping job as to rub the surface of the top plate with a force being applied thereto is executed, or as shown in Fig. 10, in the case where such a mixing job as to rub the bottom of a pot 3, with a force being applied thereto, is carried out, this force control mode is used so as to apply the force in a controlled direction.

(v) Force Hybrid Impedance Control Mode

The force hybrid impedance control mode is a mode of a control method for controlling operations of the robot arm 5 so that switching is made among the hybrid impedance control mode, the impedance control mode, or the position control mode in the respective different directions of the six axes, and so that the operation of the robot arm 5 is controlled so as to be carried out in the force control mode by which the operation is carried out with a specified force being applied thereto. Additionally, it is not possible to set the impedance control mode in a direction in which the force control mode has been set (that is, the force control mode and the impedance control made are in a mutually exclusive relationship).

(vi) Force Hybrid Impedance Control Mode

For example, as shown in Fig. 9, in the case where, upon carrying out a wiping job on the top plate of the IH cooking heater 6, the wiping job is executed with a force specified vertically downward onto the cleaning surface, while the job is being carried out circularly in parallel with the cleaning surface, the force hybrid impedance control mode is set. More specifically, the six axes of $(x, y, z, \phi, \theta, \psi)$ are respectively set in the following control modes. That is, the $(x, y)$ components are set to the hybrid impedance control mode, the $(\phi, \theta, \psi)$ components are set to the impedance control mode, and the z-axis component is set to the force hybrid impedance control mode. By setting the hybrid impedance control mode with respect to a horizontal direction relative to the cleaning surface, it is possible to move the robot arm 5 in response to a force applied to the robot arm 5 by the person 4 or the like, midway during the operation in the position control mode. Moreover, by setting the impedance control mode with respect to the ($\phi$, $\theta$, $\psi$) components, the orientation of the robot arm 5 in a stopped state can be altered in response to a force applied to the robot arm 5 by the person 4 or the like. Furthermore, by setting the force control mode with respect to the z-axis component, it is possible to carry out a job with a specified pressing force being applied thereto. Alternatively, in the force hybrid impedance control mode, the operation may be carried out, with the force control mode being set only on the z-axis component among the six axes of (x, y, z, $\phi$, $\theta$, $\psi$), while the other axes are being set in the position control mode. In this case, even upon application of an unexpected force, such as a collision force, to the robot arm 5, it is possible to prevent the position control component from being erroneously moved.

(vii) High-Rigidity Position Control Mode

The high-rigidity position control mode is a mode in which the position control mode during the operation of the robot arm 5 is allowed to have higher rigidity. More specifically, this mode is achieved by making higher the gain in the positional error compensating unit 56, which will be described later, so that even when the person 4 applies a force thereto, the robot arm 5 cannot be easily moved; therefore, since no influences due to a drag from the contact surface are applied thereto, it becomes possible to detect the force applied by the person 4 correctly.

With respect to these control modes, upon operating the robot arm 5, respective appropriate control modes are set differently in the respective directions and orientations of the robot arm 5, and the robot arm 5 is operated correspondingly.

Moreover, during the operation of the robot arm 5 in the hybrid impedance control mode or in the force hybrid impedance mode, the person 4 can alter the setting of the hand position and orientation target correcting output $r_{d\Delta}$ to be outputted by the mechanical impedance parameter or the impedance calculation unit 51, in accordance with the parameter to be corrected.

The setting parameters of the mechanical impedance set values include inertia M, viscosity D, and rigidity K. The setting of each of the parameters of the mechanical impedance set values is carried out by using a correction value based upon the following evaluation equations.

[Equation 1]

$$M = KM \times (\text{correction value}) \ldots \text{Equation (3)}$$

[Equation 2]

$$D = KD \times (\text{correction value}) \ldots \text{Equation (4)}$$

[Equation 3]

$$K = KK \times (\text{correction value}) \ldots \text{Equation (5)}$$

In the above-mentioned equations (3) to (5), KM, KD, and KK are gains, and correspond to certain constant values respectively.

The control parameter managing unit 21 outputs the inertia M, viscosity D, and rigidity K, that is, the mechanical impedance parameters calculated based upon the equations (3) to (5), to the control unit 22.

As shown in the equations (3) to (5), in the case where, with respect to the mixing operation in an upper portion of the pot 3 being carried out by using the ladle 9 grabbed by the hand 30 of the robot arm 5, as shown in Fig. 8B, the person 4 attempts to correct the operation of the robot arm 5 so as to mix a portion on the bottom side in the pot 3, if the positional components and the orientation components of the axes other than the z-axis of the robot arm 5 are easily moved, it becomes difficult to carry out the correcting process on the operation of the robot arm 5. Therefore, by allowing the control parameter managing unit 21 to set the correction value higher only with respect to the positional components and orientation components of the axes other than the z-axis (more specifically, for example, to about 10 times as high as the correction value) of the robot arm 5, the viscosity D and rigidity K of the robot arm 5 are set to be greater; thus, the movements of the robot arm 5 become resistant or rigid so that the robot arm 5 is hardly moved.

Alternatively, another method is proposed in which among the respective components of the target correcting output $r_{d\Delta}$ of the hand position and orientation to be outputted by the impedance calculation unit 51, all the values except for the value of the z-axis are set to 0. With this arrangement, since no movement is carried out by the force of the person 4 except for that in the z-axis direction, it becomes possible to prevent an erroneous operation.

Moreover, as described earlier, it is necessary to transfer pieces of information relating to the hand position and orientation of the robot arm 5, as well as the force applied by the person 4, from the control parameter managing unit 21 to the operation storage unit 15, the operation correcting unit, 20 and the alternation condition setting unit 82. For this reason, upon receipt of the information of the hand position of the robot arm 5 and the force by the control parameter managing unit 21 from the control unit 22, the control parameter managing unit 21 informs the operation storage unit 15, the operation correcting unit 20, and the alternation condition setting unit 82 of these pieces of information. Moreover, the control parameter managing unit 21 informs the control unit 22 of pieces of operation information, such as the position, orientation, and time, that have been inputted to the control parameter managing unit 21 from the operation correcting unit 20.

-Control Unit-

Referring to Fig. 3, the following description will discuss the control unit 22 in detail. The control unit 22 is constituted by a target track generation unit 55, a hand control unit 54, a force detection unit 53, an impedance calculation unit 51, a position control system 59 (having a positional error compensating unit 56, an approximation reverse kinematical calculation unit 57 and a forward kinematical calculation unit 58), and a positional error calculation unit 80. Although the force detection unit 53 is illustrated as one portion of the control unit 22 in Fig. 3, it may be prepared as a structure different from the control unit 22.

From the robot arm 5, a current value (joint angle vector) vector $q = [q_1, q_2, q_3, q_4, q_5, q_6]^T$ of each joint angle, measured by the encoder 44 of each of the joint axes, is outputted, and received by the control unit 22 through the input/output IF 24. In this case, $q_1, q_2, q_3, q_4, q_5, q_6$ are joint angles of the first joint portion 35, the second joint portion 36, the third joint portion 37, the fourth joint portion 38, the fifth joint portion 39, and the sixth joint portion 40.

In the target track generation unit 55, in order to operate the robot arm 5 in the position control mode, or in the hybrid impedance control mode, target tip-unit position and orientation target vectors $r_d$ are generated by the target track generation unit 55 from the operation information generated by the operation correcting unit 20 and inputted to the target track generation unit 55 through the control parameter managing unit 21.

More specifically, when the operation information is inputted to the target track generation unit 55 from the operation correcting unit 20 through the control parameter managing unit 21, the tip-unit position and orientation target vectors $r_d$, which are used for achieving a target operation of the robot arm 5, are outputted from the target track generation unit 55 to the positional error calculation unit 80. The target operation of the robot arm 5 is provided with a position and orientation ($r_{d0}, r_{d1}, r_{d2}, ...$) for each point of time ($t = 0, t = t_1, t = t_2, ...$) from the operation correcting unit 20 in accordance with a target job, and the target track generation unit 55 interpolates the track between the respective points by using polynomial interpolation to generate the tip-unit position and orientation target vectors $r_d$.

At the time of the impedance control mode, the tip-unit position of the robot arm 5 at the time of switching to the impedance control mode is outputted as the tip-unit position and orientation target vectors $r_d$ to form a target. Moreover, an open/close instruction of the hand 30 is given to the hand control unit 54 to be described later, by using an open/close flag relating to the hand 30 in the operation information database 17.

Moreover, in the target track generation unit 55, in order to operate the robot arm 5 in the force hybrid impedance control mode, or in the high-rigidity position control mode, target tip-unit position and orientation target vectors $r_d$ are generated by the target track generation unit 55 from the operation information generated by the operation correcting unit 20 and inputted to the target track generation unit 55 through the control parameter managing unit 21.

More specifically, when the operation information is inputted to the target track generation unit 55 from the control parameter managing unit 21, the tip-unit position and orientation target vectors $r_d$, the force vector $f_d$ of the hand generated in the target track generation unit 55, and flags indicating which parameter is valid separately depending on the respective directions, which are used for achieving a target operation of the robot arm 5, are outputted from the target track generation unit 55 to the positional error calculation unit 80. In the position control mode, the target operation of the robot arm 5 is provided with a position and orientation ($r_{d0}, r_{d1}, r_{d2}, ...$) and a force ($f_{d0}, f_{d1}, f_{d2}, ...$) at each point of time ($t = 0, t = t_1, t = t_2, ...$) from the operation correcting unit 20 in accordance with a target job. The target track generation unit 55 interpolates the track and force between the respective points by using polynomial interpolation to generate the tip-unit position and orientation target vectors $r_d$ and the force vector $f_d$. Moreover, in the same manner as in the first embodiment, an open/close instruction of the hand 30 is given to the hand control unit 54 to be described later, by using an open/close flag relating to the "hand" in the operation information database 17.

Reference numeral 54 represents the hand control unit 54, which, based upon the open/close flag inputted from the target track generation unit 55, gives an instruction to the robot arm 5 through the input/output IF 24 so as to open/close the hand 30.

Reference numeral 53 represents the force detection unit which detects an external force $F_{ext}$ to be applied to the robot arm 5 by a contact between the person 4 or the like and the robot arm 5. In this case where the robot arm 5 is being operated with an object having a weight of m being grabbed by its hand, mg is preliminarily reduced from the detected $F_{ext}$. In this case, g represents gravitational acceleration. The value of a mass m of the grabbed object can be inputted to the force detection unit 53 through the data input IF 26, by the person 4 prior to grabbing the object.

To the force detection unit 53, a current value $i = [i_1, i_2, i_3, i_4, i_5, i_6]^T$ flowing through the motor 43 for driving each of the joint portions of the robot arm 5, measured by the current sensor of the motor driver 27, is inputted through the input/output IF 24 so that the force is detected by the force detection unit 53. Moreover, the current value q of each joint angle, measured by each of the encoders 44, is received by the force detection unit 53 through the input/output IF 24, and a joint angle error compensating output $u_{qe}$ is also received thereby from an approximation reverse kinematical calculation unit 57, which will be described later. The force detection unit 53, which functions as an observer, calculates a torque Text that is generated in each of the joint portions by an external force applied to the robot arm 5, based upon the electric current value i, the current value q of each of the joint angles, and the joint angle error compensating output $u_{qe}$. Moreover, the force detection unit 53 also converts the torque to an equivalent hand external force $F_{ext}$ of the hand of the robot arm 5, based upon $F_{ext} = J_v(q)^{-T}T_{ext} - [0, 0, m_g]^T$, and outputs the equivalent hand external force $F_{ext}$ thus converted to an impedance calculation unit 51. In this case, $J_v(q)$ is a Jacob matrix that satisfies the following equation:

[Equation 4]

$$v = Jv(q)\dot{q}$$

where $v = [v_x, v_y, v_z, (\omega_x, \omega_y, \omega_z]^T$, and $(v_x, v_y, v_z)$ represent a translation speed of the hand of the robot arm 5 in the hand coordinate system 42, while $(\omega_x, \omega_y, \omega_z)$ represent an angular velocity of the hand of the robot arm 5 in the hand coordinate system 42. Moreover, m represents a weight of a grabbed object grabbed by the hand 30, and g represents gravitational acceleration. The value of the weight m of the grabbed object may be inputted to the force detection unit 53 through the input/output IF 24 by the person 4 prior to the grabbing process of the object. Moreover, the grabbing process of the object is actually carried out by the hand 30 of the robot arm 5, and based upon the estimated result of the equivalent hand external force $F_{ext}$ of the force detection unit 53 at this time, the value m of the weight of the grabbed object may be calculated.

The impedance calculation unit 51 is a unit having a function for allowing the robot arm 5 to achieve the control of a mechanical impedance value of the robot arm 5 to a mechanical impedance set value, and upon switching to the position control mode by the control parameter managing unit 21, 0 is outputted therefrom.

In contrast, upon switching to the impedance control mode or the hybrid impedance control mode, based upon the inertia M, viscosity D, and rigidity K that are impedance parameters preliminarily set by the control parameter managing unit 21, the current value q of each of the joint angles, and the external force $F_{ext}$ detected by the force detection unit 53, the hand position and orientation target correcting output $r_{d\Delta}$, used for allowing the robot arm 5 to achieve the control of the mechanical impedance value of the robot arm 5 to a mechanical impedance set value, is calculated by the impedance calculation unit 51 based upon the following equation (6) so that the hand position and orientation target correcting output $r_{d\Delta}$ thus calculated and found is outputted to the positional error calculation unit 80.

Moreover, in the case where, there is a force component specified by "flag" upon switching to the force hybrid impedance control mode in the control parameter managing unit 21, based upon the inertia M, viscosity D, and rigidity K that are impedance parameters preliminarily set by the control parameter managing unit 21, the current value q of each of the joint angles and the external force $F_{ext}$ detected by the force detection unit 53, and $f_d$ outputted from the target track generation unit 55, the hand position and orientation target correcting output $r_{d\Delta}$, used for allowing the robot arm 5 to achieve the control of the mechanical impedance value of the robot arm 5 to a mechanical impedance set value, is calculated by the impedance calculation unit 51 based upon the following equation (10) so that the hand position and orientation target correcting output $r_{d\Delta}$ thus calculated and found is outputted to the positional error calculation unit 80.

The hand position and orientation target correcting output $r_{d\Delta}$ is added to the hand position and orientation target vector $r_d$ outputted by the target track generation unit 55 in the positional error calculation unit 80 so that a hand position and orientation correcting target vector $r_{dm}$ is generated. In the case where, at the time of the hybrid impedance control mode, the operation of the robot arm 5 is regulated in accordance with the correcting parameter, for example, in order to allow the robot arm 5 to move only in the z-axis direction, the impedance calculation unit 51 sets components of the hand position and orientation target correcting output $r_{a\Delta}$ other than the z component to 0.

[Equation 5]

$$r_{d\Delta} = (s^2 \hat{M} + s \hat{D} + \hat{K})^{-1} F_{ext}$$  Equation (6)

where the following equations are satisfied and s represents a Laplace operator.

[Equation 6]

$$\hat{M} = \begin{bmatrix} M & 0 & 0 & 0 & 0 & 0 \\ 0 & M & 0 & 0 & 0 & 0 \\ 0 & 0 & M & 0 & 0 & 0 \\ 0 & 0 & 0 & M & 0 & 0 \\ 0 & 0 & 0 & 0 & M & 0 \\ 0 & 0 & 0 & 0 & 0 & M \end{bmatrix}$$  Equation (7)

[Equation 7]

$$\hat{D} = \begin{bmatrix} D & 0 & 0 & 0 & 0 & 0 \\ 0 & D & 0 & 0 & 0 & 0 \\ 0 & 0 & D & 0 & 0 & 0 \\ 0 & 0 & 0 & D & 0 & 0 \\ 0 & 0 & 0 & 0 & D & 0 \\ 0 & 0 & 0 & 0 & 0 & D \end{bmatrix}$$  Equation (8)

[Equation 8]

$$\hat{K} = \begin{bmatrix} K & 0 & 0 & 0 & 0 & 0 \\ 0 & K & 0 & 0 & 0 & 0 \\ 0 & 0 & K & 0 & 0 & 0 \\ 0 & 0 & 0 & K & 0 & 0 \\ 0 & 0 & 0 & 0 & K & 0 \\ 0 & 0 & 0 & 0 & 0 & K \end{bmatrix}$$  Equation (9)

[Equation 9]

$$r_{d\triangle} = (s^2 \hat{M} + s \hat{D} + \hat{K})^{-1}(F_{ext} - f_d) \qquad \text{Equation (10)}$$

In this case, M, D, and K are calculated by equation (7), equation (8) and equation (9).

Reference numeral 58 represents the forward kinematical calculation unit to which a joint-angle vector q that is the current value q of each of the joint angles measured by the encoder 44 of each of the joint axes of the robot arm 5 is inputted through the input/output IF 24. In the forward kinematical calculation unit 58, geometrical calculations are carried out to convert the joint angle vector q of the robot arm 5 to the hand position and orientation vector r by the forward kinematical calculation unit 58. The hand position and orientation vector r, calculated in the forward kinematical calculation unit 58, is outputted to the positional error calculation unit 80, the impedance calculation unit 51, and the target track generation unit 55.

Reference numeral 56 represents the positional error compensating unit, and after an error $r_e$ between the hand position and orientation vector r calculated by the forward kinematical calculation unit 58 from the joint angle vector q measured in the robot arm 5 and the hand position and orientation correcting target vector $r_{dm}$ has been found by the positional error calculation unit 80, the error $r_e$ is inputted to the positional error compensating unit 56, and a positional error compensating output $u_{re}$ is outputted from the positional error compensating unit 56 to the approximation reverse kinematical calculation unit 57.

Moreover, when the high-rigidity position control mode is set, the positional error compensating unit 56 sets three gains, that is, proportional, differential, and integral gains, that are diagonal matrixes of a constant to predetermined greater values (that is, values greater than those in the normal position control mode. More specifically, the values are set about two times as high as those values in the normal position control mode. In this case, "high rigidity" means higher rigidity in comparison with that in the normal position control mode. When the values are set to two times as high as those values in the normal position control mode, the rigidity can be made about two times as high as that in the normal position control mode). Thus, it becomes possible to achieve a position controlling process with high rigidity. Additionally, by changing the gain values for each of the components, for example, a controlling process can be carried out with high rigidity only in the z-axis direction, with the normal positional control being carried out in the other directions.

Based upon the positional error compensating output $u_{re}$ inputted thereto from the positional error compensating unit 56 and the joint angle vector q measured in the robot arm 5, the approximation reverse kinematical calculation unit 57 carries out approximation calculations of reverse kinematics by using an approximation $u_{out} = J_r(q)^{-1}u_{in}$.

[Equation 10]

$$\dot{r} = J_r(q)\dot{q}$$

In this case, $J_r(q)$ is a Jacob matrix that satisfies the above equation, $u_{in}$ is an input to the approximation reverse kinematical calculation unit 57, and $u_{out}$ is an output from the approximation reverse kinematical calculation unit 57, and supposing that the input $u_{in}$ is a joint angle error $q_e$, a conversion equation from the hand position and orientation error $r_e$ to the joint angle error $q_e$, as represented by $q_e = J_r(q)^{-1}r_e$, is obtained. Therefore, when the positional error compensating output $u_{re}$ is inputted to the approximation reverse kinematical calculation unit 57 from the positional error compensating unit 56, a joint angle error compensating output $q_{ue}$ for use in compensating for the joint angle error $q_e$ is outputted from the approximation reverse kinematical calculation unit 57 to the motor driver 25 of the robot arm 5 through the input/output IF 24 as an output from the approximation reverse kinematical calculation unit 57.

The joint angle error compensating output $U_{qe}$ is given to the motor driver 25 of the robot arm 5 through the D/A board of the input/output IF 24 as a voltage instructing value, and each of the joint portions is consequently driven to forwardly/reversely rotate by each of the motors 43 so that the robot arm 5 is operated.

With respect to the control unit 22 configured as described above, the following description will discuss a principle of the impedance-controlling operation of the robot arm 5.

The impedance controlling operation basically corresponds to a feed-back controlling (position-controlling) operation of the hand position and the orientation error $r_e$ by the positional error compensating unit 56 (in the same manner as in the hybrid impedance control), and a portion, surrounded by a dotted line in Fig. 3, corresponds to a position controlling system 59. For example, when a PID compensator is used as the positional error compensating unit 56, a controlling operation is executed by the position controlling system 59 so that the hand position and the orientation error $r_e$ is converged to 0; thus, it becomes possible to achieve a target impedance controlling operation of the robot arm 5.

Upon switching to the impedance control mode or the hybrid impedance control mode or the force hybrid impedance control mode in the control parameter managing unit 21, the hand position and orientation target correcting output $r_{d\Delta}$ is added by the impedance calculation unit 51 in the positional error calculation unit 80 with respect to the position control system 59 explained earlier so that the target value of the hand position and orientation is corrected. For this reason, in the position control system 59, the target value of the hand position and orientation is slightly deviated from the original value, with the result that an operation for controlling the mechanical impedance value of the robot arm 5 to the appropriately determined set value is achieved so that the positional controlling operation of the position control system 59 can be corrected. Since the hand position and orientation target correcting output $r_{d\Delta}$ is calculated by equation (6) in the case of the impedance control mode or the hybrid impedance control mode, and since the output is calculated by equation (10) in the case of the force hybrid impedance control mode, operations for controlling the mechanical impedance values of the inertia M, viscosity D, and rigidity K of the robot arm 5 to the appropriately determined set values can be achieved.

(Peripheral Apparatus 14)

The peripheral apparatus 14 is designed to have a data input IF (interface) 26, an input/output IF (interface) 24, a motor driver 25, and a display unit 2. Control information such as control signals is outputted from the control unit 22 to the input/output IF 24. Correcting information, such as a correcting parameter or the like stored in the operation information database 17, and an image, a photograph, or a text corresponding to an operation ID are outputted from the operation correcting unit 20 to the display unit 2 so that the image, photograph, or text of the operation of the robot arm 5, described in the operation information, is displayed on the display unit 2.

The input/output IF 24 is designed to have, for example, a D/A board, an A/D board, and a counter board that are connected to an expansion slot, such as a PCI bus of a personal computer. To the input/output IF 24, respective pieces of joint angle information outputted from encoders 44, which will be described later, of the respective joint portions of the robot arm 5, and angle information outputted from an encoder 61 of the hand 30 are inputted, and the input/output IF 24 inputs these to the control unit 22. Moreover, control information, such as control signals, is also inputted to the input/output IF 24 from the control unit 22, and the input/output IF 24 outputs control information, such as a control instruction value, to the motor driver 25. The motor driver 25 outputs control information, such as control instruction values, to a motor 43, which will be described later, of each of the joint portions of the robot arm 5 and a motor 62 of the hand 30.

Reference numeral 26 represents a data input IF (interface) through which the person 4 inputs or alters operation information to be described later by using an input device, such as a keyboard, a mouse or a microphone. Moreover, the data input IF 26 may be designed so that, by using an input device such as a button 13a of the operation panel 13 of Fig. 1, instructions for starting and finishing a control operation, given by the person 4, are received by the operation instruction unit 27. The button 13a may be prepared as, for example, a toggle switch so that inputting operations for starting the control operation and for finishing the control operation can be inputted by using a single switch, or may be prepared as a control operation starting button and a control operation finishing button separately.

Reference numeral 2 represents the display unit that is prepared as, for example, a display device formed on the side surface of the robot arm 5 or the work bench 7, and used for displaying operation information and the like.

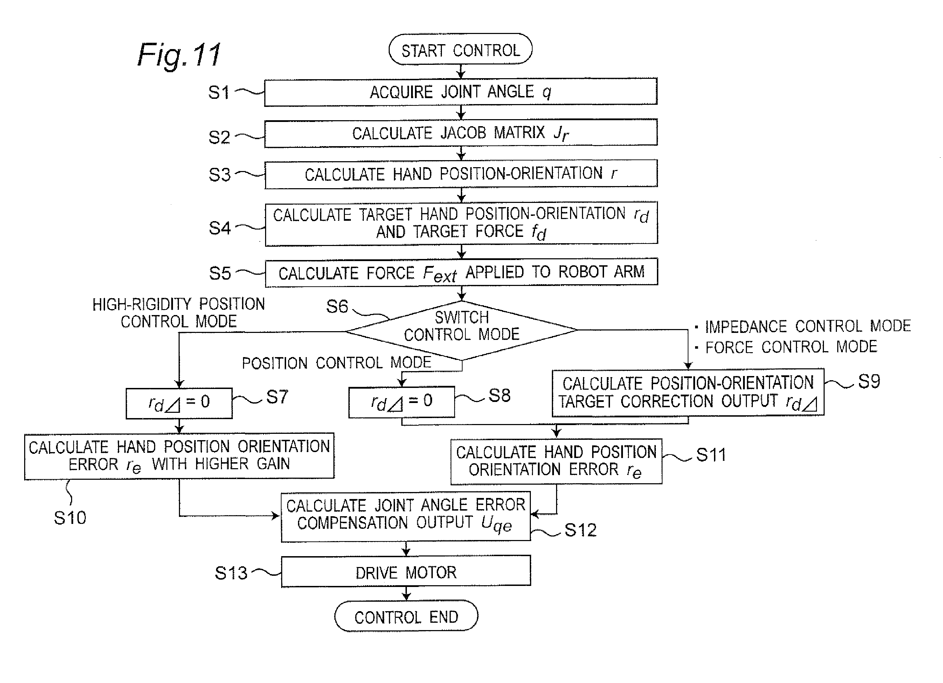

Referring to a flow chart of Fig. 11, the following description will discuss actual operation steps of the control program that is made based upon the principle described above.

The joint angle data (joint variable vector or joint angle vector q), calculated by each of the encoders 44 of the joint portions of the robot arm 5, is received by the control unit 22 of the control apparatus main unit 11 from the encoder 44 through the input/output IF 24 (step S1).

Next, based upon the joint angle data (joint variable vector or joint angle vector q) thus received by the control unit 22, the reverse kinematical calculation unit 57 executes calculations, such as the Jacob matrix $J_r$, required for kinematical calculations of the robot arm 5 (step S2).

Next, the forward kinematical calculation unit 58 calculates the current hand position and orientation vector r of the robot arm 5 from the joint angle data (joint variable vector or joint angle vector q) from each of the encoders 44 of the robot arm 5, and outputs the resulting data to the positional error calculation unit 80, the target track generation unit 55, and the impedance calculation unit 51 (step S3).

Next, based upon operation information transmitted from the operation correcting unit 20 through the control parameter managing unit 21, the target track calculation unit 55 calculates the hand position and orientation target vector $r_d$ of the robot arm 5, and the target force vector $f_d$, and at the time of the impedance control mode, outputs the hand position of the robot arm 5 to the positional error calculation unit 80 as a target hand position and orientation target vector $r_d$ (step S4).

Next, the force detection unit 53 calculates an equivalent tip-unit external force $F_{ext}$ at the hand of the robot arm 5 from a driving current value i of the motor 43, the joint angle data (joint variable vector or joint angle vector q), and the joint angle error compensating output $u_{qe}$, and outputs the resulting data to the impedance calculation unit 51 (step S5).

Next, in step S6, in the case where the operation correcting unit 20, which will be described later, gives an instruction that "correction is required", while the force component of the six axes is to be corrected by a correction parameter, in the control parameter managing unit 21, the control mode of the component set as the force component is switched to the high-rigidity position control mode. Thereafter, the process proceeds to step S7.

Moreover, in step S6, in the case where the hybrid impedance control mode is set in the control parameter managing unit 21, upon correcting a positional component of the six axes, the positional component to be desirably corrected is altered to the impedance control mode. Thereafter, the process proceeds to step S9.

Furthermore, in step S6, in the case where the position control mode is set in the control parameter managing unit 21, the process proceeds to step S8, and in step S8, the position control mode is set. Alternatively, in step S6, in the case where the force control mode is set in the control parameter managing unit 21, the process proceeds to step S9, and the force control mode is set in step S9.

In step S7 (process in an impedance calculation means 51), in the case where the high-rigidity position control mode is set in the control parameter managing unit 21, the impedance calculation unit 51 sets the hand position and orientation target correcting output $r_{d\Delta}$ to 0 vector. Thereafter, the process proceeds to step S10.

In step S8 (processes in the impedance calculation means 51), in the case where the position control mode is set in the control parameter managing unit 21, the impedance calculation unit 51 sets the hand position and orientation target correcting output $r_{d\Delta}$ to 0 vector. Thereafter, the process proceeds to step S11.

In step S9, in the case where the impedance control mode or the force control mode is set in the control parameter managing unit 21, based upon the inertia M, viscosity D, and rigidity K of the mechanical impedance parameters, set by the control parameter managing unit 21, the joint angle data (joint angle vector q) and the equivalent tip-unit external force $F_{ext}$ to be applied to the robot arm 5, calculated by the force detection unit 53, the hand position and orientation target correcting output $r_{d\Delta}$ is calculated by the impedance calculation unit 80. Moreover, based upon the correction parameters, any one of the component values of the hand position and orientation target correcting output $r_{d\Delta}$ is set to 0. Thereafter, the process proceeds to step S11.

In step S11, the positional error compensating unit 56 calculates a hand position and orientation correction target vector $r_{dm}$, which is a sum between the hand position and orientation target vector $r_d$ and the hand position and orientation target correcting output $r_{d\Delta}$, and an error $r_e$ of the hand position and orientation corresponding to a difference between the hand position and orientation target vector $r_d$ and the current hand position and orientation vector r. As a specific example of the positional error compensating unit 56, a PID compensator is proposed. By appropriately adjusting three gains, that is, proportional gain, differential gain, and integral gain, corresponding to an orthogonal matrix of a constant, the controlling process of the positional error compensating unit 56 is executed so as to converge the positional error to 0. Thereafter, the process proceeds to step S12.

In step S10, by appropriately adjusting three gains, that is, proportional gain, differential gain, and integral gain, corresponding to an orthogonal matrix of the constant of the positional error compensating unit 56, the controlling process of the positional error compensating unit 56 is executed so as to converge the positional error to 0. By reducing each of the gains to a certain value, the positional controlling process with high rigidity is achieved. Thereafter, the process proceeds to step S12.

In step S12, in the approximation reverse kinematical calculation unit 57, by multiplying the positional error compensating output $u_{re}$ by a reverse matrix of the Jacob matrix $J_r$ calculated in step S2 by using the approximation reverse kinematical calculation unit 57, the approximation reverse kinematical calculation unit 57 converts the positional error compensating output $u_{re}$ from the value relating to the error of the hand position and orientation to a joint angle error compensating output $u_{qe}$ that is a value relating to the error of the joint angle.

Next, in step S13, the joint angle error compensating output $u_{qe}$ is given to the motor driver 25 from the approximation reverse kinematical calculation unit 57 through the input/output IF 24. Based upon the joint angle error compensating output $u_{qe}$, the motor driver 25 changes the amount of electric current that is flowing through each of the motors 43 of the joint portions. By this change in the amount of electric current, a rotating movement is generated in each of the joint portions in the robot arm 5 so that the robot arm 5 carries out operations.

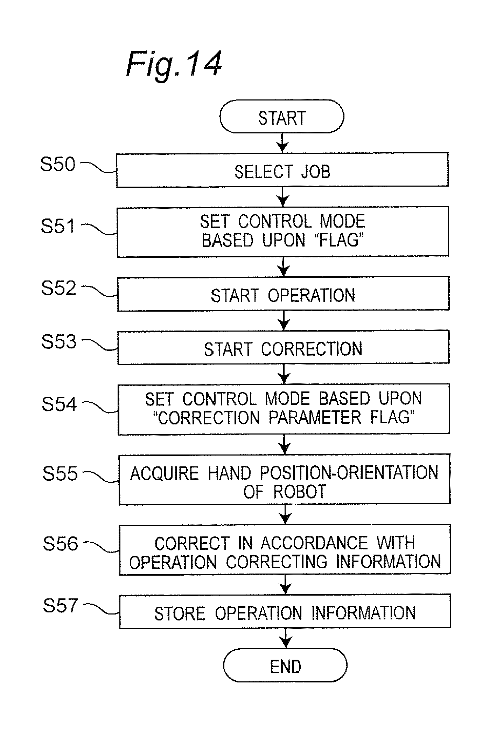

Referring to a flow chart of Fig. 14, the following description will discuss operation steps of the above-mentioned operation correcting unit 20, operation storage unit 15, alternation condition setting unit 82, operation information database 17, operation correcting information database 18, and control parameter managing unit 21.

The person 4 is allowed to input a selection instruction corresponding to a job to be desirably executed by the robot arm 5 selected among the jobs in the operation information database 17, that is, a selection instruction for a selected (specified) "job ID", to the operation instruction unit 27 through the data input IF 26 (step S50).

Next, based upon the selection instruction inputted to the operation instruction unit 27, the operation correcting unit 20 sets a control mode in accordance with the "flag" of the operation information relating to the "job ID" stored in the operation information database 17 and then selected (specified)(step S51).

Next, when the person 4 inputs an instruction for starting the operation of the selected job to the operation instruction unit 27 by using the data input IF 26, the operation instruction unit 27, upon receipt of the operation starting instruction, gives an instruction for carrying out the operation in the set control mode to the control parameter managing unit 21 through the operation correcting unit 20 (step S52). The control parameter managing unit 21 gives an instruction to the control unit 22 so as to operate the robot arm 5 in the set control mode so that the robot arm 5 is operated under control of the control unit 22.

Next, during the operation of the robot arm 5, the person 4 inputs an instruction for starting a correction to the operation instruction unit 27 by using the input IF 26 (step S53). Upon receipt of the instruction for starting a correction, the operation instruction unit 27 inputs an instruction for starting the operation correction to the operation correcting unit 20 and the alternation condition setting unit 82. Then, in accordance with the "correcting parameter flag", the operation correcting unit 20 sets the control mode, and gives an instruction to the control parameter managing unit 21 so as to operate the robot arm 5 in the set control mode (step S54).

Next, by allowing the person 4 to grab the robot arm 5 and apply a force to the robot arm 5 in a desired correcting direction, the alternation condition setting unit 82 corrects the operation information. More specifically, the alternation condition setting unit 82 acquires information of the hand position and orientation of the robot arm 5 every certain fixed period of time (for example, every 0.2 msec.) from the point of time when the person 4 started the correction until the completion thereof (step S55) so that in accordance with the operation correcting information, the acquired operation is corrected by the operation correcting unit 20 (step S56) .

Next, the operation information corrected by the operation correcting unit 20 is stored in the operation information database 17 by the operation storage unit 15 (step S57).

By using the above-mentioned operation steps S1 to S13 of Fig. 11 and operation steps S51 to S57 of Fig. 14, even when the person 4 directly grabs the robot arm 5 during the operation of the robot arm 5 based upon the operation information so that the operation information is corrected by applying the force to the robot arm 5, the operation correcting unit 20 carries out the correcting operation, with a hand shake of the person 4 at the time when the person started the correcting operation as well as at the time of the completion of the correcting operation being eliminated by the operation correcting unit 20 by the operation correcting information; thus, the operation correcting unit 20 is allowed to carry out the correcting operation, while deviations in the operation of the person 4 being taken into consideration.

Additionally, in this example, the explanation has been given by exemplifying the mixing job to be operated in the position control mode; however, in the case where, as shown in Figs. 9 or 10, midway during an operation in the force control mode, an attempt is made to eliminate the hand shake at the time of the start of the correcting operation as well as at the time of the completion of the correcting operation, by carrying out the correction by using the same method, the operation correcting unit 20 can carry out the correcting operation, while deviations in the operation of the person 4 being taken into consideration.

Moreover, although the explanation has been given such that upon receipt of a correcting start instruction from the person 4, the position control mode is switched to the hybrid impedance control mode, the operation may be always carried out not in the position control mode but in the hybrid impedance control mode during the operation of the robot arm 5. In this case, although it is not possible to prevent an erroneous operation when the person 4 erroneously applies a force to the robot arm 5, the correcting process can be always carried out without the necessity of the correcting start instruction.

Moreover, although the explanation has been given such that upon receipt of a correcting start instruction from the person 4, the position control mode is switched to the hybrid impedance control mode, the operation may be always carried out not in the position control mode but in the hybrid impedance control mode during the operation of the robot arm 5. In this case, although it is not possible to prevent an erroneous operation when the person 4 erroneously applies a force to the robot arm 5, the correcting process can be always carried out without the necessity of the correcting start instruction.

(Second Embodiment)

Since the basic structure of a control apparatus of the robot arm in a second embodiment of the present invention is the same as that of the first embodiment, explanations for the common portions will be omitted, and the following description will discuss only different portions in detail.

In the same manner as in the first embodiment, as shown in Fig. 8A, the following explanation will be given by exemplifying a mixing job of the pot 3 carried out by using the robot system 1.

-Operation Correcting Information Database-

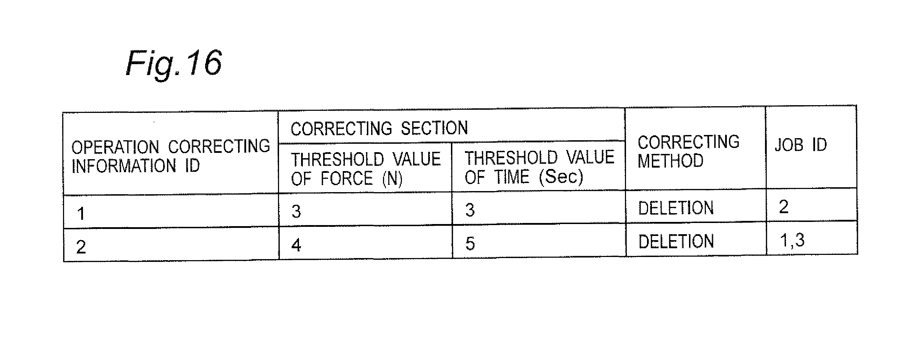

Fig. 16 shows the operation correcting database 18. Specific pieces of operation correcting information are designed to include: operation correcting information ID numbers (see columns of "operation correcting information ID" of Fig. 16) corresponding to IDs used for identifying pieces of operation correcting information, information relating to correcting sections (see "correcting sections" of Fig. 16), that is, information relating to a threshold value of a force in the case where the person 4 applies the force midway during the start of the operation by the operation information (see "threshold value of force" in Fig. 16), information relating to a threshold value of time indicating how long the force that is the "threshold value of force" or more is applied by the person 4 (see "threshold value of time" in Fig. 16), information relating to a correcting method of the operation information (see "correcting method" in Fig. 16), and information relating to "job IDs" (see columns of "job IDs" in Fig. 16) corresponding to identification numbers that are used for identifying which job the operation correcting information indicated by the "operation correcting information ID" is applied to. Each "job ID" corresponds to any one of values in the "job IDs" in the operation information database 17, and in the case where correcting information is applicable to a plurality of jobs, as shown in "2" of the "operation correcting information ID" of Fig. 16, a plurality of IDs, such as "1, 3", may be stored therein.

-Alternation Condition Setting Unit and Operation Correcting Unit-

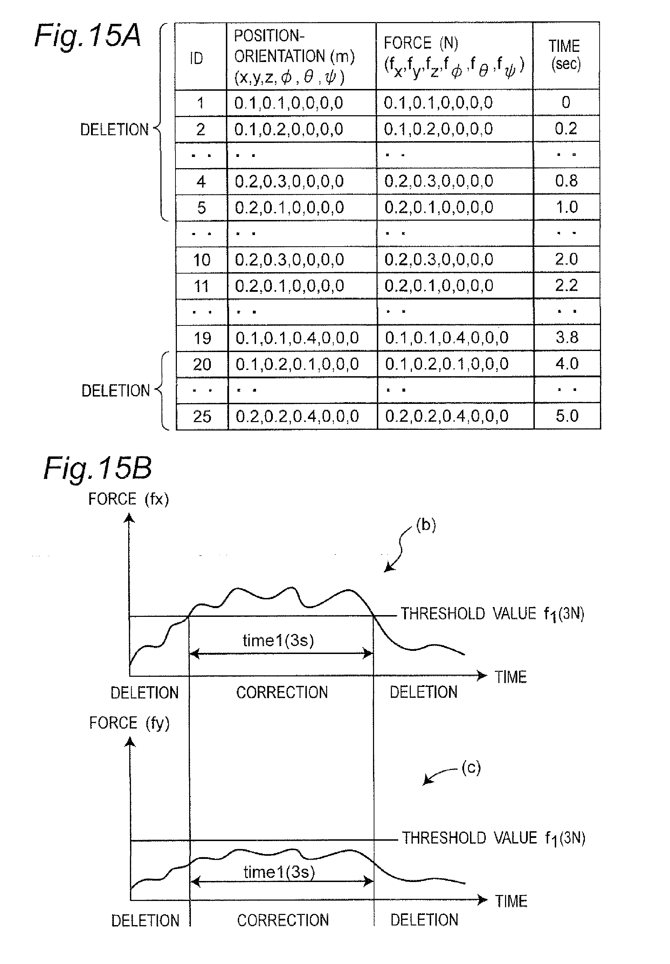

In the same manner as in the first embodiment, the operation correcting unit 20 allows the person 4 to select a job to be desirably executed by the robot arm 5 among jobs relating to "job IDs" of the jobs in the operation information database 17 and to input the selected information to the operation instruction unit 27 so as to be specified. When the operation instruction unit 27 receives the instruction for the job selection of the job having the "job ID" specified by the person 4 through the data input IF 26, the operation instruction unit 27 gives an instruction for the job selection to the alternation condition setting unit 82 and the operation correcting unit 20 so that the corresponding job is selected. The operation correcting unit 20 sets the control mode based upon the "flag" of the selected job among the jobs in the operation information database 17. Moreover, the operation correcting unit 20 gives an instruction to the control parameter managing unit 21 so that an operation is carried out in the set control mode. When the person 4 inputs an instruction for starting the correction to the operation instruction unit 27 through the data input IF 26, the operation correcting unit 20 sets a control mode based upon the "correcting parameter flag" of the operation information database 17 through the operation instruction unit 27, and gives an instruction to the control parameter managing unit 21 so as to carry out an operation in the set control mode. The alternation condition setting unit 82 acquires a force applied to the hand of the robot arm 5 and the hand position and orientation of the robot arm 5 from the point of time when the person 4 started the correction until the completion thereof, every certain fixed period of time (for example, every 0.2 sec.). Fig. 15A shows data acquired by the alternation condition setting unit 82 as a specific example. In Fig. 15A, "ID" represents an identification number used for identifying each of data acquired by the alternation condition setting unit 82, "position-orientation" represents the position and orientation of the hand of the robot arm 5 acquired by the alternation condition setting unit 82, "force" represents a force to be applied to the robot arm 5, acquired by the alternation condition setting unit 82, and "time" represents a relative period of time from the start of the correction by the person 4, with the starting point of time being set to 0.

Next, the operation correcting unit 20 retrieves operation correcting information having the same ID as the "job ID" that is currently in operation in the operation correcting information database 18. In this example, since the job having "2" in the "job ID" of the operation information database 17 of Fig. 4B is being carried out, the operation correcting information having "2" in the "job ID" corresponds to "1" in the "operation correcting information ID" in Fig. 16. As the operation correcting information having "1" in the "operation correcting information ID", the alternation condition setting unit 82 acquires information having "3(N)" in the "threshold value of force" of the "correcting section", "3 (seconds)" in the "threshold value of time", and "deletion" in the "correcting method". By using these pieces of operation correcting information, the alternation condition setting unit 82 corrects the data of Fig. 15A previously acquired. More specifically, among the data thus acquired, the operation correcting unit 20 carries out a correction by using the correcting method described in the "correcting method" (in this case, "deletion") on sections other than those sections in which the period of time during which the information relating to force is the "threshold value of force" or more of the operation correcting information are continuously connected for the "threshold value of time" or more. Fig. 15B(b) is a graph in which the time of Fig. 15A is plotted on the axis of abscissas with only the x-component of the force being plotted on the axis of ordinates, and Fig. 15B(c) is a graph in which the time of Fig. 15A is plotted on the axis of abscissas with only the y-component of the force being plotted on the axis of ordinates. A threshold value $f_1$ of Figs. 15B(b) and 15B(c) corresponds to the "threshold value of force" of the operation correcting information, and time "time 1" corresponds to the "threshold value of time" of the operation correcting information. In the case of Fig. 15B(b), there is a section having a force that is the "threshold value of force" or more, which continues for a period of time corresponding to the "time 1" or more, while in the case of Fig. 15B(c), there is no section having a force that is the "threshold value of force" or more, which continues for a period of time corresponding to the "time 1" or more; thus, there are cases in which sections are different depending on the respective components. In these cases, the alternation condition setting unit 82 regards those sections, each having a force that is the "threshold value of force" or more, which continues for a period of time corresponding to the "time 1" or more, as sections for use in corrections for all the components, and does not delete them. By storing the acquired hand position and orientation in the operation information database 17 by using the operation storage unit 15, the operation correcting unit 20 corrects the operation into such an operation as to carry out a mixing process circularly, with the ladle 9 at the tip of the robot arm being shifted up and down, as shown in Fig. 8C. Moreover, by carrying out the correction by the use of the operation correcting information, upon correction by the person 4 during an operation, the correction is applied only during the section in which the force of the person 4 used for operating the robot arm 5 has a value that is a certain value or more, and the force is being exerted for a certain fixed period of time; thus, in such sections as the start of the correcting process and the completion of the correcting process by the person 4, where a hand shake of the person 4 tends to occur, since the force to be applied to the robot arm 5 by the person 4 is reduced to the threshold value or less, it is possible to prevent the correction from being applied to such sections. Additionally, in this example, the "threshold value of force" is set to 3 (N), with the "threshold value of time" being set to 3 (seconds) as shown in Fig. 16; however, in the same manner as in the first embodiment, the respective threshold values may be determined depending on the velocities. That is, in the case where a fast operation is being carried out, since the force applied by the person 4 tends to fluctuate, by setting the threshold value to a greater value, it is possible to make a correction only in a state where the operation is being carried out stably. Moreover, in the case where it is difficult to apply so much force or to apply a force for a long period of time, as is often the case with an elder person or a child, the table $ID_S$ may be switched so that by setting the respective threshold values to smaller values, it becomes possible to make a correction without the necessity of applying a great force for a long period of time. With respect to determination as to whether it is "during a fast operation" or not, a table for use in the determination of "during a fast operation" is formed preliminarily, and upon recognition by the person 4 that it is "during a fast operation", switching may be made to the table for use in "during a fast operation". Moreover, in the case where a child carries out an operation, upon setting the fact of "being a child" by using the data input IF, as described before, switching may be made to a table for a child, preliminarily prepared.

Moreover, in the case where a correction can be made without causing a hand shake too much depending on jobs, by switching table IDs for each job ID, a threshold value suitable for the corresponding job can be set.

(Third Embodiment)

Since the basic structure of a control apparatus of the robot arm in a third embodiment of the present invention is the same as that of the first embodiment, explanations for the common portions will be omitted, and the following description will discuss only different portions in detail.

In the same manner as in the first embodiment, as shown in Fig. 8A, the following explanation will be given by exemplifying a mixing job of the pot 3 carried out by using the robot system 1.

-Operation Correcting Information Database-

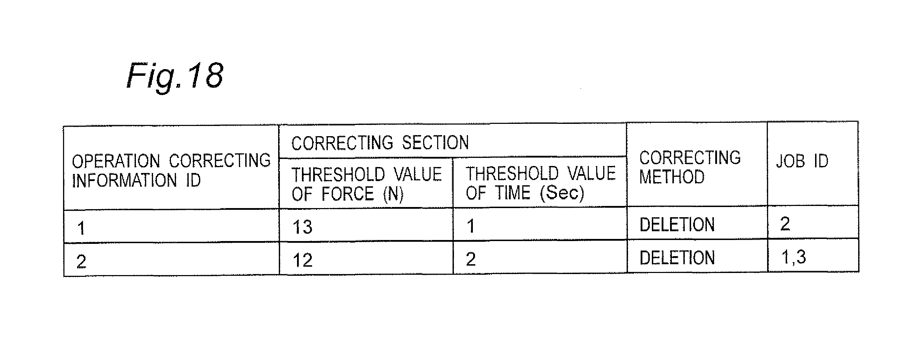

Fig. 18 shows the operation correcting database 18. Specific pieces of operation correcting information are designed to include: operation correcting information ID numbers (see columns of "operation correcting information ID" of Fig. 18) corresponding to IDs used for identifying pieces of operation correcting information and information relating to correcting sections (see "correcting sections" of Fig. 18), that is, information relating to a threshold value of a force in the case where the person 4 applies a force midway during the start of the operation by the operation information (see "threshold value of force" in Fig. 18), information relating to a threshold value of time indicating how long the force that is the "threshold value of force" or more is applied by the person 4 (see "threshold value of time" in Fig. 18), information relating to a correcting method of the operation information (see "correcting method" in Fig. 18), and information relating to "job IDs" (see columns of "job IDs" in Fig. 18) corresponding to identification numbers that are used for identifying which job the operation correcting information indicated by the "operation correcting information ID" is applied to. Each "job ID" corresponds to any one of values in the "job $ID_S$" in the operation information database 17, and in the case where correcting information is applicable to a plurality of jobs, as shown in "2" of the "operation correcting information ID" of Fig. 18, a plurality of IDs, such as "1, 3", may be stored therein.

-Alternation Condition Setting Unit and Operation Correcting Unit-

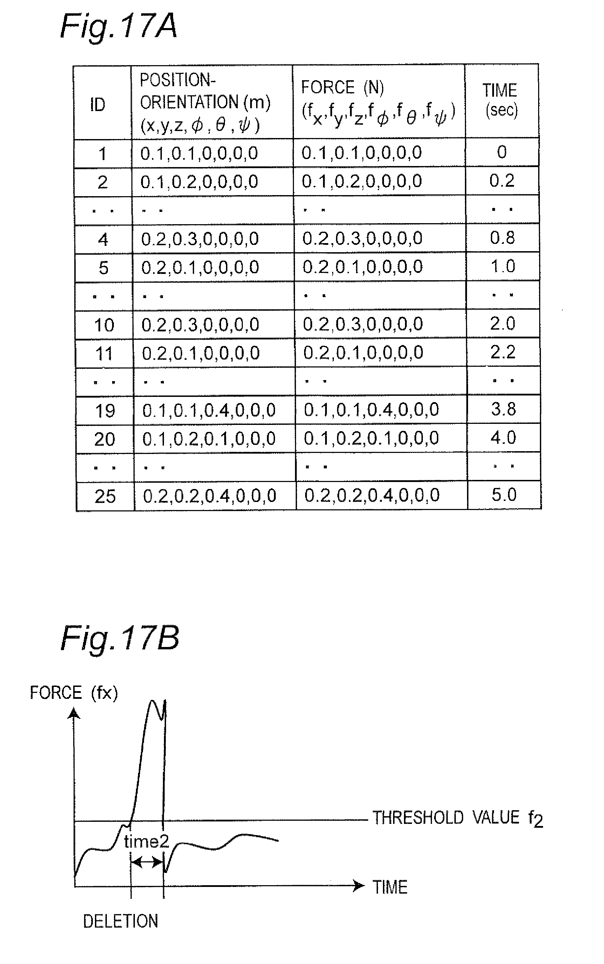

In the same manner as in the first embodiment, the operation correcting unit 20 allows the person 4 to select a job to be desirably executed by the robot arm 5 among jobs relating to "job IDs" of the jobs in the operation information database 17 through the data input IF 26 and to input the selected information to the operation instruction unit 27 so as to be specified. When the operation instruction unit 27 receives the instruction for the job selection of the job having the "job ID" specified by the person 4 through the data input IF 26, the operation instruction unit 27 gives an instruction for the job selection to the alternation condition setting unit 82 and the operation correcting unit 20 so that the corresponding job is selected. The operation correcting unit 20 sets the control mode based upon the "flag" of the selected job among the jobs in the operation information database 17. Moreover, the operation correcting unit 20 gives an instruction to the control parameter managing unit 21 so that an operation is carried out in the set control mode. When the person 4 inputs an instruction for starting the correction to the operation instruction unit 27 through the data input IF 26, the operation correcting unit 20 sets a control mode based upon the "correcting parameter flag" of the operation information database 17 through the operation instruction unit 27, and gives an instruction to the control parameter managing unit 21 so as to carry out an operation in the set control mode. The alternation condition setting unit 82 acquires the force applied to the hand of the robot arm 5 and the hand position and orientation of the robot arm 5 from the point of time when the person 4 started the correction until the completion thereof, every certain fixed period of time (for example, every 0.2 sec.). For example, Fig. 17A shows data acquired by the alternation condition setting unit 82 as a specific example. In Fig. 17A, "ID" represents an identification number used for identifying each of data acquired by the alternation condition setting unit 82, "position-orientation" represents the position and orientation of the hand of the robot arm 5 acquired by the alternation condition setting unit 82, "force" represents a force to be applied to the robot arm 5, acquired by the alternation condition setting unit 82, and "time" represents a relative period of time from the start of the correction by the person 4, with the starting point of time being set to 0.

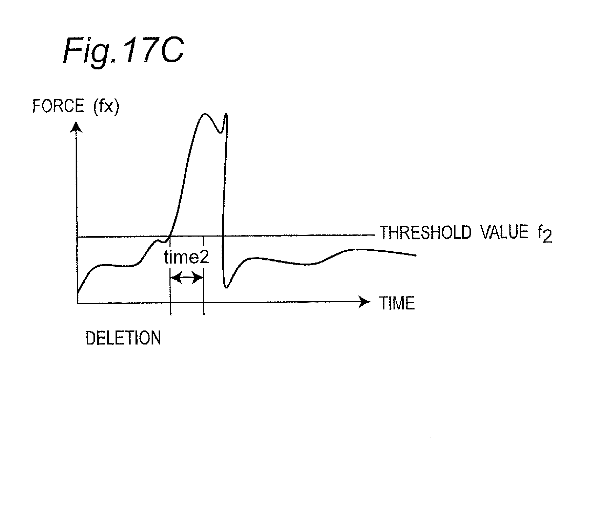

Next, the operation correcting unit 20 retrieves operation correcting information having the same ID as the "job ID" that is currently in operation in the operation correcting information database 18. In this example, since the job having "2" in the "job ID" of the operation information database 17 of Fig. 4B is being carried out, the operation correcting information having "2" in the "job ID" corresponds to "1" in the "operation correcting information ID" in Fig. 18. As the operation correcting information having "1" in the "operation correcting information ID", the alternation condition setting unit 82 acquires information having "13(N)" in the "threshold value of force" of the "correcting section", "1 (second)" in the "threshold value of time", and "deletion" in the "correcting method". By using these pieces of operation correcting information, the alternation condition setting unit 82 corrects the data of Fig. 17A previously acquired. More specifically, among the data thus acquired, the operation correcting unit 20 carries out a correction by using the correcting method described in the "correcting method" (in this case, "deletion") on sections in which the period of time during which the information relating to force is the "threshold value of force" or more are continuously connected for the "threshold value of time" or less of the operation correcting information. Fig. 17B is a graph in which the time of Fig. 17A is plotted on the axis of abscissas with only the x-component of the force being plotted on the axis of ordinates, and Fig. 17C is a graph in which the time of Fig. 17A is plotted on the axis of abscissas with only the y-component of the force being plotted on the axis of ordinates. A threshold value $f_2$ of Figs. 17B and Fig. 17C corresponds to the "threshold value of force" of the operation correcting information, and time "time 2" corresponds to the "threshold value of time" of the operation correcting information. In the case of Fig. 17B, there is a section having a force that is the "threshold value of force" or more, and continues for a period of time corresponding to the "time 2" or less; however, in the case of Fig. 17C, there is a deviation between the section having a force that is the "threshold value of force" or more and the section having a force that is the "threshold value of force" or more deviate from each other, with the result that the respective components have different sections in some cases. In such a case where any one of the force components is the "threshold value of force" or more, and continues for a period of time corresponding to the "time 2" or less, the same section of the other components is deleted by the operation correcting unit 20. By storing the acquired hand position and orientation in the operation information database 17 by using the operation storage unit 15, the operation correcting unit 20 corrects the operation into such an operation as to carry out a mixing process circularly, with the ladle 9 at the tip of the robot arm being shifted up and down, as shown in Fig. 8C. Moreover, by carrying out the correction by the use of the operation correcting information, upon correction by the person 4 during an operation, only the section in which the force of the person 4 used for manipulating the robot arm 5 has a value that is a certain value or more, with the force being exerted for a certain fixed period of time or less is deleted so that, for example, by deleting the section at which a great force is erroneously applied to the robot arm instantaneously, in such a case where the person 4 accidentally collides with the robot arm 5, it is possible to prevent the operation correcting section 20 from making a correction on the section at which the collision to the robot arm 5 has occurred.

Additionally, in the case where, depending on the jobs, there are many jobs of the person 4 and, for example, many collisions occur by a person with a weak force, such as a child or the like, by switching the table ID for each of the job IDs so as to set the threshold value to a smaller value, it is possible to set a threshold value that is suitable for the job. Moreover, in the case where a person with a weak force, such as a child, carries out an operation, upon setting the fact of "being a child" by using the data input IF, as described before, switching may be made to a table for a child, preliminarily prepared.

(Fourth Embodiment)

Since the basic structure of a control apparatus of the robot arm in a fourth embodiment of the present invention is the same as that of the first embodiment, explanations for the common portions will be omitted, and the following description will discuss only different portions in detail.

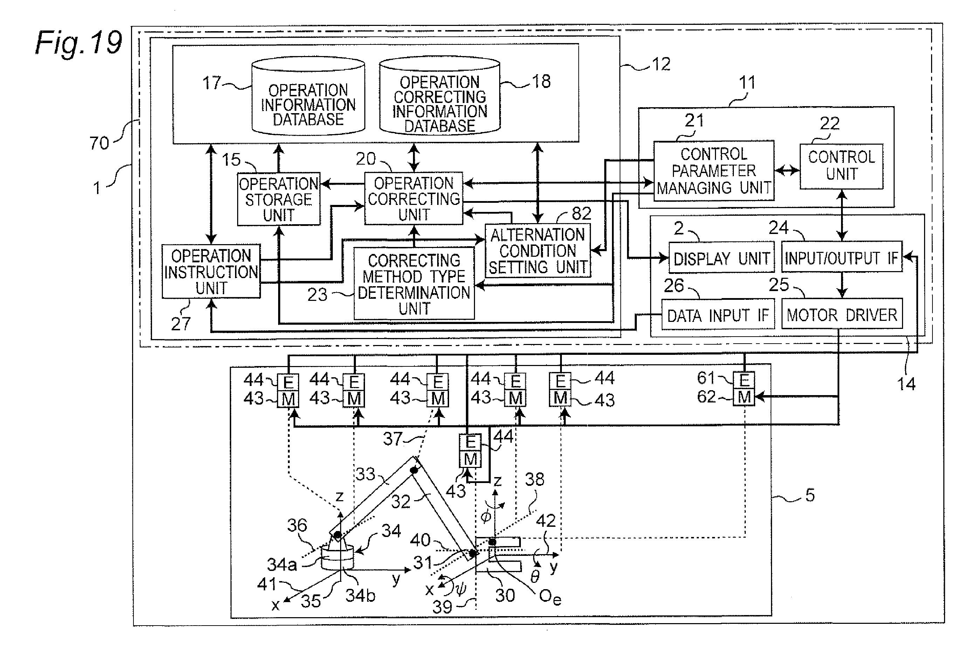

Fig. 19 is a view showing specific structures of a robot arm 5 that is a target to be controlled and a control apparatus 70 for the robot arm 5, which form the robot system 1 in the fourth embodiment. In Fig. 19, since the robot arm 5, the control apparatus main body unit 11, the peripheral apparatus 14, the operation instruction unit 27, and the operation information database 17 are the same as those of the first embodiment, the description thereof will be omitted.

The following description will be given by exemplifying a job in which a mixing job is carried out while rubbing the bottom of a pot 3 by using the robot system 1, as shown in Fig. 10.

Since the respective items of Fig. 4A are the same as those of the first embodiment, the explanations thereof will be omitted. For example, "1" of the "job ID" of Fig. 4A indicates a job for carrying out a mixing job circularly on an x-y plane (plane along the pot bottom surface), while the pot bottom is being rubbed with the ladle 9, with a force corresponding to 5[N] being applied as its z-axis component.

-Operation Correcting Information Database-

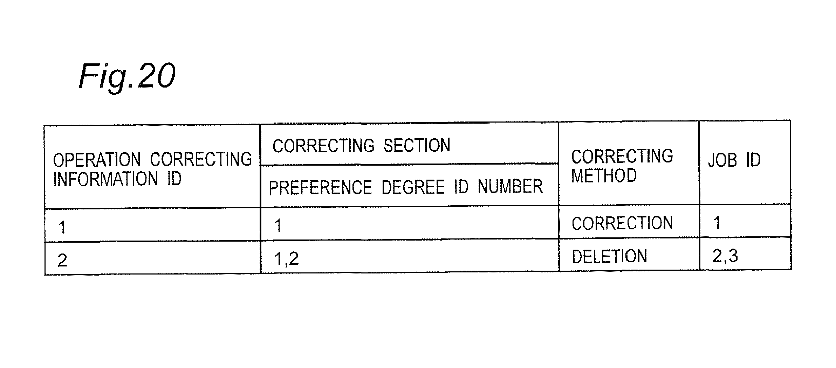

Fig. 20 shows the operation correcting database 18. Specific pieces of operation correcting information are designed to include: operation correcting information ID numbers (see columns of "operation correcting information ID" of Fig. 20) corresponding to $ID_S$ used for identifying pieces of operation correcting information, information relating to correcting sections (see columns of "correcting sections" of Fig. 20), that is, ID numbers for identifying pieces of information relating the degree of preference, that correspond to numbers relating to an order of corrections of correction types determined by a correcting method type determination unit 23 (see "degree of preference ID numbers" of Fig. 20), information relating to a correcting method for the operation information (see columns of "correcting method" of Fig. 20), and "job IDs" that are identification numbers used for identifying which job the operation correcting information indicated by the "operation correcting information ID" should be applied to (see columns of "job IDs" of Fig. 20). Each "job ID" corresponds to any one of values in the "job IDs" in the operation information database 17, and in the case where correcting information is applicable to a plurality of jobs, as shown in "2" of the "operation correcting information ID" of Fig. 18, a plurality of IDs, such as "2, 3", may be stored therein.

-Correction Type Determination Unit-

A correction type determination unit 23 in Fig. 19 determines which type of parameters is being corrected by the person 4, when the person 4 tries to correct the position, or force, or velocity in each of the respectively different directions, described in the operation parameter of the "operation parameter flag" of the operation information database 17, and outputs the corresponding parameter type. For example, by correcting a plurality of parameters, the correction type determination unit 23 determines a parameter of the correction type having the greatest variation in operation information that has been varied. The variation indicates how much % of operation information is changed relative to the original operation information, and is calculated based upon {(operation information after a variation - operation information prior to the variation/operation information prior to the variation} × 100. For example, in the case where the velocity during an operation is 0.3 (m/s), if the velocity is varied to 0.4 (m/s) by the correction of the person 4, the variation is represented by {(0.4) - 0.3)/0.3} × 100, which corresponds to 30%. Moreover, in the case where the value of a force is varied from 4 (N) to 8(N) together with the velocity, the variation is represented by {(8 - 4)/4} × 100, which corresponds to 10%. In this example, the values of the velocity and force are varied, and the correcting parameter type determination unit 23 determines that, of the two parameters, the parameter that is varied most corresponds to "force" so that this is determined as the correcting parameter type.

Additionally, the type is determined by using the variation in operation information in this case; however, this may be preliminarily determined for each of the operation IDs of the operation information database of Figs. 4A and 4B. For example, in the case where a correction is made so that the operation information after the correction corresponds to operation information corrected from the operation information prior to the correction, if all the parameter types, that is, the position, force, and velocity, are varied, the determination may be made to the type of the position so as to correct only the position, or if only the force and velocity are varied, the determination may be made to the type of the force.

-Alternation Condition Setting Unit and Operation Correcting Unit-

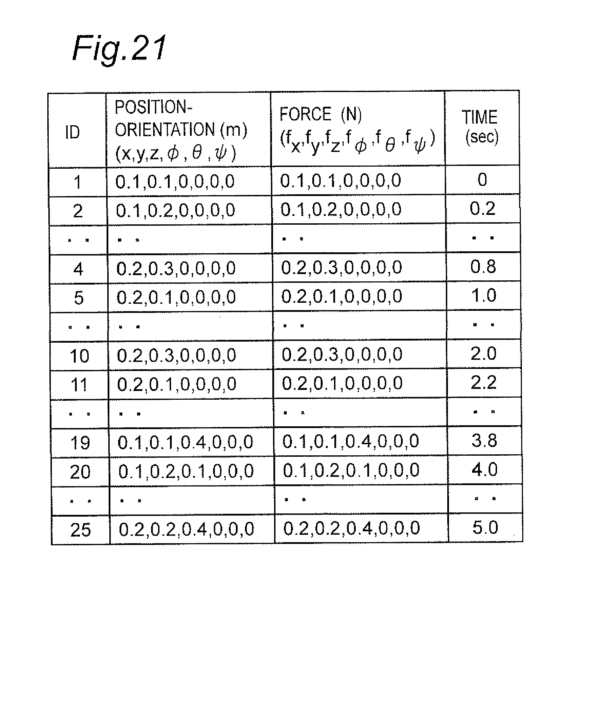

In the same manner as in the first embodiment, the operation correcting unit 20 allows the person 4 to select a job to be desirably executed by the robot arm 5 among jobs relating to "job $ID_S$" of the jobs in the operation information database 17 through the data input IF 26 and to input the selected information to the operation instruction unit 27 so as to be specified. When the operation instruction unit 27 receives the instruction for the job selection of the job having the "job ID" specified by the person 4 through the data input IF 26, the operation instruction unit 27 gives an instruction for the job selection to the alternation condition setting unit 82 and the operation correcting unit 20 so that the corresponding job is selected (in this example, "1" is selected as the "job ID"). The operation correcting unit 20 sets the control mode based upon the "flag" of the selected job among the jobs in the operation information database 17. Moreover, the operation correcting unit 20 gives an instruction to the control parameter managing unit 21 so that an operation is carried out in the set control mode. When the person 4 inputs an instruction for starting the correction to the operation instruction unit 27 through the data input IF 26, the operation correcting unit 20 sets a control mode based upon the "correcting parameter flag" of the operation information database 17 through the operation instruction unit 27, and gives an instruction to the control parameter managing unit 21 so as to carry out an operation in the set control mode. The operation correcting unit 20 acquires a force applied to the hand of the robot arm and the hand position and orientation of the robot arm 5 from the point of time when the person 4 started the correction until the completion thereof, every certain fixed period of time (for example, every 0.2 sec.). Fig. 21 shows data acquired by the operation correcting unit 20 as a specific example. In the case where, upon carrying out a mixing job, the person 4 attempts to correct the operation of the robot arm 5 so as to rub the bottom of the pot 3 more strongly by correcting the force in the z-axis component, the person 4 grabs the robot arm 5, and applies a force thereto more strongly toward the bottom of the pot 3. In such a case, the correction might be erroneously made to change the x position or the y position on the xy plane, or the correction might be erroneously made to set the velocity slower, although the x position and the y position are the same (more specifically, "time" of the operation information becomes longer), even when no attempt is made to correct the operation (more specifically, information relating to the position) on the xy plane (plane along the pot bottom surface). In order to prevent such an erroneous correction due to an erroneous operation, the correction is carried out based upon the "correcting method" stored in the operation correcting method database 18, with respect to the correction type determined by the correction type determination unit 23. More specifically, the correction is carried out by using the correcting method ("correction" in Fig. 20) described in the columns of "correcting method" of Fig. 20. For example, in the case where the force is determined as a parameter to be corrected by the correction type determination unit 23 among the force, position, and velocity (in the case of altering only the time, without altering the position), the correction is made on the force parameter by using the correcting method ("correction" in Fig. 20) described in the columns of "correcting method" of Fig. 20. Additionally, in this example, since the correction type determination unit 23 can determine not the job ID, but the type for each of the operation IDs, it is possible to carry out the correction, while the type of the parameter to be corrected is being switched for each of the operation IDs for the jobs.

As described above, in the case where, upon applying a force more strongly toward the bottom of the pot 3 with the robot arm 5 being grabbed by the person 4, the x position or the y position on the xy plane is erroneously changed, or the correction is erroneously made to set the velocity slower, although the x position and the y position are the same (more specifically, "time" of the operation information becomes longer), even when no attempt is made to correct the operation on the xy plane, it is possible to prevent the erroneous correction due to an erroneous manipulation by the person 4 by preventing the parameters other than that of force from being corrected.

(Fifth Embodiment)

Since the basic structure of a control apparatus of the robot arm in a fifth embodiment of the present invention is the same as that of the first embodiment, explanations for the common portions will be omitted, and the following description will discuss only different portions in detail.

The following description will be given by exemplifying a job in which a mixing job is carried out while rubbing the bottom of a pot 3 by using the robot system 1, as shown in Fig. 10.

Since the respective items of Figs. 4A and 4B are the same as those of the first embodiment, the explanations thereof will be omitted. In Figs. 4A and 4B, "1" of the "job ID" indicates a job for carrying out a mixing job circularly on an x-y plane (plane along the pot bottom surface), while the pot bottom is being rubbed, with a force corresponding to 5[N] being applied as its z-axis component (to the pot bottom).

-Operation Correcting Information Database-

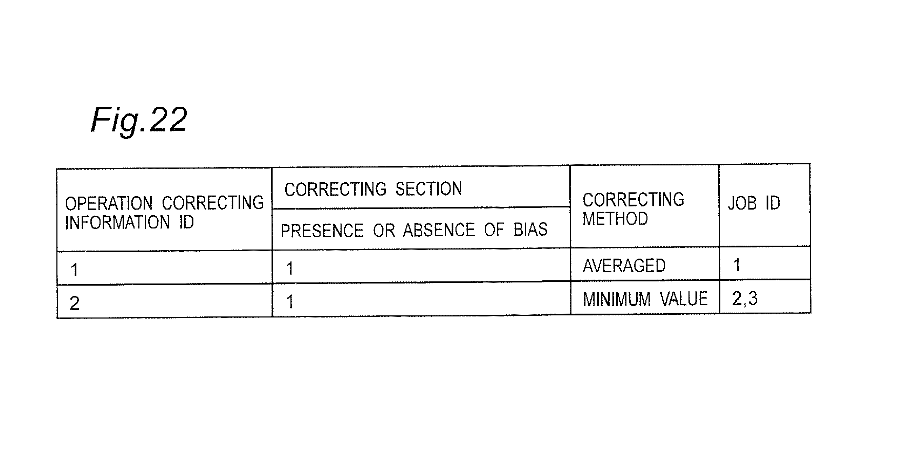

Fig. 22 shows the operation correcting database 18. Specific pieces of operation correcting information are designed to include: operation correcting information ID numbers (see columns of "operation correcting information ID" of Fig. 22) corresponding to IDs used for identifying pieces of operation correcting information, information relating to correcting sections (see columns of "correcting section" of Fig. 22) corresponding to information relating to the presence or absence of a bias in an operation corrected by the person 4 with his or her force applied thereto (see columns of "presence or absence of bias" of Fig. 22: in this case, "1" represents "presence of a bias", while "0" represents "absence of a bias"), information relating to a correcting method for operation information (see columns of "correcting method" of Fig. 22), and "job IDs" that are identification numbers used for identifying which job the operation correcting information indicated by the "operation correcting information ID" should be applied to (see columns of "job IDs" of Fig. 22). Each "job ID" corresponds to any one of values in the "job IDs" in the operation information database 17, and in the case where correcting information is applicable to a plurality of jobs, as shown in "2" of the "operation correcting information ID" of Fig. 22, a plurality of IDs, such as "2, 3", may be stored therein.

-Alternation Condition Setting Unit and Operation Correcting Unit-

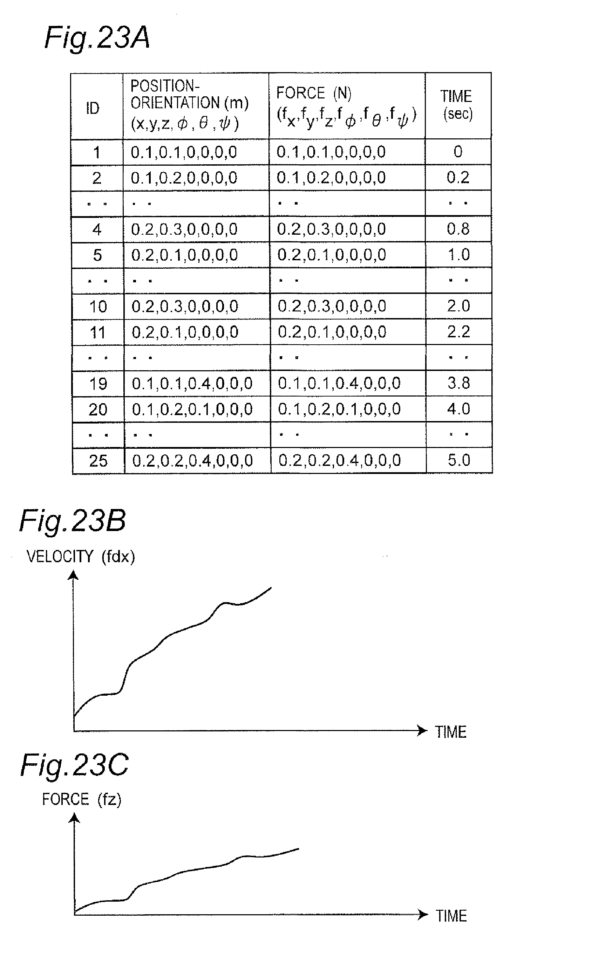

In the same manner as in the first embodiment, the operation correcting unit 20 allows the person 4 to select a job to be desirably executed by the robot arm 5 among jobs relating to "job IDs" of the jobs in the operation information database 17 through the data input IF 26 and to input the selected information to the operation instruction unit 27 so as to be specified. When the operation instruction unit 27 receives the instruction for the job selection of the job having the "job ID" specified by the person 4 through the data input IF 26, the operation instruction unit 27 gives an instruction for the job selection to the alternation condition setting unit 82 and the operation correcting unit 20 so that the corresponding job is selected. The operation correcting unit 20 sets the control mode based upon the "flag" of the selected job among the jobs in the operation information database 17. Moreover, the operation instruction unit 27 gives an instruction to the control parameter managing unit 21 so that an operation is carried out in the set control mode. When the person 4 inputs an instruction for starting the correction to the operation instruction unit 27 through the data input IF 26, the operation correcting unit 20 sets a control mode based upon the "correcting parameter flag" of the operation information database 17 through the operation instruction unit 27, and gives an instruction to the control parameter managing unit 21 so as to carry out an operation in the set control mode. The alternation condition setting unit 82 acquires a force applied to the hand of the robot arm 5 and the hand position and orientation of the robot arm 5 from the point of time when the person 4 started the correction until the completion thereof, every certain fixed period of time (for example, every 0.2 sec.). Fig. 23A shows data acquired by the alternation condition setting unit 82 as a specific example. In Fig. 23A, "ID" represents an identification number for identifying respective data acquired by the alternation condition setting unit 82, "position-orientation" represents the position and orientation of the hand of the robot arm 5 acquired by the alternation condition setting unit 82, "force" represents a force to be applied to the robot arm 5, acquired by the alternation condition setting unit 82, and "time" represents a relative period of time from the start of the correction by the person 4, with the starting point of time being set to 0.

Next, the operation correcting unit 20 retrieves operation correcting information having the same ID as the "job ID" that is currently in operation in the operation correcting information database 18. In this example, since the job having "1" in the "job ID" of the operation information database 17 of Fig. 4A is being carried out, the operation correcting information having "1" in the "job ID" corresponds to "1" in the "operation correcting information ID" in Fig. 22. As the operation correcting information having "1" in the "operation correcting information ID", the alternation condition setting unit 82 acquires information having "1" in the "presence or absence of a bias" of the "correcting section", and "averaged" in the "correcting method". By using these pieces of operation correcting information, the operation correcting unit 20 corrects the data of Fig. 23A previously acquired.

Next, since the "presence or absence of a bias" is "1" in the operation correcting information, the alternation condition setting unit 82 examines whether or not any bias is present in the data of Fig. 23A previously acquired. In this case, "bias" refers to a state in which, when the velocity of the position and orientation of the operation information is accelerated or decelerated, the force applied to the robot arm 5 by the person 4 is strengthened or weakened at the same timing. For example, in the case where, midway during the acceleration or deceleration of the hand position and orientation in the x,y components of the robot arm 5 in an operation of the robot arm 5, the person 4 attempts to correct the force component of the z-component to a constant value, the force in the z-component is erroneously corrected to an increased value or a reduced value, in a manner so as to follow the accelerating or decelerating direction of the x, y of the robot arm 5. In order to prevent an erroneous correction due to this erroneous operation, the operation correcting unit 20 carries out an operation correction based upon the operation correcting information.

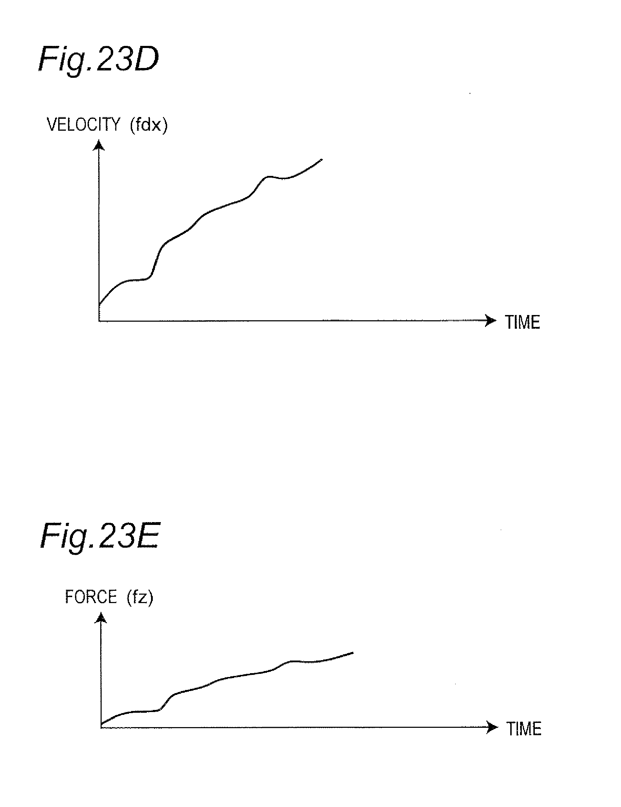

First, the alternation condition setting unit 82 calculates the velocity of the position and orientation from the operation information of Fig. 4A. The velocity represents an amount of movement of the position or orientation per unit time. More specifically, supposing that the position at the time "time 1" is "$r_{d1}$" and that the position at the time "time 2" is "$r_{d2}$", the velocity is indicated by $(r_{d2} - r_{d1})/(time\ 2 - time\ 1)$. With respect to a job currently being executed, the alternation condition setting unit 82 executes this calculation on each of the position and orientation components. Fig. 23B is a graph in which the velocity of only the x-component of the position and orientation of the robot arm 5 that is currently being operated in the operating information is plotted on the axis of abscissas, with the time being plotted on the axis of ordinates. Fig. 23C is a graph in which the force of Fig. 23A is plotted on the axis of abscissas, with the time being plotted on the axis of ordinates. In the case where, upon comparison with Figs. 23B and 23C by the alternation condition setting unit 82, the alternation condition setting unit 82 determines that, when the velocity of Fig. 23B is accelerated, the force in Fig. 23C is increased, the alternation condition setting unit 82 determines that there is a bias. In the same manner, the alternation condition setting unit 82 determines that, when the velocity is decelerated as shown in Fig. 23D, the force is weakened as shown in Fig. 23E, the alternation condition setting unit 82 also determines that there is a bias. Upon determination by the alternation condition setting unit 82 that there is a bias, the alternation condition setting unit 82 calculates the average of the respective components of pieces of force information of Fig. 23A. By allowing the operation storage unit 15 to rewrite the operation information of the operation information database 17 with the force information calculated by the operation correcting unit 20, the operation correcting unit 20 makes it possible to carry out the correction.

Additionally, this example has exemplified an arrangement in which a correction is made by carrying out the averaging process in the alternation condition setting unit 82; however, in the case where the description "minimized" is given to the "correcting method" in the operation correcting information of Fig. 22, after having been determined by the alternation condition setting unit 82 that there is a bias, the values of all the forces may be corrected by the operation correcting unit 20 by using the minimum value in the respective components of pieces of force information in Fig. 23A.

As described above, in the case where, midway during the acceleration or deceleration of the hand position and orientation in the x,y components of the robot arm 5, the person 4 attempts to correct the force component of the z-component to a constant value by using the operation correcting unit 20, it is possible to prevent the force in the z-component from being erroneously corrected to an increased value or a reduced value, in a manner so as to follow the accelerating or decelerating direction of the x, y components of the robot arm 5.

Additionally, the correction is carried out on the force information in this example; however, even in the case where, midway during an increasing or decreasing state of the force in the z-component of the robot arm 5, upon correcting the position and velocity of the x,y components, the velocity of each of the x,y components is decelerated or accelerated in a manner so as to follow the z-component of the robot arm 5, the operation correcting unit 20 can carry out an operation correction based upon the operation correcting information in the same manner.

(Sixth Embodiment)

Since the basic structure of a control apparatus of the robot arm in a sixth embodiment of the present invention is the same as that of the first embodiment, explanations for the common portions will be omitted, and the following description will discuss only different portions in detail.

In the same manner as in the first embodiment, as shown in Fig. 8A, the following explanation will be given by exemplifying a mixing job of the pot 3 carried out by using the robot system 1.

-Operation Correcting Information Database-

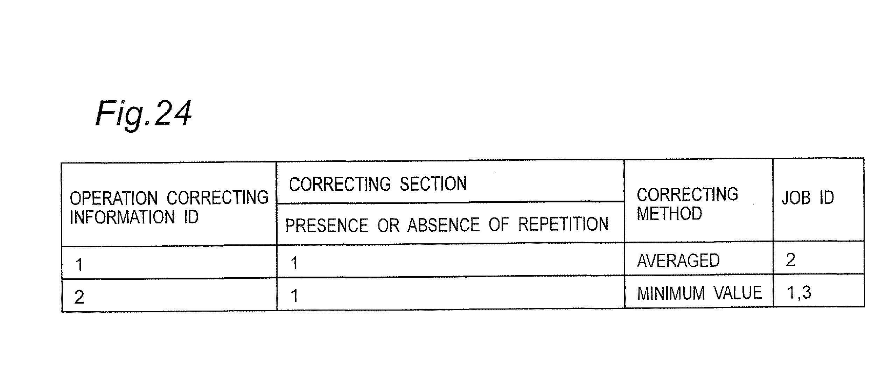

Fig. 24 shows the operation correcting database 18. Specific pieces of operation correcting information are designed to include: operation correcting information ID numbers (see columns of "operation correcting information ID" of Fig. 24) corresponding to IDs used for identifying pieces of operation correcting information, information relating to correcting sections (see "correcting sections" of Fig. 24) that corresponds to information relating to a presence or absence of repetition of an operation corrected by a force applied by the person 4 (see columns of "presence or absence of repetition" in Fig. 24: in this case, "1" represents "presence of repetition", while "0" represents "absence of repetition"), information relating to a correcting method of the operation information (see "correcting method" in Fig. 24), and information relating to "job $ID_S$" (see columns of "job $ID_S$" in Fig. 24) corresponding to identification numbers that are used for identifying which job the operation correcting information indicated by the "operation correcting information ID" is applied to. Each "job ID" corresponds to any one of values in the "job IDs" in the operation information database 17, and in the case where correcting information is applicable to a plurality of jobs, as shown in "2" of the "operation correcting information ID" of Fig. 16, a plurality of IDs, such as "1, 3", may be stored therein.

-Alternation Condition Setting Unit and Operation Correcting Unit-

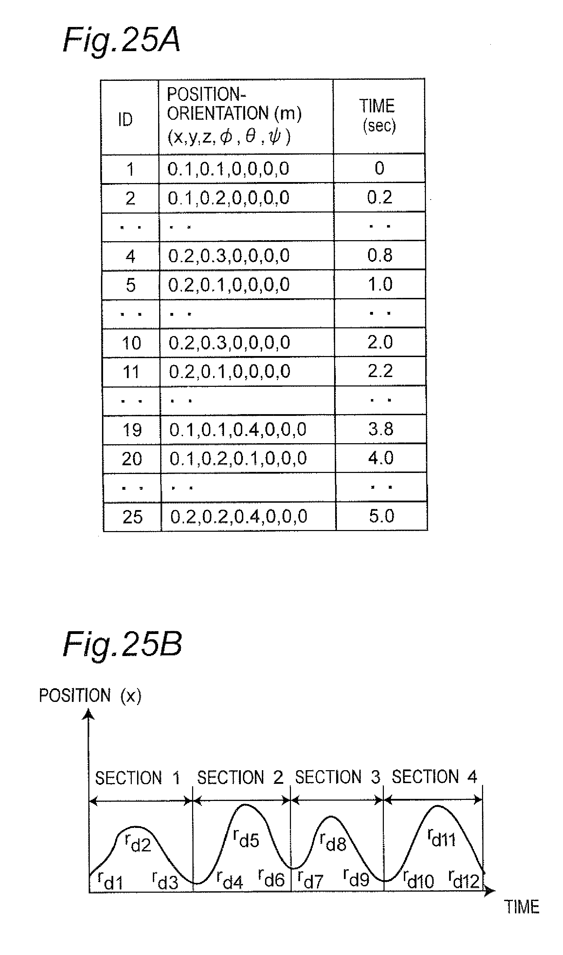

In the same manner as in the first embodiment, the operation correcting unit 20 allows the person 4 to select a job to be desirably executed by the robot arm 5 among jobs relating to "job IDs" of the jobs in the operation information database 17 and to input the selected information to the operation instruction unit 27 so as to be specified. When the operation instruction unit 27 receives the instruction for the job selection of the job having the "job ID" specified by the person 4 through the data input IF 26, the operation instruction unit 27 gives an instruction for the job selection to the alternation condition setting unit 82 and the operation correcting unit 20 so that the corresponding job is selected. The operation correcting unit 20 sets the control mode based upon the "flag" of the selected job among the jobs in the operation information database 17. Moreover, the operation correcting unit 20 gives an instruction to the control parameter instruction unit 27 so that an operation is carried out in the set control mode. When the person 4 inputs an instruction for starting the correction to the operation instruction unit 27 through the data input IF 26, the operation correcting unit 20 sets a control mode based upon the "correcting parameter flag" of the operation information database 17 through the operation instruction unit 27, and gives an instruction to the control parameter managing unit 21 so as to carry out an operation in the set control mode. The alternation condition setting unit 82 acquires the hand position and orientation of the robot arm 5 from the point of time when the person 4 started the correction until the completion thereof, every certain fixed period of time (for example, every 0.2 sec.). Fig. 25A shows data acquired by the alternation condition setting unit 82 as a specific example. In Fig. 25A, "ID" represents an identification number used for identifying each of data acquired by the alternation condition setting unit 82, "position-orientation" represents the position and orientation of the hand of the robot arm 5 acquired by the alternation condition setting unit 82, and "time" represents a relative period of time from the start of the correction by the person 4, with the starting point of time being set to 0.

Next, the operation correcting unit 20 retrieves operation correcting information having the same ID as the "job ID" that is currently in operation in the operation correcting information database 18. In this example, since the job having "2" in the "job ID" of the operation information database 17 of Fig. 4B is being carried out, the operation correcting information having "2" in the "job ID" corresponds to "1" in the "operation correcting information ID" in Fig. 24. As the operation correcting information having "2" in the "job ID", the alternation condition setting unit 82 acquires information having "1" in the "presence or absence of repetition" of the "correcting section" and "averaged" in the "correcting method" in Fig. 24. By using these pieces of operation correcting information, the alternation condition setting unit 82 corrects the data of Fig. 25A previously acquired.

Next, since the "presence or absence of repetition" in the operation correcting information is "1", the alternation condition setting unit 82 examines whether or not any repetition exists (in other words, whether or not any periodicity exists) in the data of Fig. 25A previously acquired. In this case, the "repetition" means that any one of pieces of information of the position or orientation or velocity or force of Fig. 25A, generated by a force application to the robot arm 5 by the person 4, is regularly (periodically) repeated. For example, in the operation of the robot arm 5, as shown in Fig. 8A, suppose that midway during a mixing job in the pot 3 by the robot system 1, the person 4 corrects the position of the z-component of the hand 30 of the robot arm 5 so as to be moved up and down by using the operation correcting unit 20, as shown in Fig. 8B. In this case, the person 4 repeatedly carries out operations of the robot arm 5 downward from above and upward from below, several times, and the respective positions and orientations are fluctuated in the repetitive operations, depending on the degrees of forces applied by the person 4. In order to prevent such fluctuations in the repetitive operations, the operation correcting unit 20 carries out an operation correction based upon the operation correcting information.

First, the alternation condition setting unit 82 calculates and finds a repetitive section from the operation information of Fig. 25A. Fig. 25B indicates an x-component of the position and orientation of Fig. 25A. In this case, the "repetitive section" refers to a section that is regularly repeated as shown by "section 1" to "section 4" of Fig. 25A, although slight fluctuations are present. More specifically, the alternation condition setting unit 82 compares a plurality of continuous "position-orientation" data (for example, position and orientation target vectors) of Fig. 25A with respective other "position-orientation" data (for example, position-orientation target vectors). For example, suppose that continuous position and orientation target vectors are defined as $r_{d1}$, $r_{d2}$, and $r_{d3}$. Moreover, suppose that the next continuous position and orientation target vectors are defined as $r_{d4}$, $r_{d5}$, and $r_{d6}$. The alternation condition setting unit 82 carries out calculations on $r_{d1} - r_{d4} = \Delta r_{d1}$, $r_{d2} - r_{d5} = \Delta r_{d2}$ and $r_{d3} - r_{d6} = \Delta r_{d3}$, and in the case where all the $\Delta r_{d1}$, $\Delta r_{d2}$, and $\Delta r_{d3}$ are a threshold value or less, the alternation condition setting unit 82 determines that certain portions of the repetitive sections are coincident with each other. In the case where no portions of the repetitive sections are coincident with each other, next, the continuous position and orientation target vectors shifted backward by one are defined as $r_{d5}$, $r_{d6}$, and $r_{d7}$, and the alternation condition setting unit 82 carries out calculations on $r_{d1} - r_{d5} = \Delta r_{d1}$, $r_{d2} - r_{d6} = \Delta r_{d2}$, and $r_{d3} - r_{d7} = \Delta r_{d3}$; thus, in the case where all the $\Delta r_{d1}$, $\Delta r_{d2}$, and $\Delta r_{d3}$ are the threshold value or less, the alternation condition setting unit 82 determines that certain portions of the repetitive sections are coincident with each other. In the case where no portions of the repetitive sections are coincident with each other, in the same manner, next, the continuous position and orientation target vectors shifted backward by one are compared with $r_{d1}$, $r_{d2}$, and $r_{d3}$ by the alternation condition setting unit 82 so as to be determined. By using the method described above, the alternation condition setting unit 82 carries out calculations on each of the section 1, section 2, section 3, and section 4 in Fig. 25B.

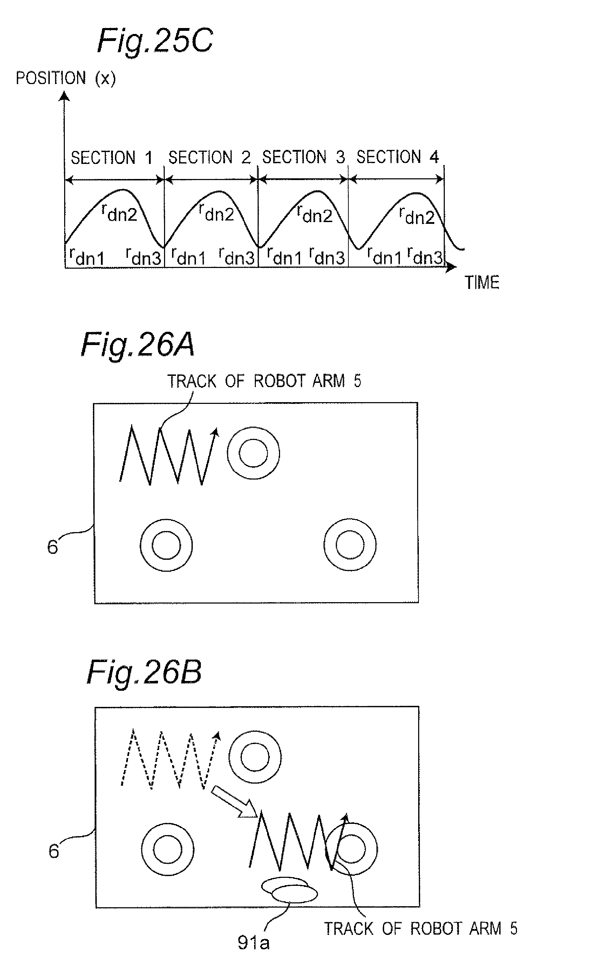

Next, since "averaged" is given to the correcting method of the operation information of Fig. 24, the alternation condition setting unit 82 carries out the following calculations. That is, in the case where each of differences among $r_{d1}$ of section 1, $r_{d4}$ of section 2, $r_{d7}$ of section 3, and $r_{d10}$ of section 4 is a threshold value or less, an average value $r_{dn1}$ of $r_{d1}$, $r_{d4}$, $r_{d7}$, and $r_{d10}$ is defined as coordinates of the section after the correction. In the same manner, in the case where each of differences among $r_{d2}$ of section 1, $r_{d5}$ of section 2, $r_{d8}$ of section 3, and $r_{d11}$ of section 4 is a threshold value or less, an average value $r_{dn2}$ of $r_{d2}$, $r_{d5}$, $r_{d8}$, and $r_{d11}$ is defined as coordinates of the section after the next correction. In the same manner, in the case where each of differences among $r_{d3}$ of section 1, $r_{d6}$ of section 2, $r_{d9}$ of section 3 and $r_{d12}$ of section 4 is a threshold value or less, an average value $r_{dn3}$ of $r_{d3}$, $r_{d6}$, $r_{d9}$, and $r_{d12}$ is defined as coordinates of the section after the next correction. Fig. 25C illustrates the data after the correction. By using ($r_{dnl}$, $r_{dn2}$, and $r_{dn3}$) as one section, the fluctuations of the repetition by the person 4 can be prevented by repeating this section.

Additionally, this example is described so that the operation correcting unit 20 carries out a correction by using an averaged value; however, in the case where, a description "minimized" is given to the "correcting method" of the operation correcting information of Fig. 24, after determination by the alternation condition setting unit 82 that repetition is present, instead of calculating the average of Fig. 25A in the alternation condition setting unit 82, the minimum value among $r_{d1}$, $r_{d4}$, $r_{d7}$, and $r_{d10}$ is set to $r_{dn1}$, the minimum value among $r_{d2}$, $r_{d5}$ $r_{d8}$, and $r_{d11}$ is set to $r_{dn2}$ and the minimum value among $r_{d3}$, $r_{d6}$, $r_{d9}$, and $r_{d12}$ is set to $r_{dn3}$, and these values may be calculated by the alternation condition setting unit 82.

With the above-mentioned arrangement, it becomes possible to correct fluctuations in the repetitive operations due to degrees of an applied force by the person 4 by carrying out the operation correcting process by the operation correcting unit 20 based upon the operation correcting information.

(Seventh Embodiment)

Since the basic structure of a control apparatus of the robot arm in a seventh embodiment of the present invention is the same as that of the first embodiment, explanations for the common portions will be omitted, and the following description will discuss only different portions in detail.

The following description will be given by exemplifying a job in which a mixing job is carried out in a pot 3, as shown in Fig. 8A, in the same manner as in the first embodiment.

In the case where, while the robot arm 5 is carrying out a mixing job in the pot 3, for example, in "2" of the "job ID" of Fig. 4B, as shown in Fig. 8A, the person 4 confirms a state of the cooking materials in the pot 3, and tires to mix the pot 3, with the hand 30 of the robot arm 5 being shifted up and down, as shown in Fig. 8B, the person 4 directly grabs the robot arm 5, and corrects its track.

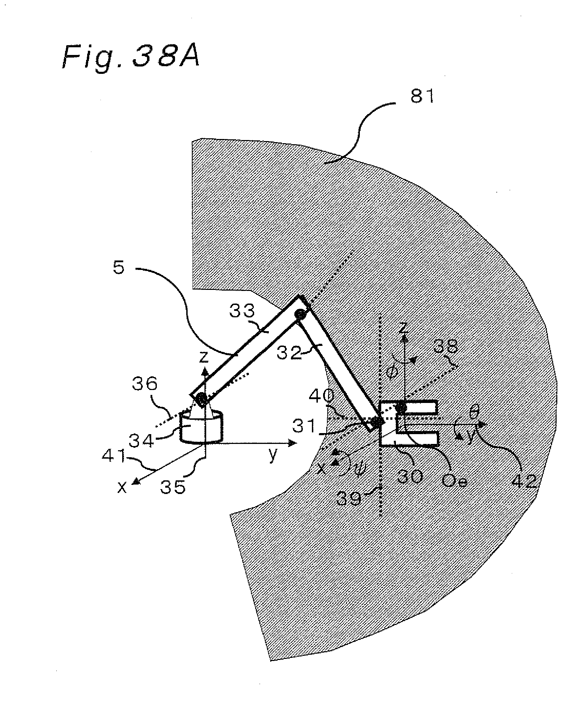

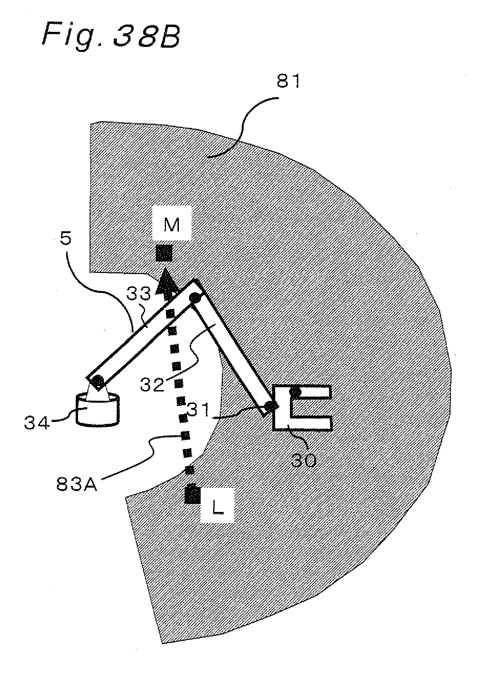

In Fig. 38A, a portion with slanting lines (an area indicated by reference numeral 81 in Figs. 38A and 38B) represents a movable range of the hand (hand 30) of the robot arm 5. When the person 4 grabs the robot arm 5 to operate it, it is not possible to move the robot arm 5 beyond the movable range 81 of the robot arm 5. For example, in the case where the person 4 attempts to move the hand (hand 30) of the robot arm 5 from a point indicated by "L" to a point indicated by "M" in Fig. 38B, in a manner as indicated by an arrow 83A, since both of the points "L" and "M" are located within the movable range 81, the corresponding operation of the robot arm 5 is available; however, midway during a movement linearly carried out from the point "L" to the point "M", since its track comes out of the movable range 81 of the robot arm 5, the robot arm 5 is stopped at the corresponding position, and cannot be moved further.

In general, a person who operates an industrial robot is a skilled operator who well understands the movable range or the like of the robot. However, a person 4, who operates a house-service robot that is an object to which the present invention is applied, is a layman who does not well understand the specifications of the robot; therefore, with respect to the robot arm 5 stopped out of the movable range 81 as described above, it is difficult for the person 4 to instinctively know how to operate the robot arm 5 so as to move it within the movable range 81. Moreover, in the case where, upon manipulating the robot arm 5 that is in operation, the person 4 erroneously moves the robot arm 5 from the movable range 81 out thereof with the result that the robot arm 5 is stopped, the operation is erroneously corrected by the operation correcting unit 20 at the stopped position of the robot arm 5, failing to carry out an operation desired by the person 4.

In order to prevent the above-mentioned failure, it is an object of the seventh embodiment to allow the robot arm 5 to be operated within the movable range 81 so as to carry out the operation desired by the person 4, based upon the information of the operation correcting information database 18, which will be described later, and operations of the operation correcting unit 20, and alternation condition setting unit 82.

-operation Correcting Information Database-

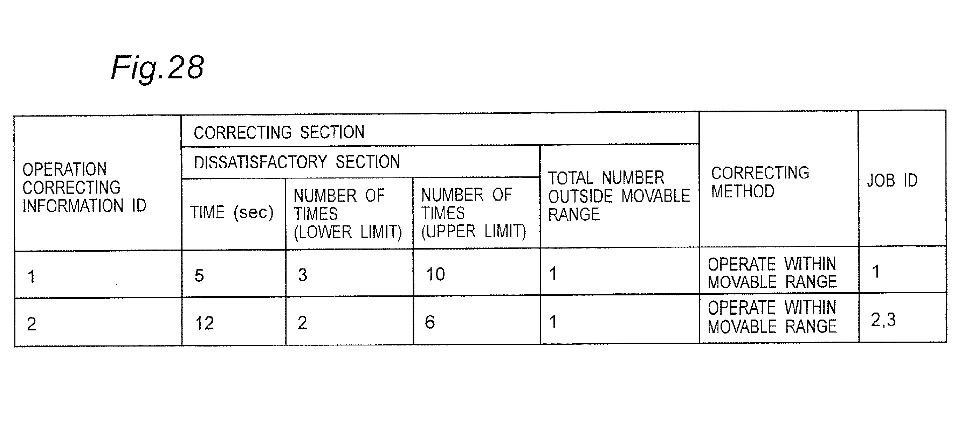

Fig. 28 shows the operation correcting database 18. Specific pieces of operation correcting information are designed to include: operation correcting information ID numbers (see columns of "operation correcting information ID" of Fig. 28) corresponding to IDs used for identifying pieces of operation correcting information, information relating to correcting sections (see columns of "correcting section" of Fig. 28) corresponding to information used for detecting a dissatisfactory section (see columns of "dissatisfactory section" of Fig. 28), information relating to an operation time (see columns of "time" of Fig. 28), information relating to an upper limit value (upper threshold value) of the number of operation times (see columns of "number of times (upper limit)" of Fig. 28, information relating to a lower limit value (lower threshold value) of the number of operation times (see columns of "number of times (lower limit)" of Fig. 28, and information that relates to a case in which the position and orientation caused by a manipulation of the person 4 are varied from those prior to the correction, and also relates to a threshold value (threshold value for use in changing) of the varied value (see columns of "total number of times of presences out of the movable range" of Fig. 28). In this case, the varied value is a value that indicates a degree of variation before and after the operation (that indicates how much degrees the position and orientation are varied to). Moreover, the pieces of information are also designed to include information relating to the correcting method of operation information (see columns of "correcting method" of Fig. 28), and "job IDs" that are identification numbers used for identifying which job the operation correcting information indicated by the "operation, correcting information ID" should be applied to (see columns of "job IDs" of Fig. 28). Each "job ID" corresponds to any one of values in the "job IDs" in the operation information database 17, and in the case where correcting information is applicable to a plurality of jobs, as shown in "2" of the "operation correcting information ID" of Fig. 28, a plurality of IDs, such as "2, 3", may be stored therein.

-Alternation Condition Setting Unit and Operation Correcting Unit-

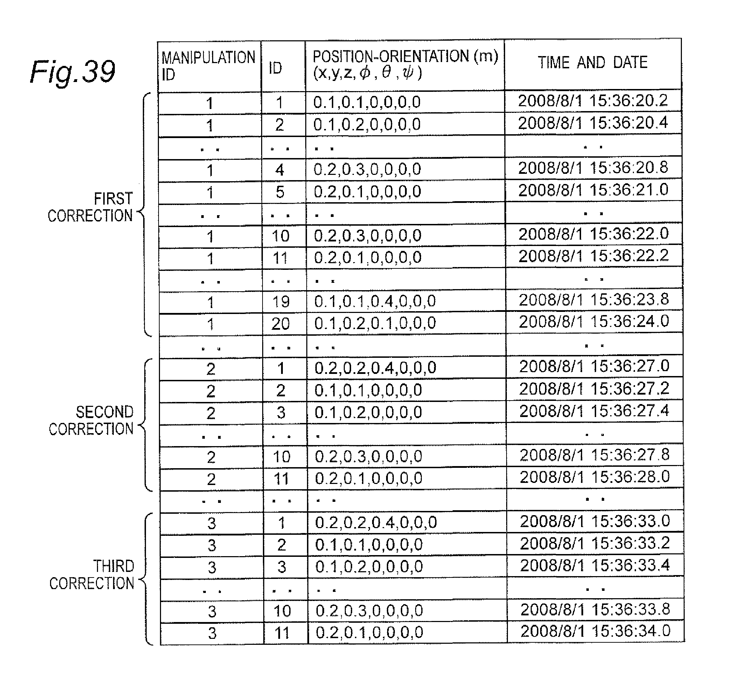

In the same manner as in the first embodiment, the operation correcting unit 20 allows the person 4 to select a job to be desirably executed by the robot arm 5 among jobs relating to "job IDs" of the jobs in the operation information database 17 through the data input IF 26 and to input the selected information to the operation instruction unit 27 so as to be specified. When the operation instruction unit 27 receives the instruction for the job selection of the job having the "job ID" specified by the person 4 through the data input IF 26, the operation instruction unit 27 gives an instruction for the job selection to the alternation condition setting unit 82 and the operation correcting unit 20 so that the corresponding job is selected. The operation correcting unit 20 sets the control mode based upon the "flag" of the selected job among the jobs in the operation information database 17. Moreover, the operation instruction unit 27 gives an instruction to the control parameter managing unit 21 so that an operation is carried out in the set control mode. When the person 4 inputs an instruction for starting the correction to the operation instruction unit 27 through the data input IF 26, the operation correcting unit 20 sets a control mode based upon the "correcting parameter flag" of the operation information database 17 through the operation instruction unit 27, and gives an instruction to the control parameter managing unit 21 so as to carry out an operation in the set control mode. The alternation condition setting unit 82 acquires the hand position and orientation of the robot arm 5 from the point of time when the person 4 started the correction until the completion thereof, every certain fixed period of time (for example, every 0.2 sec.). For example, Fig. 39 shows data acquired by the alternation condition setting unit 82 as a specific example. As the "operation ID" of Fig. 39, in the case of the first correction, "1" is stored, in the case of the second correction, "2" is stored, and in the case of the third correction, "3" is stored respectively in an manipulation history information database 19 by the operation storage unit 15. In this case, "position-orientation" represents the position and orientation of the hand of the robot arm 5 from the start of the correction on the operation of the robot arm 5 by the person 4 up to the completion thereof. Here, "date and time" represent the date and time when the hand position and force data of the robot arm 5 were acquired, and are indicated by "year/month/date, and o'clock: minutes: seconds".

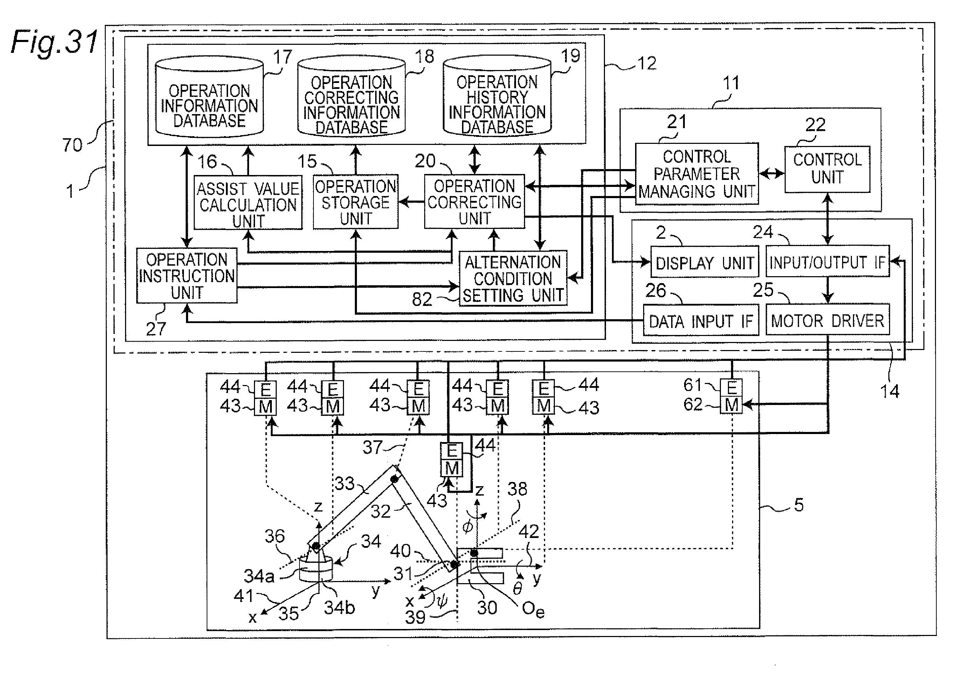

Fig. 31 is a view showing detailed structures of the robot arm 5 to be controlled and the control apparatus 70 for the robot arm 5 that form the robot system 1 in a seventh embodiment. In Fig. 31, since the robot arm 5, the peripheral apparatus 14, the operation instruction unit 27, and the operation information database 17 are the same as those of the first embodiment, the description thereof will be omitted.

The data of Fig. 39 acquired by the alternation condition setting unit 82 are stored in the manipulation history information database 19 as operation history information by the operation storage unit 15.

Next, the alternation condition setting unit 82 detects whether or not the robot arm 5 is in a state where it is inoperable to a desired position by the person 4.

First, based upon "date and time" of the operation ID of the operation history information that is currently being corrected, the alternation condition setting unit 82 examines whether the total number of operation ID numbers from the operation ID after a point of time, obtained by subtracting "a period of time" of the "correcting section" of the operation correcting information database 18 from the "date and time" of the operation ID of the operation history information that is currently being corrected, to the operation ID that is currently being corrected, is the "number of times (lower limit)" or more, or the "number of times (upper limit)" or less of the "correcting sections". In this case, the operation ID that is currently being operated is defined as an operation ID having the current point of time in a corrected state that is coincident with the date and time of the operation history information. In the case where the total number of operation ID number is located within this range (that is, in a range from the "number of times (lower limit)" or more to the "number of times (upper limit)" or less of the "correcting sections"), the alternation condition setting unit 82 can determine that the person 4 carries out operations many times in a short period of time; therefore, the alternation condition setting unit 82 determines that the person 4 is dissatisfied with any behavior of the robot arm 5 after the manipulation by the person 4.

More specifically, in the example of Fig. 39, in the case of the current time "2008/8/1, 15 (o'clock): 36 (minutes): 33 (seconds)" during a correction, since the case corresponds to "1" in "ID" of "3" in the "operation ID" in the date and time of the operation history information, the operation ID of the operation currently being corrected corresponds to "3". Next, from the date and time of "11" in the "ID" of "3" in the "operation ID", the "period of time" of the "correcting section" of the operation correcting information database 18 is subtracted. In the example of Fig. 21, when the alternation condition setting unit 82 subtracts the "period of time" of the "correcting section,", that is, 30 seconds, from "2008/8/1, 15 (o'clock): 36 (minutes): 33 (seconds)", "2008/8/1, 15(o'clock): 36 (minutes): 03 (seconds)" is obtained. Since "1", "2", and "3" in the "operation ID" are given to the sections from "2008/8/1, 15(o'clock): 36 (minutes): 03 (seconds)" to "2008/8/1, 15 (o'clock): 36 (minutes): 33 (seconds)", the total number of the "operation ID" is set to "3". The alternation condition setting unit 82 examines whether or not this total number "3" is set in a range from the "number of times (lower limit)" or more to the "number of times (upper limit)" or less in the "correcting section" of the operation correcting information database 18. In this case, since the "number of times (lower limit)" is "3" and since the "number of times (upper limit)" is "10", the alternation condition setting unit 82 determines that "3" is located within this range. By using the above-mentioned calculations in the alternation condition setting unit 82, since the alternation condition setting unit 82 can determine that the person 4 carries out operations many times in a short period of time, the alternation condition setting unit 82 consequently determines that the person 4 is dissatisfied with any behavior of the robot arm 5 after the manipulation by the person 4.

Next, the alternation condition setting unit 82 tries to specify a dissatisfactory portion.

The alternation condition setting unit 82 determines whether or not the "position-orientation" in the "operation ID" that is located in a range from "number of times (lower limit)" or more to "number of times (upper limit)" or less is within the movable range 81 of Fig. 38A. In the case where the alternation condition setting unit 82 determines that the number of "position-orientations" located out of the movable range exceeds the "total number out of the movable range" of the "correcting section" ("1" in Fig. 28)(threshold value used for the movable range", the alternation condition setting unit 82 determines that, during an operation by the person 4 of the robot arm that is being in operation, the operation is erroneously carried out outside the movable range, with the result that a correction of the operation at a desired position by the person 4 is not executed.

Next, the operation correcting unit 20 carries out a correction at the dissatisfactory portion as described above.

Since the "correcting method" is carried out as "an operation within the movable range", the operation correcting unit 20 carries out the correction so that the operation is executed within the movable range.

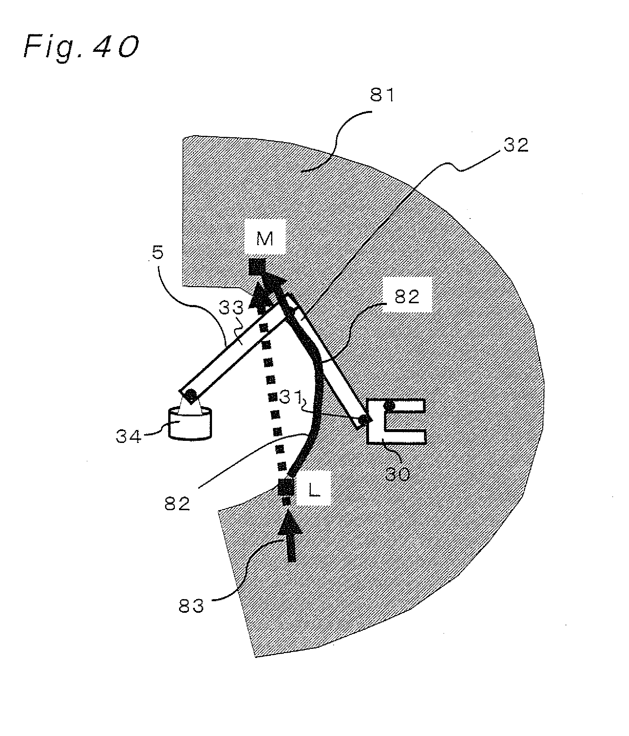

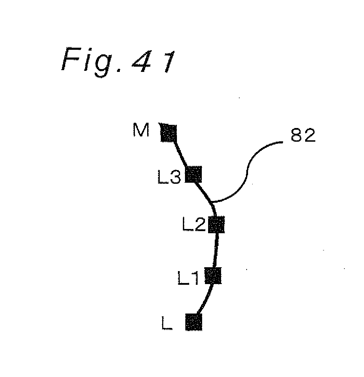

In the case where the person 4 carries out an operation in a manner so as to follow a track 83 of Fig. 40, the alternation condition setting unit 82 calculates that the operation is being executed out of the movable range as shown in "L" based upon the operation history information of the manipulation history information database 19 of Fig. 39. More specifically, as described earlier, the alternation condition setting unit 82 carries out calculations as to whether or not the hand position in the operation history information is located within the movable range 81 of Fig. 38. Next, by extending the track 83, the alternation condition setting unit 82 calculates a point M that is located inside the movable range 81. Next, the alternation condition setting unit 82 calculates a track 82 that has the shortest distance from a point L and is also located within the movable range 81. A plurality of points ("L1", "L2" , and "L3" of Fig. 41) are found as the track 82 as shown in Fig. 41, so that, supposing that a distance of the track 82 is "N" (m), the track 82 has a velocity S of the track 83 so as to allow the track 82 to move at the same velocity as that of the track 83, and the operation correcting unit 20 corrects the operation information so as to set these points as the positions after the correction.

By using the correction in the operation correcting unit 20 as described above, the person 4 operates the robot arm 5 within the movable range 81 so that it becomes possible to generate an operation desired by the person 4.

(Eighth Embodiment)

Since the basic structure of a control apparatus of the robot arm in an eighth embodiment of the present invention is the same as that of the first embodiment, explanations for the common portions will be omitted, and the following description will discuss only different portions in detail.

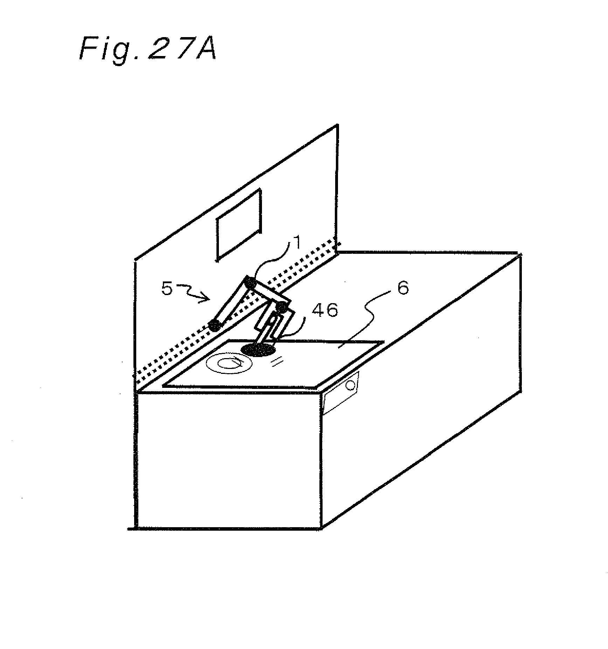

In the same manner as in the first embodiment, as shown in Fig. 27A, the following explanation will be given by exemplifying a wiping job to be carried out on a top plate of an IH cooking heater 6 or the like.

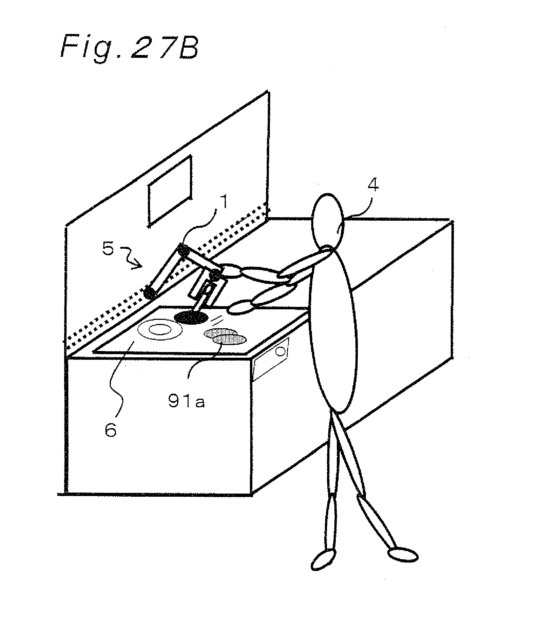

In the case where, midway during a wiping job that is carried out by the robot arm 5 on a top plate of an IH cooking heater 6 or the like, as shown in Fig. 27A (Fig. 26A is a view showing the IH cooking heater viewed from above), for example, in "1" of the "job ID" of Fig. 4, the person 4 finds a stained portion at another position (portion) 91a on the top plate of the IH cooking heater 6 or the like, and grabs the robot arm 5 to move the tip position of the robot arm 5 to the stained portion 91a so as to clean the stain and its neighboring portion, as shown in Fig. 27B (Fig. 26B is a view showing the IH cooking heater viewed from above). Next, in order to rub the stained portion 91a with a stronger force, the person 4 grabs the robot arm 5 being in operation, and applies a force to the robot arm 5 toward the stain from above the IH cooking heater 6. The operation of the robot arm 5 is corrected based upon the force applied by the person 4 by the operation correcting unit 20 so that the wiping job can be carried out, with the rubbing force of the robot arm 5 to be applied to the IH cooking heater 6 being increased.

The above-mentioned correction, which is carried out by making a correction in the operation information by utilizing a force applied by the person 4, is not available in the case where the person 4 is an elder person, or a handicapped person, or a child with the result that such a person 4 fails to apply a sufficient force to the robot arm 5. Therefore, by using information in the operation correcting information database 18 and operations of the alternation condition setting unit 82 and the operation correcting unit 20, which will be described below, it becomes possible to carry out the correction even when the person 4 fails to apply a sufficient force.

-Operation Correcting Information Database-

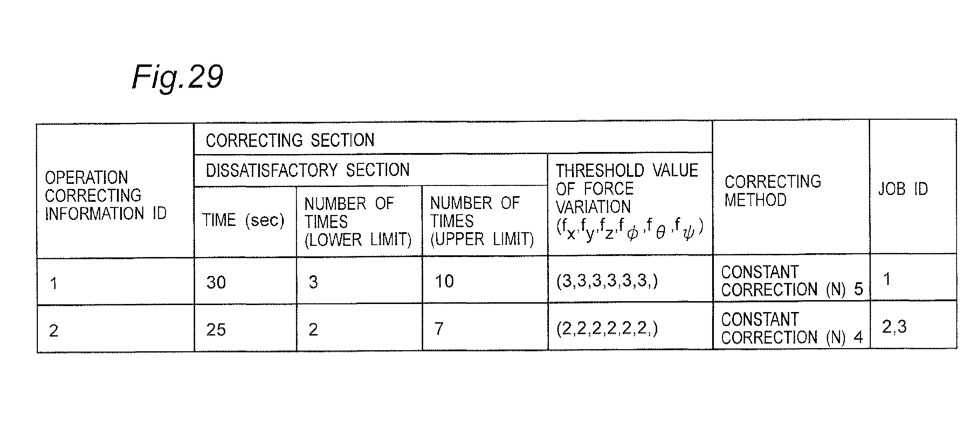

Fig. 29 shows the operation correcting database 18. Specific pieces of operation correcting information are designed to include: operation correcting information ID numbers (see columns of "operation correcting information ID" of Fig. 29) corresponding to IDs used for identifying pieces of operation correcting information, information relating to correcting sections (see columns of "correcting section" of Fig. 29) corresponding to information used for detecting a dissatisfactory section (see columns of "dissatisfactory section" of Fig. 29), information relating to an operation time (see columns of "time" of Fig. 29), information relating to an upper limit value of the number of operation times (see columns of "number of times (upper limit)" of Fig. 29, information relating to a lower limit value of the number of operation times (see columns of "number of times (lower limit)" of Fig. 29, and information that relates to a case in which a force to be applied by the person 4 is varied prior to the application thereof (for example, since the operation of the robot arm is not changed, even when the person 4 manipulates the robot arm, there is a case in which the operation of the robot arm prior to the manipulation by the person 4 is varied due to the manipulation by the person 4), and also relates to a threshold value of such a variation (see columns of "threshold value of variation in force" of Fig. 29). Moreover, the pieces of information are also designed to include information relating to the correcting method of operation information (see columns of "correcting method" of Fig. 29) and "job IDs" that are identification numbers used for identifying which job the operation correcting information indicated by the "operation correcting information ID" should be applied to (see columns of "job IDs" of Fig. 29). Each "job ID" corresponds to any one of values in the "job IDs" in the operation information database 17, and in the case where correcting information is applicable to a plurality of jobs, as shown in "2" of the "operation correcting information ID" of Fig. 29, a plurality of IDs, such as "2, 3", may be stored therein.

-Alternation Condition Setting Unit and Operation Correcting Unit-

In the same manner as in the first embodiment, the operation correcting unit 20 allows the person 4 to select a job to be desirably executed by the robot arm 5 among jobs relating to "job IDs" of the jobs in the operation information database 17 through the data input IF 26 and to input the selected information to the operation instruction unit 27 so as to be specified. When the operation instruction unit 27 receives the instruction for the job selection of the job having the "job ID" specified by the person 4 through the data input IF 26, the operation instruction unit 27 gives an instruction for the job selection to the alternation condition setting unit 82 and the operation correcting unit 20 so that the corresponding job is selected. The operation correcting unit 20 sets the control mode based upon the "flag" of the selected job among the jobs in the operation information database 17. Moreover, the operation correcting unit 20 gives an instruction to the control parameter managing unit 21 so that an operation is carried out in the set control mode. When the person 4 inputs an instruction for starting the correction to the operation instruction unit 27 through the data input IF 26, the operation correcting unit 20 sets a control mode based upon the "correcting parameter flag" of the operation information database 17 through the operation instruction unit 27, and gives an instruction to the control parameter managing unit 21 so as to carry out an operation in the set control mode. The alternation condition setting unit 82 acquires the hand position and orientation of the robot arm 5 and a force applied by the person 4 from the point of time when the person 4 started the correction until the completion thereof, every certain fixed period of time (for example, every 0.2 sec.). In order to identify data from the point of time of the correction start up to the completion thereof, numbers called "operation IDs" are given and stored.

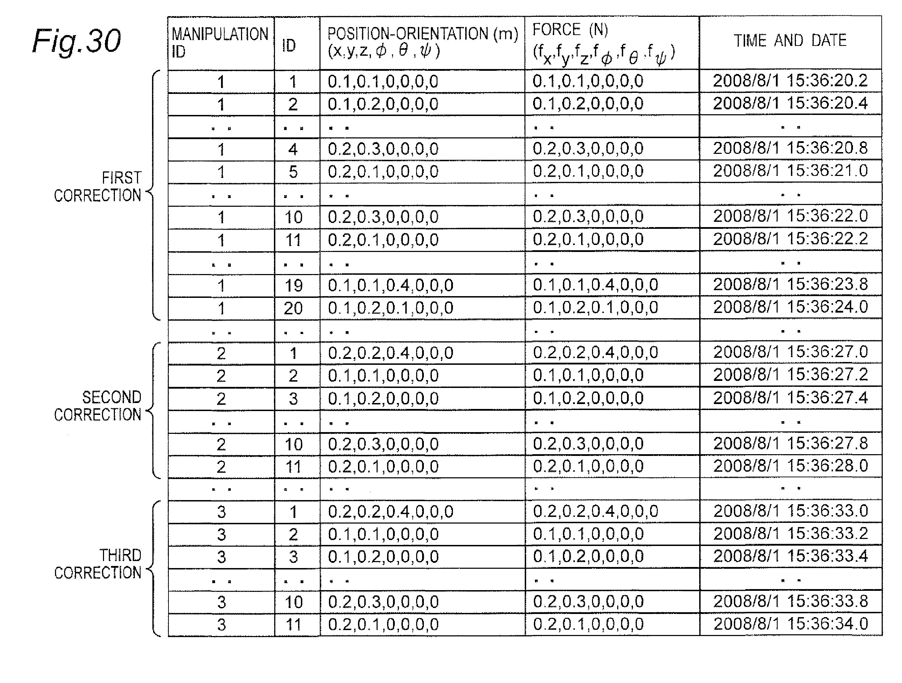

For example, Fig. 30 shows data acquired by the alternation condition setting unit 82 as a specific example. As the "operation ID" of Fig. 30, in the case of the first correction, "1" is stored, in the case of the second correction, "2" is stored, and in the case of the third correction, "3" is stored respectively. In this case, "position-orientation" represents the position and orientation of the hand of the robot arm 5 from the start of the correction on the operation of the robot arm 5 by the person 4 up to the completion thereof, and "force" represents a force applied by the person 4. Here, "date and time" represent the date and time when the hand position and force data of the robot arm 5 were acquired, and are indicated by "year/month/date, and o'clock: minutes: seconds".

Fig. 31 is a view showing detailed structures of the robot arm 5 to be controlled and the control apparatus 70 for the robot arm 5 that form the robot system 1 in an eighth embodiment. In Fig. 19, since the robot arm 5, the control apparatus main unit 11, the peripheral apparatus 14, the operation instruction unit 27, and the operation information database 17 are the same as those of the first embodiment, the description thereof will be omitted.

The data of Fig. 30 acquired by the alternation condition setting unit 82 are stored in the manipulation history information database 19 as operation history information by the operation storage unit 15.

The alternation condition setting unit 82 detects whether or not the person 4 is in a state in which he or she is unable to apply a desired force to the robot arm 5 based upon the operation history information.

First, based upon "date and time" of the operation ID of the operation history information that is currently being corrected, the alternation condition setting unit 82 examines whether the total number of operation ID numbers from the operation ID after a point of time, obtained by subtracting "a period of time" of the "correcting section" of the operation correcting information database 18 from the "date and time" of the operation ID of the operation history information that is currently being corrected, to the operation ID that is currently being corrected is the "number of times (lower limit)" or more of the "correcting sections", or the "number of times (upper limit)" or less of the "correcting sections". In this case, the operation ID that is currently being operated is defined as an operation ID having the current point of time in a corrected state that is coincident with the date and time of the operation history information. Upon determination by the alternation condition setting unit 82 that the total number of operation ID numbers is located within this range (that is, in a range from the "number of times (lower limit)" or more to the "number of times (upper limit)" or less of the "correcting sections"), the alternation condition setting unit 82 can determine that the person 4 carries out operations many times in a short period of time; therefore, the alternation condition setting unit 82 determines that the person 4 is dissatisfied with any behavior of the robot arm 5 after the manipulation by the person 4.

Next, the alternation condition setting unit 82 tries to specify a dissatistaatary portion. The alternation condition setting unit 82 determines whether or not a difference between the "force" in the "operation ID" that is located in a range from "number of times (lower limit)" or more to "number of times (upper limit)" or less and the "force" before the correction is the "threshold value of a variation in force" of the "correcting section" or more. With respect to the operation having a parameter whose difference is the threshold value or more, the alternation condition setting unit 82 determines that the person 4 is dissatisfied with the behavior of the robot arm 5 after the manipulation of the person 4, that is, how to apply the force thereto. Upon determination by the alternation condition setting unit 82 that the person 4 is dissatisfied, the operation correcting unit 20 carries out the correction described in the "correcting method" of Fig. 29.

More specifically, in the example of Fig. 30, in the case of the current time "2008/8/1, 15(o'clock): 36 (minutes): 33 (seconds)" during a correction, since the case corresponds to "11" in "ID" of "3" in the "operation ID" in the date and time of the operation history information, the operation ID of the operation currently being corrected corresponds to "3". Next, from the date and time of "11" in "3" of the "operation ID", the "period of time" of the "correcting section" of the operation correcting information database 18 is subtracted. In the example of Fig. 29, when the alternation condition setting unit 82 subtracts the "period of time" of the "correcting section", that is, 30 seconds, from "2008/8/1, 15(o'clock): 36 (minutes): 33 (seconds)", "2008/8/1, 15(o'clock): 36 (minutes): 03 (seconds)" is obtained. Since "1", "2", and "3" in the "operation ID" are given to the sections from "2008/8/1, 15 (o'clock): 36 (minutes: 03 (seconds)" to "2008/8/1, 15 (o'clock): 36 (minutes): 33 (seconds)", the total number of the "operation ID" is set to "3". The alternation condition setting unit 82 examines whether or not this total number "3" is located in a range from the "number of times (lower limit)" or more to the "number of times (upper limit)" or less in the "correcting section" of the operation correcting information database 18. In the example of Fig. 29, since the "number of times (lower limit)" is "3" and since the "number of times (upper limit)" is "10", "3" is located within this range. By using the above-mentioned calculations in the alternation condition setting unit 82, since the alternation condition setting unit 82 can determine that the person 4 carries out operations many times in a short period of time, the alternation condition setting unit 82 consequently determines that the person 4 is dissatisfied with any behavior of the robot arm 5 after the manipulation by the person 4.

Next, the alternation condition setting unit 82 tries to specify a dissatisfactory portion. The alternation condition setting unit 82 finds a difference between the "force" of the operation ID within a range from the "number of times (lower limit)" or more to the "number of times (upper limit)" or less in the "correcting section" and the "force" before the correction. For example, with respect to the force used for rubbing the IH cooking heater 6, in the case where the z-component of the "force" before the correction is 5(N), with the z-component of the "force" applied during the correction by the person 4 being set to 10(N), since the difference (in this example, 5(N)) is the threshold value of a variation in force of the "correcting section" (in Fig. 29, "3"(N))(threshold value for use in force information) or more, the alternation condition setting unit 82 determines that the person 4 is dissatisfied with how to apply the force that is corrected by the person 4.

Next, the operation correcting unit 20 carries out a correction on the dissatisfactory portion as described above. In the case where a description "constant correction 5(N)" is given to the "correcting method" of Fig. 29, the alternation condition setting unit 82 adds the correcting value (in this case, 5(N)) described in the "force" of the correcting method during the correction by the person 4 and the operation correcting unit 20 carries out the corresponding correction.

In the case where the person 4, who carries out an operation, is an elder person, or a handicapped person, or a child with the result that, upon correction by the operation correcting unit 20, such a person 4 fails to apply a sufficient force, the alternation condition setting unit 82 determines that the person 4 is dissatisfied with the behavior of the robot arm 5 after the manipulation by the person 4, and can assist the force.

Reference numeral 16 in Fig. 31 represents an assist value calculation unit, and the assist value calculation unit 16 calculates a value of the "constant correction" described in the correcting method of Fig. 29. As described above, in the case where the alternation condition setting unit 82 determines that the person 4 carries out operations many times in a short period of time, and also in the case where the value of the force corrected by the person 4 is varied from the value before the correction, the alternation condition setting unit 82 determines that the person 4 is dissatisfied with how to apply the force by the robot arm 5 after the manipulation by the person 4, and the operation correcting unit 20 carries out the corresponding correction. In the case where, after the correction by the operation correcting unit 20, the person 4 is still dissatisfied, the person 4 further carries out the same operations many times in a short period of time.

For this reason, by calculating the "constant correction" in the alternation condition setting unit 82 in accordance with the number of times of the operations by the person 4, the assist value calculation unit 16 is allowed to increase the correction value for each correction under control by the operation correcting unit 20, in the case where the number of times of operations is large; thus, it becomes possible to reduce the number of operation times by the person 4.

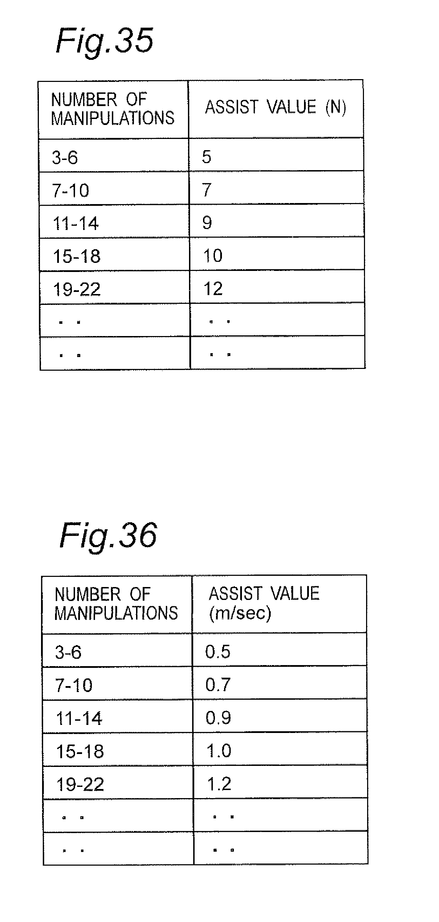

More specifically, the assist value calculation unit 16 determines the assist value in response to the number of operation times, in accordance with a table in Fig. 35. As the number of operation times, the previously calculated number of operation times is inputted from the alternation condition setting unit 82 to the assist value calculation unit 16. The correction value determined by the assist value calculation unit 16 is stored as the value of "constant correction" in the "correcting method" in Fig. 29.

As described above, the alternation condition setting unit 82 determines that the person 4 is dissatisfied with the behavior of the robot arm 5 after the manipulation by the person 4 so that the insufficient force can be assisted by the assist value calculation unit 16, and by further allowing the assist value calculation unit 16 to determine the assist value in accordance with the number of operation times, it becomes possible to reduce the number of operation times by the person 4.

(Ninth Embodiment)

Since the basic structure of a control apparatus of the robot arm in a ninth embodiment of the present invention is the same as that of the first embodiment, explanations for the common portions will be omitted, and the following description will discuss only different portions in detail.

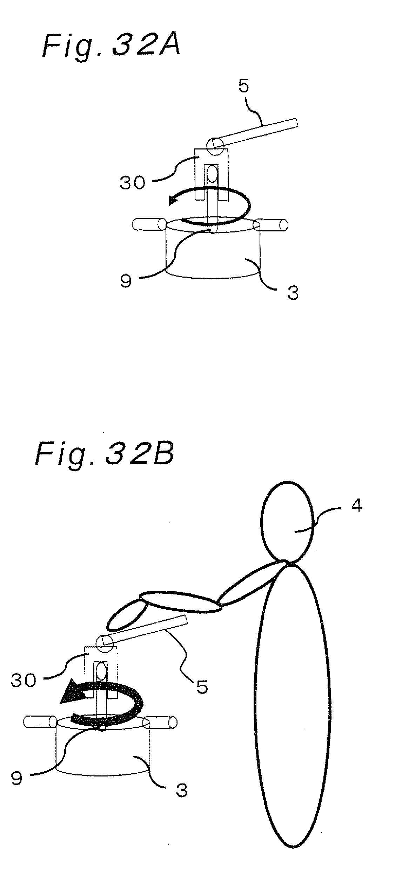

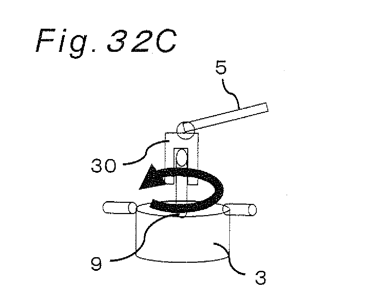

The following description will be given by exemplifying a job in which a mixing job is carried out in a pot 3 by using the robot system 1, as shown in Fig. 32A, in the same manner as in the first embodiment.

In the case where, while the robot arm 5 is carrying out a mixing job in the pot 3, for example, in "2" of the "job ID" of Fig. 4A or Fig. 4B, as shown in Fig. 32A, the person 4 confirms a state of the cooking materials in the pot 3, and in order to carry out the mixing job faster, as shown in Fig. 32B, the person 4 grabs the robot arm 5 and moves the robot arm 5 fast so as to move the hand position of the robot arm 5 faster. The operation of the robot arm 5 is corrected by the operation correcting unit 20 to a velocity corrected by the person 4 so that the robot arm 5 is allowed to carry out the mixing job faster than that before the correction.

The above-mentioned correction by the operation correcting unit 20, which is carried out by making a correction in the operation information by utilizing a force applied by the person 4, fails to correct the operation of the robot arm 5 in the case where the person 4 is an elder person, or a handicapped person, or a child with the result that the person 4 fails to operate the robot arm 5 at a desirably corrected velocity. Therefore, by using information in the operation correcting information database 18 and operations of the operation correcting unit 20, which will be described below, it becomes possible to carry out the correction to a velocity at which the person 4 desirably operates the robot arm 5.

-Operation Correcting Information Database-

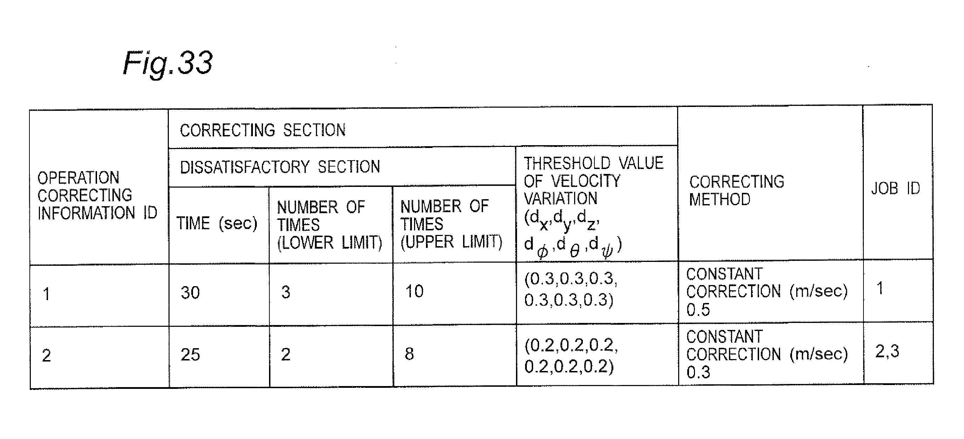

Fig. 33 shows the operation correcting database 18. Specific pieces of operation correcting information are designed to include: operation correcting information ID numbers (see columns of "operation correcting information ID" of Fig. 33) corresponding to IDs used for identifying pieces of operation correcting information, information relating to correcting sections (see columns of "correcting section," of Fig. 33) corresponding to information used for detecting a dissatisfactory section (see columns of "dissatisfactory section" of Fig. 33), information relating to an operation time (see columns of "time" of Fig. 33), information relating to an upper limit value of the number of operation times (see columns of "number of times (upper limit)" of Fig. 33), information relating to a lower limit value of the number of operation times (see columns of "number of times (lower limit)" of Fig. 33), and information that relates to a case in which a velocity at which the person 4 carried out the operation is varied prior to the correction, and also relates to a threshold value of such a variation (see columns of "threshold value of variation in force" of Fig. 33) (threshold value for velocity). Moreover, the pieces of information are also designed to include information relating to the correcting method of operation information (see columns of "correcting method" of Fig. 33) and "job IDs" that are identification numbers used for identifying which job the operation correcting information indicated by the "operation correcting information ID" should be applied to (see columns of "job IDs" of Fig. 33). Each "job ID" corresponds to any one of values in the "job IDs" in the operation information database 17, and in the case where correcting information is applicable to a plurality of jobs, as shown in "2" of the "operation correcting information ID" of Fig. 33, a plurality of IDs, such as "2, 3", may be stored therein.

-Alternation Condition Setting Unit and Operation Correcting Unit-

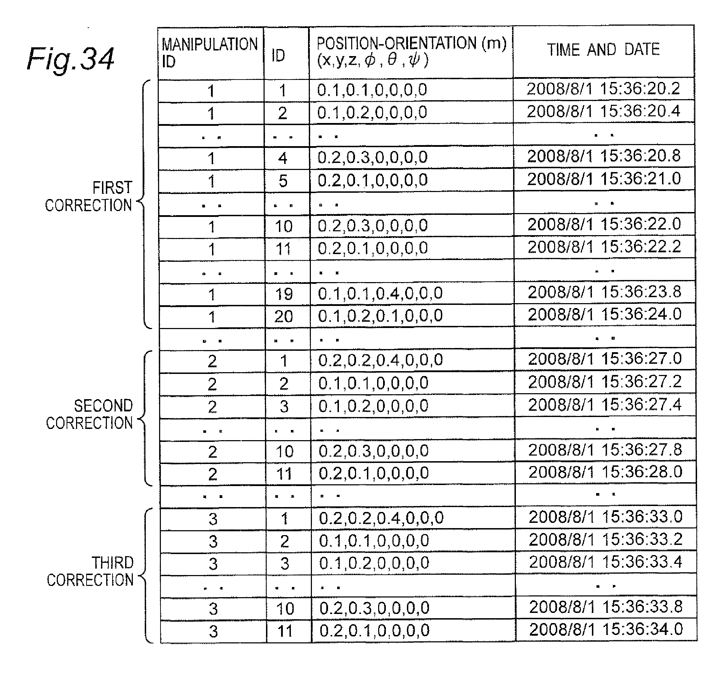

In the same manner as in the first embodiment, the operation correcting unit 20 allows the person 4 to select a job to be desirably executed by the robot arm 5 among jobs relating to "job IDs" of the jobs in the operation information database 17 through the data input IF 26 and to input the selected information to the operation instruction unit 27 so as to be specified. When the operation instruction unit 27 receives the instruction for the job selection of the job having the "job ID" specified by the person 4 through the data input IF 26, the operation instruction unit 27 gives an instruction for the job selection to the alternation condition setting unit 82 and the operation correcting unit 20 so that the corresponding job is selected. The operation correcting unit 20 sets the control mode based upon the "flag" of the selected job among the jobs in the operation information database 17. Moreover, the operation instruction unit 27 gives an instruction to the control parameter managing unit 21 so that an operation is carried out in the set control mode. When the person 4 inputs an instruction for starting the correction to the operation instruction unit 27 through the data input IF 26, the operation correcting unit 20 sets a control mode based upon the "correcting parameter flag" of the operation information database 17 through the operation instruction unit 27, and gives an instruction to the control parameter managing unit 21 so as to carry out an operation in the set control mode. The alternation condition setting unit 82 acquires the hand position and orientation of the robot arm 5 from the point of time when the person 4 started the correction until the completion thereof, every certain fixed period of time (for example, every 0.2 sec.). In order to identify data from the point of time of the correction start up to the completion thereof, numbers called operation IDs" are given and stored. For example, Fig. 34 shows data acquired by the alternation condition setting unit 82 as a specific example. The "operation ID", "position-orientation", and "time and date" of Fig. 34 are the same as those of the eighth embodiment. In the same manner as in the eighth embodiment, the acquired data of Fig. 34 are stored in the manipulation history information database 19 as operation history information by the operation storage unit 15 of Fig. 31.

The alternation condition setting unit 82 detects whether or not the person 4 is in a state in which he or she is unable to operate at a desired velocity based upon the operation history information.

First, based upon "date and time" of the operation ID of the operation history information that is currently being corrected, the alternation condition setting unit 82 examines whether the total number of operation ID numbers from the operation ID after a point of time, obtained by subtracting "a period of time" of the "correcting section" of the operation correcting information database 18 from the "time and date" of the operation ID of the operation history information that is currently being corrected, to the operation ID that is currently being corrected is the "number of times (lower limit)" or more of the "correcting sections", or the "number of times (upper limit)" or less of the "correcting sections". In this case, the operation ID that is currently being operated is defined as an operation ID having the current point of time in a corrected state that is coincident with the date and time of the operation history information. In the case where the total number of operation ID numbers is located within this range (that is, in a range from the "number of times (lower limit) " or more to the "number of times (upper limit)" or less in the "correcting sections"), the alternation condition setting unit 82 can determine that the person 4 carries out operations many times in a short period of time; therefore, the alternation condition setting unit 82 determines that the person 4 is dissatisfied with any behavior of the robot arm 5 after the manipulation by the person 4.

Next, the alternation condition setting unit 82 tries to specify a dissatisfactory portion. The alternation condition setting unit 82 determines whether or not a difference between the "velocity" in the "operation ID" that is located in a range from "number of times (lower limit)" or more to "number of times (upper limit)" or less in the "correcting section" and the "velocity" before the correction is the "threshold value of a variation in velocity" of the "correcting section" or more. The "velocity" is a value obtained by dividing the difference between the position-orientation of the hand and the next position-orientation of the hand by the difference between the respective times and dates in the alternation condition setting unit 82.

With respect to the operation having a parameter whose difference is the threshold value or more, the alternation condition setting unit 82 determines that the person 4 is dissatisfied with the behavior of the robot arm 5 after the manipulation of the person 4, that is, how to correct the velocity. Upon determination by the alternation condition setting unit 82 that the person 4 is dissatisfied, the operation correcting unit 20 carries out the correction described in the "correcting method" of Fig. 33.

More specifically, in the example of Fig. 34, in the case of the current time "2008/8/1, 15(o'clock): 36 (minutes): 33 (seconds)" during a correction, since the case corresponds to "11" in "ID" of "3" in the "operation ID" in the "date and time" of the operation history information, the operation ID of the operation currently being corrected corresponds to "3". Next, from the "date and time" of "11" in "3" of the "operation ID", the "period of time" of the "correcting section" of the operation correcting information database 18 is subtracted in the alternation condition setting unit 82. In the example of Fig. 33, when the alternation condition setting unit 82 subtracts the "period of time" of the "correcting section", that is, 30 seconds, from "2008/8/1, 15(o'clock): 36 (minutes): 33 (seconds)", "2008/8/1, 15(o'clock): 36 (minutes): 03 (seconds)" is obtained. Since "1", "2" ,and "3" in the "operation ID" are given to the sections from "2008/8/1, 15(o'clock): 36 (minutes): 03 (seconds)" to "2008/8/1, 15(o'clock): 36 (minutes): 33 (seconds)", the total number of the "operation ID" is set to "3". The alternation condition setting unit 82 examines whether or not this total number "3" is located in a range from the "number of times (lower limit)" or more to the "number of times (upper limit)" or less in the "correcting section" of the operation correcting information database 18. In this example, since the "number of times (lower limit)" is "3" and since the "number of times (upper limit)" is "10", "3" is located within this range.

By using the above-mentioned calculations in the alternation condition setting unit 82, since the alternation condition setting unit 82 can determine that the person 4 carries out operations many times in a short period of time, the alternation condition setting unit 82 consequently determines that the person 4 is dissatisfied with any behavior of the robot arm 5 after the manipulation by the person 4.

Next, the alternation condition setting unit 82 tries to specify a dissatisfactory portion. The alternation condition setting unit 82 finds a difference between the "velocity" of the operation ID within a range from the "number of times (lower limit)" or more to the "number of times (upper limit)" or less in the "correcting section" and the "velocity" before the correction. For example, in the case where the z-component of the "velocity" during an operation of the mixing job is 0.5(m/sec), with the z-component of the "velocity" during the correction by the person 4 being set to 0.9 (m/sec), since the difference (in this example, 0.4 (m/sec)) is the threshold value of a variation in velocity of the "correcting section" (in Fig. 29, "0.3"(m/sec)) or more, the alternation condition setting unit 82 determines that the person 4 is dissatisfied with the velocity corrected by the person 4.

Next, the operation correcting unit 20 carries out a correction on the dissatisfactory portion as described above. In the case where a description "constant correction 0.5(m/sec)" is given to the "correcting method" of Fig. 33, the alternation condition setting unit 82 adds the correcting value (in this case, 0.5(m/sec)) described in the "velocity" of the correcting method during the correction by the person 4 and the operation correcting unit 20 carries out the corresponding correction.

In the case where the person 4, who carries out an operation, is an elder person, or a handicapped person, or a child with the result that, upon correction by the operation correcting unit 20, the person 4 fails to operate at a desired velocity during the operation by the person 4, the alternation condition setting unit 82 determines that the person 4 is dissatisfied with the behavior of the robot arm 5 after the manipulation by the person 4, and can assist the velocity.

Reference numeral 16 in Fig. 31 represents an assist value calculation unit, and the assist value calculation unit 16 calculates a value of the "constant correction" described in the correcting method of Fig. 33. As described above, in the case where the alternation condition setting unit 82 determines that the person 4 carries out operations many times in a short period of time, and also in the case where the value of the velocity corrected by the person 4 is varied from the value before the correction, the alternation condition setting unit 82 determines that the person 4 is dissatisfied with the velocity of the robot arm after the manipulation by the person 4, and the operation correcting unit 20 carries out the corresponding correction. In the case where, after the correction by the operation correcting unit 20, the person 4 is still dissatisfied, the person 4 further carries out the same operations many times in a short period of time. For this reason, by calculating the "constant correction" in the alternation condition setting unit 82 in accordance with the number of times of the operations by the person 4, the assist value calculation unit 16 is allowed to increase the correction value for each correction under control by the operation correcting unit 20, in the case where the number of times of operations is large; thus, it becomes possible to reduce the number of operation times by the person 4.

More specifically, the assist value calculation unit 16 determines the assist value in response to the number of operation times, in accordance with a table in Fig. 36. As the number of operation times, the previously calculated number of operation times is inputted from the alternation condition setting unit 82 to the assist value calculation unit 16. The correction value determined by the assist value calculation unit 16 is stored as the value of "constant correction" in the "correcting method" in Fig. 33.

As described above, the alternation condition setting unit 82 determines that the person 4 is dissatisfied with the behavior of the robot arm 5 after the manipulation by the person 4 so that the velocity can be assisted by the assist value calculation unit 16, and by further allowing the assist value calculation unit 16 to determine the assist value in accordance with the number of operation times, it becomes possible to reduce the number of operation times by the person 4.

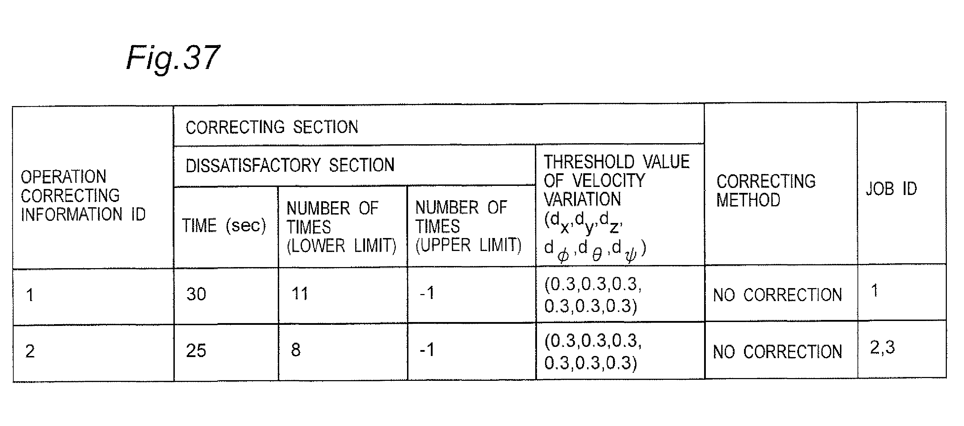

Moreover, the following description will discuss an arrangement in which, in addition to Fig. 33, the operation correcting information database 18 of Fig. 37 is stored. In Fig. 37, in the case where the number of operation times of the person 4 is within a range of a certain threshold value, the correction such as an assist for velocity or force is carried out in the operation correcting unit 20; however, in the case where the person 4 further carries out the operations beyond the range, the alternation condition setting unit 82 determines that, even after the correction by the operation correcting unit 20, the person 4 is still dissatisfied. In the case, the operation correcting unit 20 corrects the operation to be carried out as the operation before the correction.

In Fig. 37, specific pieces of operation correcting information are designed to include: operation correcting information ID numbers (see columns of "operation correcting information ID" of Fig. 37) corresponding to IDs used for identifying pieces of operation correcting information, information relating to correcting sections (see columns of "correcting section" of Fig. 37) corresponding to information used for detecting a dissatisfactory section (see columns of "dissatisfactory section" of Fig. 37), information relating to an operation time (see columns of "time" of Fig. 37), information relating to an upper limit value of the number of operation times (see columns of "number of times (upper limit)" of Fig. 37), and information relating to a lower limit value of the number of operation times (see columns of "number of times (lower limit)" of Fig. 37). When the upper limit value or lower limit value is -1, the information is not applied. Moreover, the pieces of information are also designed to include information relating to the correcting method of operation information (see columns of "correcting method," of Fig. 37) and "job IDs" that are identification numbers used for identifying which job the operation correcting information indicated by the "operation, correcting information ID" should be applied to (see columns of "job IDs" of Fig. 37).

The total number of the number of operation times by the person 4 is calculated by the alternation condition setting unit 82 based upon the operation history information by using the method that has been already described. The alternation condition setting unit 82 examines whether or not the number of operation times calculated by the alternation condition setting unit 82 is in a range from the "number of times (lower limit)" or more to the "number of times (upper limit)" or less in the "correcting section". In the case of Fig. 37, since the "number of times (upper limit)" is -1, it is not applied in the alternation condition setting unit 82, and in the case where the operations are carried out beyond the "number of times (lower limit)" or more, that is, "11" times or more, the alternation condition setting unit 82 determines that even after the correction, the person 4 is still dissatisfied. In this case, the operation correcting unit 20 carries out the correction by using the method described in the "correcting method". Since "no correction" is given in Fig. 37, the operation inputted by the person 4, as it is, is corrected by the operation correcting unit 20, without being altered.

As described above, in the case where the person 4 is dissatisfied with the operation corrected by the operation correcting unit 20, the corresponding operation can be carried out without being corrected by the operation correcting unit 20.

(Tenth Embodiment)

Since the basic structure of a control apparatus of the robot arm in a tenth embodiment of the present invention is the same as that of the first embodiment, explanations for the common portions will be omitted, and the following description will discuss only different portions in detail.

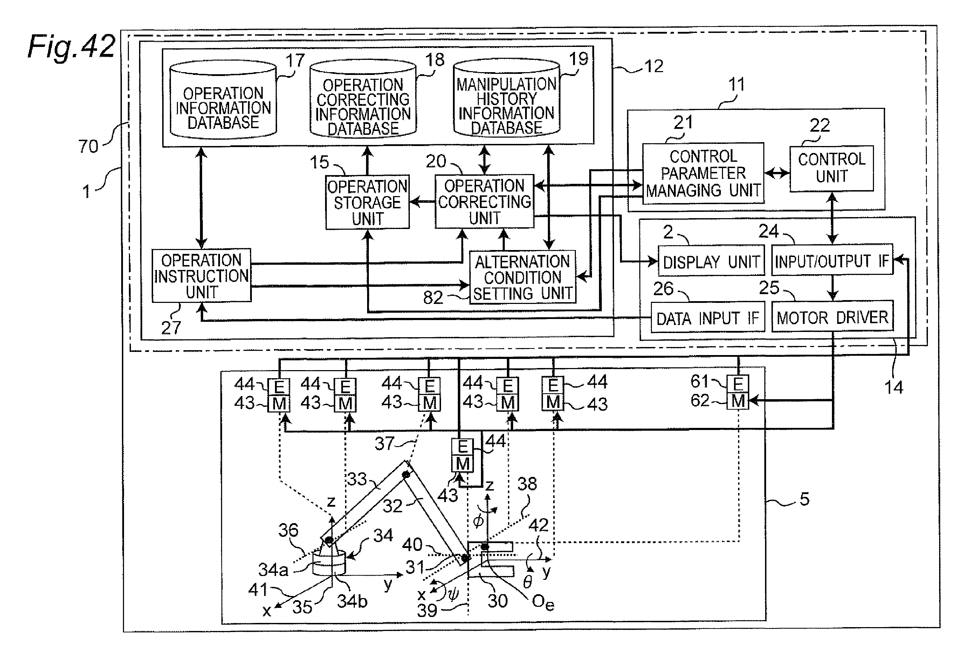

Fig. 42 is a view showing detailed structures of the robot arm 5 to be controlled and the control apparatus 70 for the robot arm 5 that form the robot system 1 in the tenth embodiment. In Fig. 42, since the robot arm 5, the peripheral apparatus 14, the operation instruction unit 27, the operation information database 17, and the operation correcting information database 18 are the same as those of the first embodiment, the description thereof will be omitted.

-Correction History Information Database-

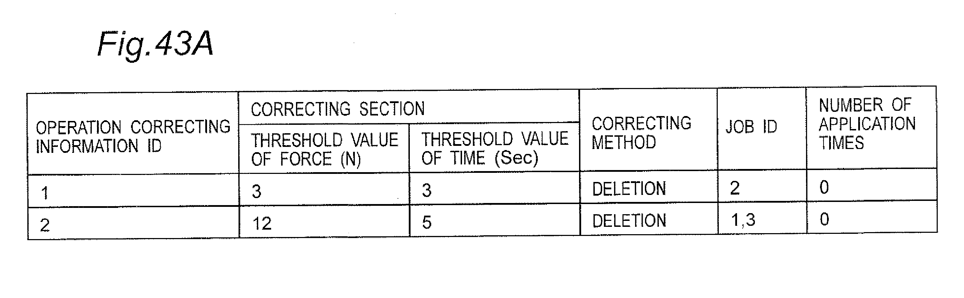

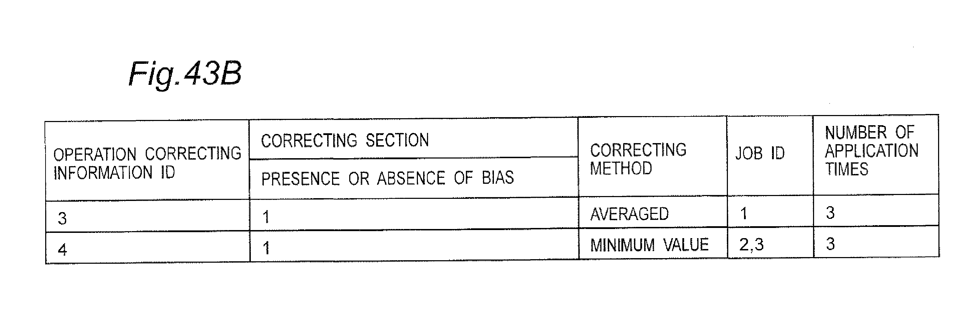

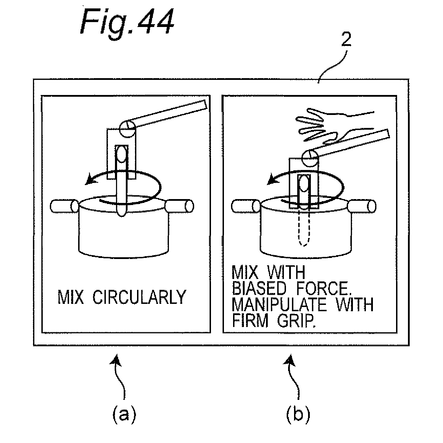

A correction history information database 28 in Fig. 42 stores information as to which operation correcting information database 18 among the respective operation correcting information databases 18 from the first embodiment to the ninth embodiment, has been applied upon carrying out a correction, so as to specify which embodiment has been used. In other words, the operation correcting information database 18 of the tenth embodiment stores pieces of information relating to the respective operation correcting information databases 18 from the first embodiment to the ninth embodiment. Figs. 43A and 43B show specific examples. The "operation correcting information ID", "correcting section", "correcting method", and "job ID" of Fig. 43A are the same as those of the second embodiment. The "operation correcting information ID", "correcting section", "correcting method,", and "job ID" of Fig. 43B are the same as those of the fifth embodiment. In this case, "number of application times" corresponds to the number of times in which each of the pieces of operation correcting information is applied upon carrying out operation corrections. For example, in the case where both of pieces of correcting information of Figs. 43A and 43B are stored in the operation information database 18, upon carrying out an operation correction that is coincident with the conditions of the respective pieces of operation correcting information, "1" is added to the "number of application times" by the alternation condition setting unit 82, and then stored. Since the "number of application times" in Fig. 43A is "0", this corresponds to the correcting method for deleting a section in which no operations are continuously executed beyond a certain threshold value or more, which has been described in the second embodiment, so that this indicates that the person 4 is continuously carrying out operations beyond the certain threshold value or more. Moreover, since the number of application times" in Fig. 43B is "3", this means that the correcting method for a portion having a biased operation parameter following the operation of the robot arm 5, which has been described in the fifth embodiment, is applied. Based upon a correction history information database 28, a piece of advice on the manipulation of the person 4 is displayed on the display unit 2. More specifically, among the "numbers of application times" of the correction information database 28, information relating to the operation correcting information having the highest number of times and a piece of advice on the manipulation of the person 4 relating to the operation correcting information are displayed on the display unit 2 by the operation correcting unit 20. Fig. 44 shows a specific example of the display unit 2. Right and left two screens are given to the display unit 2, and on the left screen in Fig. 44 (a), an operation of the robot arm 5 described in the operation information is displayed as an image, a photograph or a text. Moreover, on the right screen in Fig. 44(b), the information relating to the operation correcting information having the highest number of times and the advice on the manipulation of the person 4 relating to the operation correcting information are displayed as an image, a photograph or a text. Moreover, upon switching the job by the operation instruction unit 27, or upon completion of the correction, the displayed contents are switched on the display unit 2 by the operation correcting unit 20. Additionally, although an image, a photograph or a text is used in this example, a voice guidance or the like explaining the operation may be used.

(Eleventh Embodiment)

Since the basic structure of a control apparatus of the robot arm in an eleventh embodiment of the present invention is the same as that of the first embodiment, explanations for the common portions will be omitted, and the following description will discuss only different portions in detail.

In the eleventh embodiment, an explanation will be given by exemplifying a correcting process in which the respective correcting methods described in the first to ninth embodiment are used simultaneously. Additionally, since the respective correcting methods have been described in detail in the first to ninth embodiments, the explanations thereof will be omitted.

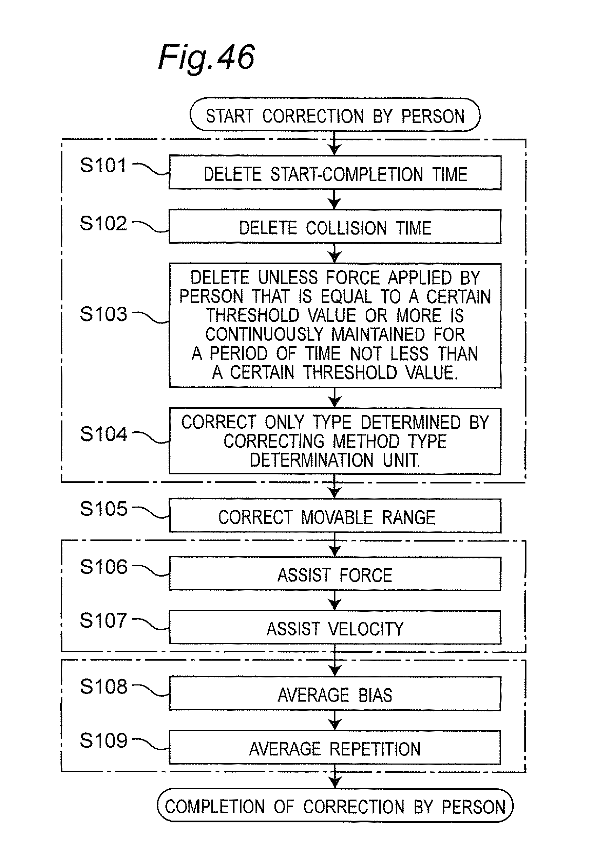

The operation correcting unit 20 carries out correcting processes in the order shown in a flow chart of Fig. 46 in accordance with the respective correcting methods described in the first to ninth embodiments.

In Fig. 46, first, when a correcting process is started by the person 4, the operation correcting unit 20 carries out a correction of the "start-completion time deletion" explained in the first embodiment (step S101).

Next, the operation correcting unit 20 carries out a correction of the "collision time deletion" explained in the third embodiment (step S102).

Next, the operation correcting unit 20 carries out a correction of the "deletion to be carried out unless an applied force by a person that is beyond a certain threshold value or more is continuously maintained for a period of time that is beyond a certain threshold value" or more explained in the second embodiment (step S103).

Next, the operation correcting unit 20 carries out the "correction to be executed only on the type determined by the correcting method type determination unit" explained in the fourth embodiment (step S104).

Next, the operation correcting unit 20 carries out the "correction of a movable range" explained in the seventh embodiment (step S105).

Next, the operation correcting unit 20 carries out a correction of the "force assist" explained in the eighth embodiment (step S106).

Next, the operation correcting unit 20 carries out a correction of the "velocity assist" explained in the ninth embodiment (step S107).

Next, the operation correcting unit 20 carries out a correction of the "bias averaging" explained in the fifth embodiment (step S108).

Next, the operation correcting unit 20 carries out a correction of the "repetition averaging" explained in the sixth embodiment (step S109).

Additionally, the correcting methods from step S101 to step S104 relate to correcting methods of a type in which any of portions of an operation corrected by the person 4 is deleted, and by applying these steps prior to the correcting methods from step S105 to step S109, it is possible to omit wasteful operation sections, and also to improve precision for extracting repetitive portions, for example, in step S109 or carry out a correction at a high speed. Moreover, with respect to the order of steps from S101 to S104, by first carrying out step S101, the correcting processes of steps S102 to S104 can be carried out with improved precision or at higher speeds.

Moreover, with respect to step S106 and step S107, even when the order thereof is switched, no problems are raised.

As described above, in the case where a correcting process is carried out by simultaneously using the respective correcting methods described in the first to ninth embodiments, by preliminarily applying the correcting methods of the type for deletion, it becomes possible to improve the correcting precision or processing speed.

Additionally, in the above-mentioned first to tenth embodiments, explanations have been given by exemplifying the robot arm 5; however, not limited to the arm, the present invention may be applied to a moving robot that is moved by wheels, or a walking robot with two legs, or a walking robot with multiple legs, or the like, and the same effects are exerted in relation to contact between the moving robot or the like and the human being.

By properly combining the arbitrary embodiments of the aforementioned various embodiments, the effects possessed by the embodiments can be produced.

INDUSTRIAL APPLICABILITY

The present invention can be effectively utilized as a control apparatus and a control method for a robot arm, a robot having the control apparatus for a robot arm, a control program for a robot arm, and an integrated electronic circuit for a robot arm that are used for controlling operations of a robot arm upon carrying out a job by a house-service robot or the like and a in cooperation with each other. Moreover, not limited to the house-service robot, the present invention can be applied to a control apparatus and a control method for a robot arm in a movable mechanism in a production facility or the like, a robot having the control apparatus for a robot arm, a control program for a robot arm, and an integrated electronic circuit for the robot.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A control apparatus for a robot arm, which controls an operation of the robot arm so as to carry out a job by using the robot arm, comprising:

an operation information acquiring unit that acquires at least one or more pieces of time series operation information relating to a position, an orientation, a velocity, and a force of the robot arm, in association with the operation;
an operation correcting information acquiring unit that acquires operation correcting information relating to a correcting method for the operation information carried out by the robot arm;
an alternation condition setting unit that, while the robot arm is being operated based upon the operation information, during the operation of the robot arm, after switching has been made, by applying a force of the person to the robot arm, from a control mode in which the operation of the robot arm is prevented from being corrected by a manipulation of the person to a control mode in which the operation of the robot arm is corrected by the manipulation by the person, sets an alternation condition for use in altering the operation of the robot arm by the manipulation of the person, based upon a force of the person applied to the robot arm, the operation information of the robot arm that is in operation, and the operation correcting information; and
an operation correcting unit which, in a case where any correction is required in response to the alternation condition set by the alternation condition setting unit, corrects at least one or more pieces of operation information relating to the position, the orientation, the velocity, and the force of the robot arm, acquired by the operation information acquiring unit,
wherein based upon the operation information corrected by the operation correcting unit, the operation of the robot arm is controlled.

2. The control apparatus for a robot arm according to claim 1, wherein the operation correcting information acquiring unit acquires a piece of operation correcting information relating to a correcting method described so as to carry out a correction by deleting one portion of a section of the operation information relating to the manipulation by the person on the robot arm of the person.

3. The control apparatus for a robot arm according to claim 1, wherein the operation correcting information acquiring unit acquires operation correcting information relating to a correcting method designed so as to carry out a correction on one portion of a section of the operation information relating to the manipulation by the person on the robot arm, by assisting at least one or more values among values of a position or a velocity of the robot arm or a force applied to the robot arm.

4. The control apparatus for a robot arm according to any one of claims 1, 2, and 3, further comprising:

a force detection unit that detects a force externally applied to the robot arm,
wherein the operation information acquired by the operation information acquiring unit is at least one of pieces of positional information of a hand of the robot arm, orientation information of the robot arm, velocity information of the robot arm, and information of a force applied to the hand of the robot arm, obtained at respective points of time in accordance with the operation carried out by the robot arm, and
in a case where a correction is required in response to the alternation condition set by using the alternation condition setting unit by the operation correcting unit, and also in a case where during an operation of the robot arm, the operation information, acquired by the operation information acquiring unit, is corrected in accordance with the force of the person detected by the force detection unit and the operation correcting information, by using at least one of the pieces of the positional information of a hand of the robot arm, the orientation information of the robot arm, the velocity information of the robot arm, and the force information, obtained at respective points of time in accordance with the operation carried out by the robot arm, the operation information acquired by the operation information acquiring unit is corrected.

**5.** The control apparatus for a robot arm according to claim 3, further comprising:

a force detection unit that detects a force externally applied to the robot arm,
wherein the operation correcting information acquired by the operation information acquiring unit relates to at least one of pieces of information for a periodicity correcting method that detects a periodic section from a track of the operation information relating to the manipulation of the person so as to make a correction and information for an assist correcting method that carries out a correction, after detection as to whether or not the correction is carried out by assisting one or more values of the position or the velocity of the robot arm, or the force to be applied to the robot arm on one portion of a section with respect to the operation that is being corrected by the person, and
in a case where a correction is required in response to the alternation condition set by using the alternation condition setting unit, during an operation of the robot arm, the operation correcting unit corrects the operation information acquired by the operation information acquiring unit in accordance with at least one of pieces of information relating to the force of the person detected by the force detection unit, the periodicity correcting method, and the assist correcting method.

**6.** The control apparatus for a robot arm according to claim 2, further comprising:

a force detection unit that detects a force externally applied to the robot arm,
wherein the operation correcting information acquired by the operation correcting information acquiring unit relates to a correcting method in which a correction is carried out by deleting at least one of sections of a section corresponding to a certain elapsed period of time from start of the manipulation of the robot arm by the person and a section immediately before completion of the manipulation of the robot arm by the person, and
in a case where a correction is required in response to the alternation condition set by the alternation condition setting unit, during the operation of the robot arm, the operation correcting unit corrects the operation information acquired by the operation information acquiring unit by using the force of the person detected by the force detection unit and the correcting method for deleting at least one of following sections (I) and (II):

(I) the section corresponding to the certain elapsed period of time from the start of the manipulation of the robot arm by the person, and
(II) the section immediately before the completion of the manipulation of the robot arm by the person, with lengths of the sections (I) and (II) being determined by a velocity of the robot arm.

**7.** The control apparatus for a robot arm according to claim 2, further comprising:

a force detection unit that detects a force externally applied to the robot arm,
wherein the operation correcting information relates to a correcting method in which a correction is carried out by deleting a section other than a section in which the force of the person is not less than a threshold value for use in force and a period of time that is not less than a threshold value for use in time is continuously elapsed, and
in a case where a correction is required in response to the alternation condition set by the alternation condition setting unit, during the operation of the robot arm, based upon the operation correcting unit corrects the operation information acquired by the operation information acquiring unit by using the force of the person detected by the force detection unit, and the correcting method for deleting the section in which the force of the person is not less than the threshold value for use in force and the period of time is not less than the threshold value for use in time is continuously elapsed.

**8.** The control apparatus for a robot arm according to claim 2, further comprising:

a force detection unit that detects a force externally applied to the robot arm,
wherein the operation correcting information relates to a correcting method in which, in a case where the force of the person is not less than a threshold value for use in force within a period of time that is a threshold value for use in time or less, a manipulation section within the corresponding period of time is deleted, and
in a case where a correction is required in response to the alternation condition set by the alternation condition setting unit, during the operation of the robot arm, the operation correcting unit corrects the operation information acquired by the operation information acquiring unit by using the force of the person detected by the force detection unit, and the correcting method in which, in a case where the force of the person is not less than the threshold value for use in force within the period of time that is the threshold value for use in time or less, a manipulation section within the corresponding period of time is deleted.

9. The control apparatus for a robot arm according to claim 2, further comprising:

a force detection unit that detects a force externally applied to the robot arm; and
a correcting method type determination unit that determines a type of a parameter to be corrected among the pieces of operation information acquired by the operation information acquiring unit,
wherein the operation correcting information relates to a correcting method that deletes parameters other than the type of the parameter determined by the correcting method type determination unit, and
in a case where a correction is required in response to the alternation condition set by the alternation condition setting unit, during the operation of the robot arm, the operation correcting unit corrects the operation information acquired by the operation information acquiring unit by using the force of the person detected by the force detection unit, and the correcting method for deleting a parameter except for the parameter having the type determined by the correcting method type determination unit.

10. The control apparatus for a robot arm according to claim 5, wherein the periodicity correcting method relates to a correcting method in which, in a section where there is a bias relating to one or more pieces of information among the pieces of information of the position, orientation, velocity, and force of the robot arm, a correction is made so as to eliminate the bias, and
in a case where a correction is required in response to the alternation condition set by the alternation condition setting unit, during the operation of the robot arm, the operation correcting unit corrects the operation information acquired by the operation information acquiring unit by using the force of the person detected by the force detection unit, and the correcting method for correcting pieces of information of the position and orientation of the robot arm so as to delete the bias in the section where the bias exists with respect to the piece of information relating to the position, the orientation, the velocity, or the force of the robot arm.

11. The control apparatus for a robot arm according to claim 5, wherein the periodicity correcting method relates to a correcting method in which, in a section where there are periodic repetitions relating to the piece of information of the position, orientation, velocity, or force of the robot arm, a correction is made so as to average the respective pieces of the information of the position, orientation, velocity or force of the robot arm in the repetitive section, and
in a case where a correction is required in response to the alternation condition set by the alternation condition setting unit, during the operation of the robot arm, the operation correcting unit corrects the operation information acquired by the operation information acquiring unit by using the force of the person detected by the force detection unit, and a correcting method which, in the section where there are periodic repetitions relating to the piece of information relating to the position, orientation, velocity, or force of the robot arm, carries out a correction so as to average the respective pieces of information relating to the position, orientation, velocity, or force of the robot arm, in the repetitive section.

12. The control apparatus for a robot arm according to claim 5, wherein the assist correcting method relates to a correcting method in which, in a case where manipulation of the robot arm by the person is continuously carried out number of times in a range of from a lower limit threshold value or more to an upper limit threshold value or less, as well as in a case where, with respect to one or more pieces of operation information of the position, orientation, velocity, and force, before and after the manipulation of the person, a difference between values of the one or more pieces of operation information before and after the manipulation is not less than a threshold value, corrects the operation information, and
in a case where a correction is required in response to the alternation condition set by the alternation condition setting unit, during the operation of the robot arm, the operation correcting unit corrects the operation information acquired by the operation information acquiring unit by using the force of the person detected by the force detection unit, and the correcting method which, in a case where manipulation by the person is continuously carried out number of times in the range of from the lower limit threshold value or more to the upper limit threshold value or less, as well as in a case where, with respect to one or more pieces of operation information of the position, orientation, velocity, and force, before and after the manipulation of the person, a difference between values of the one or more pieces of operation information before and after the manipulation is not less than the threshold value, carries out a correction on the operation information that has been changed.

13. The control apparatus for a robot arm according to claim 12, wherein the assist correcting method relates to a correcting method in which, in a case where manipulation by the person is continuously carried out number of times in a range of from the lower limit threshold value or more to the upper limit threshold value or less, as well as in a case where the positional information of the hand of the robot arm is changed from that before the manipulation of the person, with number of times in which the changed positional information is out of a movable range of the robot arm being not less than a threshold value for use in the movable range, the operation correcting unit corrects the positional information so as to be located within the movable range of the robot arm, and
in a case where a correction is required in response to the alternation condition set by the alternation condition setting unit, the operation correcting unit corrects the operation information acquired by the operation information acquiring unit by using the correcting method which, with manipulation by the person being continuously carried out number of times in the range of from the lower limit threshold value or more to the upper limit threshold value or less, as well as in a case where the positional information of the hand of the robot arm is changed from before the manipulation of the person, with the number of times in which the changed positional information is out of the movable range of the robot arm being not less than the threshold value or more for use in the movable range, corrects the positional information so as to be located within the movable range.

14. The control apparatus for a robot arm according to claim 12, wherein the force detection unit detects information relating to a force applied to the hand of the robot arm, and
the assist correcting method relates to a correcting method which, in a case where manipulation by the person is continuously carried out number of times in the range of from the lower limit threshold value or more to the upper limit threshold value or less, as well as in a case where the information relating to the force applied to the hand of the robot arm indicates that the applied force after the manipulation increases by a threshold value for use in force information or more in comparison with that before the manipulation, corrects the force information so as to increase the force information, and
in a case where a correction is required in response to the alternation condition set by the alternation condition setting unit, during the operation of the robot arm, the operation correcting unit corrects the operation information acquired by the operation information acquiring unit by using the force of the person detected by the force detection unit, and a correcting method which, with manipulation by the person being continuously carried out number of times in the range of from the lower limit threshold value or more to the upper limit threshold value or less, as well as in a case where the information relating to the force applied to the hand of the robot arm indicates that the applied force after the manipulation increases by the threshold value for use in force information or more in comparison with that before the manipulation, corrects the force information so as to increase the force information.

15. The control apparatus for a robot arm according to claim 12, wherein the assist correcting method relates to a correcting method which, in a case where manipulation by the person is continuously carried out number of times in the range of from the lower limit threshold value or more to the upper limit threshold value or less, as well as in a case where the information relating to a velocity applied to the hand of the robot arm indicates that an applied velocity after the manipulation increases by a threshold value for use in velocity information or more in comparison with that before the manipulation, corrects the velocity information so as to increase the velocity information, and
in a case where a correction is required in response to the alternation condition set by the alternation condition setting unit, during the operation of the robot arm, the operation correcting unit corrects the operation information acquired by the operation information acquiring unit by using the force of the person detected by the force detection unit, and a correcting method which, with manipulation by the person being continuously carried out number of times in the range of from the lower limit threshold value or more to the upper limit threshold value or less, as well as in a case where the information relating to a velocity applied to the hand of the robot arm indicates that an applied velocity after the manipulation increases by a threshold value for use in velocity information or more in comparison with that before the manipulation, corrects the velocity information so as to increase the velocity information.

16. The control apparatus for a robot arm according to claim 12, further comprising:

an assist value calculation unit that calculates a value used for correcting the operation information acquired by the operation information acquiring unit,
wherein the assist value calculation unit calculates the value in accordance with a number of times of manipulation on the robot arm by the person.

17. The control apparatus for a robot arm according to any one of claims 1, 2, and 3, further comprising:

a force detection unit that detects a force externally applied to the robot arm,
wherein in a case where manipulation of the robot arm by the person is continuously carried out number of times that is equal to a lower threshold value or more of the number of manipulation thereof, the operation information acquired by the operation information acquiring unit is corrected only by the force of the person detected by the force detection unit.

18. The control apparatus for a robot arm according to any one of claims 1, 2, and 3, further comprising:

a force detection unit that detects a force externally applied to the robot arm,
wherein in a case where a correction is required in response to the alternation condition set by the alternation condition setting unit, based upon the operation information, the operation correcting unit sets at least one or more of following three kinds of control modes for each of rotation axes of joint portions of the robot arm separately:

(I) a hybrid impedance control mode in which during the operation of the robot arm, in response to a force detected by the force detection unit and applied to the robot arm, the robot arm is actuated,
(II) an impedance control mode in which in response to a force detected by the force detection unit and applied to the robot arm in a stopped state from the person, the robot arm is actuated, and
(III) a force control mode in which the robot arm is actuated by applying a specified force thereto,

and midway during an operation of the robot arm by setting the control mode (III) to at least one of the directions of the rotation axes, with respect to the direction in which the control mode (III) has been set, switching is made to a control mode by which, upon manipulation by the person, the robot arm is not moved by a manipulation of the person during the operation of the robot arm so that, upon carrying out an operation by exerting the specified force of the operation information acquired by the operation information acquiring unit, the force is corrected.

19. The control apparatus for a robot arm according to any one of claims 1, 2, and 3, wherein in the case where a correction is required in response to the alternation condition set by the alternation condition setting unit, based upon the operation information, the operation correcting unit sets at least one or more of following three kinds of control modes for each of rotation axes of joint portions of the robot arm separately:

(I) a hybrid impedance control mode in which during the operation of the robot arm, in response to a force detected by the force detection unit and applied to the robot arm, the robot arm is actuated,
(II) an impedance control mode in which in response to a force detected by the force detection unit and applied to the robot arm in a stopped state from the person, the robot arm is actuated, and
(III) a force control mode in which the robot arm is actuated by applying a specified force thereto,

and midway during an operation of the robot arm by setting the control mode (II) to at least one of the directions of the rotation axes, with respect to the direction in which the control mode (I) or (II) has been set, switching is made to the hybrid impedance control mode, upon manipulation by the person, in response to the operation correcting information so that the operation information acquired by the operation information acquiring unit is corrected.

20. The control apparatus for a robot arm according to any one of claims 1, 2, and 3, further comprising:

a display unit that displays information relating to a piece of advice on the manipulation of the person based upon information relating to history of the operation correcting information applied at a time of the correction by the operation correcting unit.

21. The control apparatus for a robot arm according to any one of claims 1, 2, and 3, wherein in a case where a correction is required in response to the alternation condition set by the alternation condition setting unit, after correcting the operation information acquired by the operation information acquiring unit by using a correction method designed to make a correction by deleting one portion of sections of the operation information relating to the manipulation of the robot arm by the person, the operation correcting unit makes a correction on the one portion of sections of the operation information relating to the manipulation of the robot arm by the person, while assisting the one portion thereof.

22. A control method for a robot arm, which controls an operation of the robot arm so as to carry out a job by using the robot arm, comprising:

acquiring at least one or more pieces of time series operation information relating to a position, an orientation, a velocity, and a force of the robot arm, in association with the operation, by an operation information acquiring unit;

acquiring operation correcting information relating to a correcting method for the operation information carried out by the robot arm, by an operation correcting information acquiring unit;

while operating the robot arm based upon the operation information, during the operation of the robot arm, after switching has been made, by applying a force of the person to the robot arm, from a control mode in which the operation of the robot arm is prevented from being corrected by a manipulation of the person to a control mode in which the operation of the robot arm is corrected by the manipulation by the person, setting an alternation condition for use in altering the operation of the robot arm by a manipulation of the person, based upon the force of the person applied to the robot arm, the operation information of the robot arm that is in operation, and the operation correcting information, by an alternation condition setting unit;

in a case where a correction is required in response to the alternation condition set by the alternation condition setting unit, correcting at least one or more pieces of operation information relating to the position, the orientation, the velocity, and the force of the robot arm, acquired by the operation information acquiring unit, by an operation correcting unit; and

based upon the operation information corrected by the operation correcting unit, controlling the operation of the robot arm.

23. A robot comprising:

    the robot arm; and
    the control apparatus for a robot arm according to any one of claims 1 to 3, which controls the operation of the robot arm.

24. A control program for a robot arm, which controls an operation of the robot arm so as to carry out a job by using the robot arm, allowing a computer to execute steps of:

acquiring at least one or more pieces of time series operation information relating to a position, an orientation, a velocity, and a force of the robot arm, in association with the operation, by an operation information acquiring unit;

acquiring operation correcting information relating to a correcting method for the operation information carried out by the robot arm, by an operation correcting information acquiring unit;

while operating the robot arm based upon the operation information, during the operation of the robot arm, after switching has been made, by applying a force of the person to the robot arm, from a control mode in which the operation of the robot arm is prevented from being corrected by a manipulation of the person to a control mode in which the operation of the robot arm is corrected by the manipulation by the person, setting an alternation condition for use in altering the operation of the robot arm by the manipulation of the person, based upon the force of the person applied to the robot arm, the operation information of the robot arm that is in operation, and the operation correcting information, by an alternation condition setting unit;

in a case where a correction is required in response to the alternation condition set by the alternation condition setting unit, correcting at least one or more pieces of operation information relating to the position, the orientation, the velocity, and the force of the robot arm, acquired by the operation information acquiring unit; and

based upon the operation information corrected by the operation correcting unit, controlling the operation of the robot arm.

25. An integrated electronic circuit for a robot arm, which controls an operation of the robot arm so as to carry out a job by using the robot arm, comprising:

acquiring at least one or more pieces of time series operation information relating to a position, an orientation, a velocity, and a force of the robot arm, in association with the operation, by an operation information acquiring unit;

acquiring operation correcting information relating to a correcting method for the operation information carried out by the robot arm by an operation correcting information acquiring unit;

while operating the robot arm based upon the operation information, during the operation of the robot arm, after switching has been made, by applying a force of the person to the robot arm, from a control mode in which the operation of the robot arm is prevented from being corrected by a manipulation of the person to a control mode in which the operation of the robot arm is corrected by the manipulation by the person, setting an alternation condition for use in altering the operation of the robot arm by the manipulation of the person, based upon the force of the person applied to the robot arm, the operation information of the robot arm that is in operation, and the operation correcting information, by an alternation condition setting unit;

in a case where a correction is required in response to the alternation condition set by the alternation condition setting unit, correcting at least one or more pierces of operation information relating to the position, the orientation, the velocity, and the force of the robot arm, acquired by the operation information acquiring unit, by an operation correcting unit; and

based upon the operation information corrected by the operation correcting unit, controlling the operation of the robot arm.

Fig.1

EP 2 390 064 A1

Fig.2

Fig.3

CONTROL UNIT — 22

21 — CONTROL PARAMETER MANAGING UNIT

51 — IMPEDANCE CALCULATION UNIT

53 — $F_{ext}$ FORCE DETECTION UNIT

$r_{d\triangle}$

54 — HAND CONTROL UNIT

55 — TARGET TRACK GENERATION UNIT

$r_d$ +  + $r_{dm}$ — 80

+  − $r_e$

56 — POSITIONAL ERROR COMPENSATING UNIT — $U_{re}$

57 — APPROXIMATION REVERSE KINEMATICAL CALCULATION UNIT — $U_{qe}$

ROBOT ARM — $q$ — 5

$i$

24

58 — FORWARD KINEMATICAL CALCULATION UNIT — $q$

POSITION CONTROL SYSTEM — 59

$r$

EP 2 390 064 A1

## Fig.4A

| JOB ID | OPERATION ID | POSITION-ORIENTATION (m) (x,y,z, $\phi,\theta,\psi$) | FORCE (N) ($f_x,f_y,f_z,$ $f_\phi,f_\theta,f_\psi$) | FLAG (32 bits) | HAND | TIME (sec) | CORRECTION PARAMETER FLAG (32 bits) | PROGRESS INFORMATION |
|---|---|---|---|---|---|---|---|---|
| . . | . . | . . | . . | . . | . . | . . | . . | . . |
| 1 | 1 | 0.1,0.1,0, 0,0,0 | 0,0,5,0,0,0 | 0,1,3,4,5,8 bit :1 | 1 | 0.37 | 8TH bit : 1 THE REST : 0 | 1 |
| 1 | 2 | 0.1,0.2,0, 0,0,0 | 0,0,5,0,0,0 | 0,1,3,4,5,8 bit :1 | 1 | 0.37 | 8TH bit : 1 THE REST : 0 | 0 |
| . . | . . | . . | . . | . . | . . | . . | . . | . . |
| 1 | 7 | 0.2,0.2,0, 0,0,0 | 0,0,5,0,0,0 | 0,1,3,4,5,8 bit :1 | 1 | 0.37 | 8TH bit : 1 THE REST : 0 | 0 |
| 1 | 8 | 0.2,0.1,0, 0,0,0 | 0,0,5,0,0,0 | 0,1,3,4,5,8 bit :1 | 1 | 0.37 | 8TH bit : 1 THE REST : 0 | 0 |
| . . | . . | . . | . . | . . | . . | . . | . . | . . |
| 2 | 1 | 0.1,0.1,0.4, 0,0,0 | | 0-5 bit : 1 THE REST : 0 | | | 0,1,2 bit : 1 THE REST : 0 | |
| 2 | 2 | 0.1,0.2,0.4, 0,0,0 | | 0-5 bit : 1 THE REST : 0 | | | 0,1,2 bit : 1 THE REST : 0 | |
| . . | . . | . . | . . | . . | . . | . . | . . | . . |
| 2 | 8 | 0.2,0.2,0.4, 0,0,0 | | 0-5 bit : 1 THE REST : 0 | | | 0,1,2 bit : 1 THE REST : 0 | |
| . . | . . | . . | . . | . . | . . | . . | . . | . . |

EP 2 390 064 A1

*Fig.4B*

| JOB ID | OPERATION ID | POSITION-ORIENTATION (m) $(x,y,z, \phi,\theta,\psi)$ | FORCE (N) $(f_x,f_y,f_z, f_\phi,f_\theta,f_\psi)$ | FLAG (32 bits) | HAND | TIME (sec) | CORRECTION PARAMETER FLAG (32 bits) | PROGRESS INFORMATION |
|---|---|---|---|---|---|---|---|---|
| . . | . . | . . | . . | . . | . . | . . | . . | . . |
| 1 | 1 | 0.1,0.1,0, 0,0,0 | 0,0,5,0,0,0 | 0,1,3,4,5,8 bit :1 | 1 | 0.37 | 8TH bit : 1 THE REST : 0 | 1 |
| 1 | 2 | 0.1,0.2,0, 0,0,0 | 0,0,5,0,0,0 | 0,1,3,4,5,8 bit :1 | 1 | 0.37 | 8TH bit : 1 THE REST : 0 | 0 |
| . . | . . | . . | . . | . . | . . | . . | . . | . . |
| 1 | 7 | 0.2,0.2,0, 0,0,0 | 0,0,5,0,0,0 | 0,1,3,4,5,8 bit :1 | 1 | 0.37 | 8TH bit : 1 THE REST : 0 | 0 |
| 1 | 8 | 0.2,0.1,0, 0,0,0 | 0,0,5,0,0,0 | 0,1,3,4,5,8 bit :1 | 1 | 0.37 | 8TH bit : 1 THE REST : 0 | 0 |
| . . | . . | . . | . . | . . | . . | . . | . . | . . |
| 2 | 1 | 0.1,0.1,0.4, 0,0,0 | | 0-5 bit : 1 THE REST : 0 | | | 0,1,2 bit : 1 THE REST : 0 | 1 |
| 2 | 2 | 0.1,0.2,0.4, 0,0,0 | | 0-5 bit : 1 THE REST : 0 | | | 0,1,2 bit : 1 THE REST : 0 | 0 |
| . . | . . | . . | . . | . . | . . | . . | . . | . . |
| 2 | 8 | 0.2,0.2,0.4, 0,0,0 | | 0-5 bit : 1 THE REST : 0 | | | 0,1,2 bit : 1 THE REST : 0 | 0 |
| . . | . . | . . | . . | . . | . . | . . | . . | . . |

EP 2 390 064 A1

## Fig.5

| | | | | | | | | | $f_\psi$ | $f_\theta$ | $f_\phi$ | $f_z$ | $f_y$ | $f_x$ | $\psi$ | $\theta$ | $\phi$ | z | y | x |
|---|---|---|---|---|---|---|---|---|---|---|---|---|---|---|---|---|---|---|---|---|
| | | | | | UNUSED | | | | | | | | | | | | | | | |
| BIT NUMBER | 31 | ... | 18 | 17 | 16 | 15 | 14 | 13 | 12 | 11 | 10 | 9 | 8 | 7 | 6 | 5 | 4 | 3 | 2 | 1 | 0 |
| VALUE | 0 | ... | | | | 0 | 0 | 0 | 0 | 0 | 0 | 0 | 1 | 0 | 0 | 1 | 1 | 1 | 0 | 1 | 1 |

FORCE: bits 11–6 ($f_\psi$, $f_\theta$, $f_\phi$, $f_z$, $f_y$, $f_x$)

POSITION-ORIENTATION: bits 5–0 ($\psi$, $\theta$, $\phi$, z, y, x)

EP 2 390 064 A1

## Fig.6

| | | | | UNUSED | | | | | $f_\psi$ | $f_\theta$ | $f_\phi$ | $f_z$ | $f_y$ | $f_x$ | $\psi$ | $\theta$ | $\phi$ | z | y | x |
|---|---|---|---|---|---|---|---|---|---|---|---|---|---|---|---|---|---|---|---|---|
| BIT NUMBER | 31 | ... | 18 | 17 | 16 | 15 | 14 | 13 | 12 | 11 | 10 | 9 | 8 | 7 | 6 | 5 | 4 | 3 | 2 | 1 | 0 |
| VALUE | 0 | ... | | | | 0 | 0 | 0 | 0 | 0 | 0 | 0 | 1 | 0 | 0 | 1 | 1 | 1 | 0 | 1 | 1 |

FORCE      POSITION-ORIENTATION

Fig. 7

Fig. 8A

Fig. 8B

Fig. 8C

Fig. 9

Fig. 10

*Fig.11*

( START CONTROL )

S1 — ACQUIRE JOINT ANGLE $q$

S2 — CALCULATE JACOB MATRIX $J_r$

S3 — CALCULATE HAND POSITION-ORIENTATION $r$

S4 — CALCULATE TARGET HAND POSITION-ORIENTATION $r_d$ AND TARGET FORCE $f_d$

S5 — CALCULATE FORCE $F_{ext}$ APPLIED TO ROBOT ARM

HIGH-RIGIDITY POSITION CONTROL MODE

S6 — SWITCH CONTROL MODE

· IMPEDANCE CONTROL MODE
· FORCE CONTROL MODE

POSITION CONTROL MODE

S7 — $r_{d\triangle} = 0$

S8 — $r_{d\triangle} = 0$

S9 — CALCULATE POSITION-ORIENTATION TARGET CORRECTION OUTPUT $r_{d\triangle}$

S10 — CALCULATE HAND POSITION ORIENTATION ERROR $r_e$ WITH HIGHER GAIN

S11 — CALCULATE HAND POSITION ORIENTATION ERROR $r_e$

S12 — CALCULATE JOINT ANGLE ERROR COMPENSATION OUTPUT $U_{qe}$

S13 — DRIVE MOTOR

( CONTROL END )

EP 2 390 064 A1

## Fig.12A

| OPERATION CORRECTING INFORMATION ID | CORRECTING SECTION | | CORRECTING METHOD | JOB ID |
| --- | --- | --- | --- | --- |
| | START TIME (TABLE ID) | COMPLETION TIME (TABLE ID) | | |
| 1 | 1 | 2 | DELETION | 2 |
| 2 | 3 | 2 | DELETION | 1,3 |

## Fig.12B

| TABLE ID | VELOCITY (m/s) | CORRECTING TIME (s) |
|---|---|---|
| 1 | LESS THAN 0.2 | 1 |
| 1 | 0.2 OR MORE TO LESS THAN 0.3 | 2 |
| 1 | 0.3 OR MORE | 3 |
| 2 | LESS THAN 0.2 | 0.5 |
| 2 | 0.2 OR MORE TO LESS THAN 0.3 | 1 |
| 2 | 0.3 OR MORE | 2 |
| 3 | LESS THAN 0.2 | 3 |
| 3 | 0.2 OR MORE TO LESS THAN 0.3 | 4 |
| 3 | 0.3 OR MORE | 5 |

## Fig.13

| ID | POSITION-ORIENTATION (m) $(x,y,z,\phi,\theta,\psi)$ | TIME (sec) | VELOCITY (m/s) |
|---|---|---|---|
| 1 | 0.1,0.1,0,0,0,0 | 0 | – |
| 2 | 0.1,0.2,0,0,0,0 | 0.2 | (0,0.5,0,0,0,0) |
| . . | . . | . . | . . |
| 4 | 0.2,0.3,0,0,0,0 | 0.8 | (0,0.5,0,0,0,0) |
| 5 | 0.2,0.1,0,0,0,0 | 1.0 | (0,-0.5,0,0,0,0) |
| . . | . . | . . | . . |
| 10 | 0.2,0.3,0,0,0,0 | 2.0 | (0,0.5,0,0,0,0) |
| 11 | 0.2,0.1,0,0,0,0 | 3.0 | (0,-0.5,0,0,0,0) |
| . . | . . | . . | . . |
| 19 | 0.1,0.1,0.4,0,0,0 | 3.8 | (0,0.5,0,0,0,0) |
| 20 | 0.1,0.2,0.1,0,0,0 | 4.0 | (0,0.5,0,0,0,0) |
| . . | . . | . . | . . |
| 25 | 0.2,0.2,0.4,0,0,0 | 5.0 | (0,0.25,0,0,0,0) |

# Fig.14

START

S50 — SELECT JOB

S51 — SET CONTROL MODE
BASED UPON "FLAG"

S52 — START OPERATION

S53 — START CORRECTION

S54 — SET CONTROL MODE BASED UPON
"CORRECTION PARAMETER FLAG"

S55 — ACQUIRE HAND POSITION-ORIENTATION
OF ROBOT

S56 — CORRECT IN ACCORDANCE WITH
OPERATION CORRECTING INFORMATION

S57 — STORE OPERATION INFORMATION

END

*Fig.15A*

| ID | POSITION-ORIENTATION (m) $(x,y,z,\phi,\theta,\psi)$ | FORCE (N) $(f_x,f_y,f_z,f_\phi,f_\theta,f_\psi)$ | TIME (sec) |
|---|---|---|---|
| 1 | 0.1,0.1,0,0,0,0 | 0.1,0.1,0,0,0,0 | 0 |
| 2 | 0.1,0.2,0,0,0,0 | 0.1,0.2,0,0,0,0 | 0.2 |
| ‥ | ‥ | ‥ | ‥ |
| 4 | 0.2,0.3,0,0,0,0 | 0.2,0.3,0,0,0,0 | 0.8 |
| 5 | 0.2,0.1,0,0,0,0 | 0.2,0.1,0,0,0,0 | 1.0 |
| ‥ | ‥ | ‥ | ‥ |
| 10 | 0.2,0.3,0,0,0,0 | 0.2,0.3,0,0,0,0 | 2.0 |
| 11 | 0.2,0.1,0,0,0,0 | 0.2,0.1,0,0,0,0 | 2.2 |
| ‥ | ‥ | ‥ | ‥ |
| 19 | 0.1,0.1,0.4,0,0,0 | 0.1,0.1,0.4,0,0,0 | 3.8 |
| 20 | 0.1,0.2,0.1,0,0,0 | 0.1,0.2,0.1,0,0,0 | 4.0 |
| ‥ | ‥ | ‥ | ‥ |
| 25 | 0.2,0.2,0.4,0,0,0 | 0.2,0.2,0.4,0,0,0 | 5.0 |

DELETION { (ID 2 ... 5)

DELETION { (ID 20 ... 25)

*Fig.15B*

FORCE (fx)

(b)

THRESHOLD VALUE $f_1$(3N)

time1(3s)

DELETION | CORRECTION | DELETION → TIME

FORCE (fy)

(c)

THRESHOLD VALUE $f_1$(3N)

time1(3s)

DELETION | CORRECTION | DELETION → TIME

72

*Fig.16*

| OPERATION CORRECTING INFORMATION ID | CORRECTING SECTION | | CORRECTING METHOD | JOB ID |
|---|---|---|---|---|
| | THRESHOLD VALUE OF FORCE (N) | THRESHOLD VALUE OF TIME (Sec) | | |
| 1 | 3 | 3 | DELETION | 2 |
| 2 | 4 | 5 | DELETION | 1,3 |

## Fig.17A

| ID | POSITION-ORIENTATION (m) $(x,y,z,\phi,\theta,\psi)$ | FORCE (N) $(f_x,f_y,f_z,f_\phi,f_\theta,f_\psi)$ | TIME (sec) |
|----|----|----|----|
| 1 | 0.1,0.1,0,0,0,0 | 0.1,0.1,0,0,0,0 | 0 |
| 2 | 0.1,0.2,0,0,0,0 | 0.1,0.2,0,0,0,0 | 0.2 |
| · · | · · | · · | · · |
| 4 | 0.2,0.3,0,0,0,0 | 0.2,0.3,0,0,0,0 | 0.8 |
| 5 | 0.2,0.1,0,0,0,0 | 0.2,0.1,0,0,0,0 | 1.0 |
| · · | · · | · · | · · |
| 10 | 0.2,0.3,0,0,0,0 | 0.2,0.3,0,0,0,0 | 2.0 |
| 11 | 0.2,0.1,0,0,0,0 | 0.2,0.1,0,0,0,0 | 2.2 |
| · · | · · | · · | · · |
| 19 | 0.1,0.1,0.4,0,0,0 | 0.1,0.1,0.4,0,0,0 | 3.8 |
| 20 | 0.1,0.2,0.1,0,0,0 | 0.1,0.2,0.1,0,0,0 | 4.0 |
| · · | · · | · · | · · |
| 25 | 0.2,0.2,0.4,0,0,0 | 0.2,0.2,0.4,0,0,0 | 5.0 |

## Fig.17B

## Fig.17C

FORCE (fx)

THRESHOLD VALUE f₂

time2

TIME

DELETION

## Fig.18

| OPERATION CORRECTING INFORMATION ID | CORRECTING SECTION | | CORRECTING METHOD | JOB ID |
|---|---|---|---|---|
| | THRESHOLD VALUE OF FORCE (N) | THRESHOLD VALUE OF TIME (Sec) | | |
| 1 | 13 | 1 | DELETION | 2 |
| 2 | 12 | 2 | DELETION | 1,3 |

Fig.19

EP 2 390 064 A1

## Fig.20

| OPERATION CORRECTING INFORMATION ID | CORRECTING SECTION | | CORRECTING METHOD | JOB ID |
|---|---|---|---|---|
| | PREFERENCE DEGREE ID NUMBER | | | |
| 1 | 1 | | CORRECTION | 1 |
| 2 | 1,2 | | DELETION | 2,3 |

EP 2 390 064 A1

## Fig.21

| ID | POSITION-ORIENTATION (m) $(x,y,z,\phi,\theta,\psi)$ | FORCE (N) $(f_x,f_y,f_z,f_\phi,f_\theta,f_\psi)$ | TIME (sec) |
|---|---|---|---|
| 1 | 0.1,0.1,0,0,0,0 | 0.1,0.1,0,0,0,0 | 0 |
| 2 | 0.1,0.2,0,0,0,0 | 0.1,0.2,0,0,0,0 | 0.2 |
| . . | . . | . . | . . |
| 4 | 0.2,0.3,0,0,0,0 | 0.2,0.3,0,0,0,0 | 0.8 |
| 5 | 0.2,0.1,0,0,0,0 | 0.2,0.1,0,0,0,0 | 1.0 |
| . . | . . | . . | . . |
| 10 | 0.2,0.3,0,0,0,0 | 0.2,0.3,0,0,0,0 | 2.0 |
| 11 | 0.2,0.1,0,0,0,0 | 0.2,0.1,0,0,0,0 | 2.2 |
| . . | . . | . . | . . |
| 19 | 0.1,0.1,0.4,0,0,0 | 0.1,0.1,0.4,0,0,0 | 3.8 |
| 20 | 0.1,0.2,0.1,0,0,0 | 0.1,0.2,0.1,0,0,0 | 4.0 |
| . . | . . | . . | . . |
| 25 | 0.2,0.2,0.4,0,0,0 | 0.2,0.2,0.4,0,0,0 | 5.0 |

## Fig.22

| OPERATION CORRECTING INFORMATION ID | CORRECTING SECTION | | CORRECTING METHOD | JOB ID |
|---|---|---|---|---|
| | PRESENCE OR ABSENCE OF BIAS | | | |
| 1 | 1 | | AVERAGED | 1 |
| 2 | 1 | | MINIMUM VALUE | 2,3 |

EP 2 390 064 A1

## Fig.23A

| ID | POSITION-ORIENTATION (m) $(x,y,z,\phi,\theta,\psi)$ | FORCE (N) $(f_x,f_y,f_z,f_\phi,f_\theta,f_\psi)$ | TIME (sec) |
|---|---|---|---|
| 1 | 0.1,0.1,0,0,0,0 | 0.1,0.1,0,0,0,0 | 0 |
| 2 | 0.1,0.2,0,0,0,0 | 0.1,0.2,0,0,0,0 | 0.2 |
| · · | · · | · · | · · |
| 4 | 0.2,0.3,0,0,0,0 | 0.2,0.3,0,0,0,0 | 0.8 |
| 5 | 0.2,0.1,0,0,0,0 | 0.2,0.1,0,0,0,0 | 1.0 |
| · · | · · | · · | · · |
| 10 | 0.2,0.3,0,0,0,0 | 0.2,0.3,0,0,0,0 | 2.0 |
| 11 | 0.2,0.1,0,0,0,0 | 0.2,0.1,0,0,0,0 | 2.2 |
| · · | · · | · · | · · |
| 19 | 0.1,0.1,0.4,0,0,0 | 0.1,0.1,0.4,0,0,0 | 3.8 |
| 20 | 0.1,0.2,0.1,0,0,0 | 0.1,0.2,0.1,0,0,0 | 4.0 |
| · · | · · | · · | · · |
| 25 | 0.2,0.2,0.4,0,0,0 | 0.2,0.2,0.4,0,0,0 | 5.0 |

## Fig.23B

VELOCITY (fdx)

TIME

## Fig.23C

FORCE (fz)

TIME

# Fig.23D

VELOCITY (fdx)

TIME

# Fig.23E

FORCE (fz)

TIME

## Fig.24

| OPERATION CORRECTING INFORMATION ID | CORRECTING SECTION | CORRECTING METHOD | JOB ID |
| --- | --- | --- | --- |
| | PRESENCE OR ABSENCE OF REPETITION | | |
| 1 | 1 | AVERAGED | 2 |
| 2 | 1 | MINIMUM VALUE | 1,3 |

## Fig.25A

| ID | POSITION-ORIENTATION (m) $(x,y,z,\phi,\theta,\psi)$ | TIME (sec) |
|---|---|---|
| 1 | 0.1,0.1,0,0,0,0 | 0 |
| 2 | 0.1,0.2,0,0,0,0 | 0.2 |
| . . | . . | . . |
| 4 | 0.2,0.3,0,0,0,0 | 0.8 |
| 5 | 0.2,0.1,0,0,0,0 | 1.0 |
| . . | . . | . . |
| 10 | 0.2,0.3,0,0,0,0 | 2.0 |
| 11 | 0.2,0.1,0,0,0,0 | 2.2 |
| . . | . . | . . |
| 19 | 0.1,0.1,0.4,0,0,0 | 3.8 |
| 20 | 0.1,0.2,0.1,0,0,0 | 4.0 |
| . . | . . | . . |
| 25 | 0.2,0.2,0.4,0,0,0 | 5.0 |

## Fig.25B

## Fig.25C

POSITION (x)

SECTION 1 | SECTION 2 | SECTION 3 | SECTION 4

$r_{dn2}$ $r_{dn2}$ $r_{dn2}$ $r_{dn2}$

$r_{dn1}$ $r_{dn3}$ $r_{dn1}$ $r_{dn3}$ $r_{dn1}$ $r_{dn3}$ $r_{dn1}$ $r_{dn3}$

TIME

## Fig.26A

TRACK OF ROBOT ARM 5

6

## Fig.26B

6

91a

TRACK OF ROBOT ARM 5

*Fig. 27A*

Fig. 27B

## Fig.28

| OPERATION CORRECTING INFORMATION ID | CORRECTING SECTION | | | | CORRECTING METHOD | JOB ID |
|---|---|---|---|---|---|---|
| | DISSATISFACTORY SECTION | | | TOTAL NUMBER OUTSIDE MOVABLE RANGE | | |
| | TIME (sec) | NUMBER OF TIMES (LOWER LIMIT) | NUMBER OF TIMES (UPPER LIMIT) | | | |
| 1 | 5 | 3 | 10 | 1 | OPERATE WITHIN MOVABLE RANGE | 1 |
| 2 | 12 | 2 | 6 | 1 | OPERATE WITHIN MOVABLE RANGE | 2,3 |

EP 2 390 064 A1

## Fig.29

| OPERATION CORRECTING INFORMATION ID | CORRECTING SECTION | | | | CORRECTING METHOD | JOB ID |
|---|---|---|---|---|---|---|
| | DISSATISFACTORY SECTION | | | THRESHOLD VALUE OF FORCE VARIATION $(f_x, f_y, f_z, f_\phi, f_\theta, f_\psi)$ | | |
| | TIME (sec) | NUMBER OF TIMES (LOWER LIMIT) | NUMBER OF TIMES (UPPER LIMIT) | | | |
| 1 | 30 | 3 | 10 | (3,3,3,3,3,3,) | CONSTANT CORRECTION (N) 5 | 1 |
| 2 | 25 | 2 | 7 | (2,2,2,2,2,2,) | CONSTANT CORRECTION (N) 4 | 2,3 |

EP 2 390 064 A1

*Fig.30*

| MANIPULATION ID | ID | POSITION-ORIENTATION (m) $(x,y,z,\phi,\theta,\psi)$ | FORCE (N) $(f_x,f_y,f_z,f_\phi,f_\theta,f_\psi)$ | TIME AND DATE |
|---|---|---|---|---|
| 1 | 1 | 0.1,0.1,0,0,0,0 | 0.1,0.1,0,0,0,0 | 2008/8/1 15:36:20.2 |
| 1 | 2 | 0.1,0.2,0,0,0,0 | 0.1,0.2,0,0,0,0 | 2008/8/1 15:36:20.4 |
| . . | . . | . . | . . | . . |
| 1 | 4 | 0.2,0.3,0,0,0,0 | 0.2,0.3,0,0,0,0 | 2008/8/1 15:36:20.8 |
| 1 | 5 | 0.2,0.1,0,0,0,0 | 0.2,0.1,0,0,0,0 | 2008/8/1 15:36:21.0 |
| . . | . . | . . | . . | . . |
| 1 | 10 | 0.2,0.3,0,0,0,0 | 0.2,0.3,0,0,0,0 | 2008/8/1 15:36:22.0 |
| 1 | 11 | 0.2,0.1,0,0,0,0 | 0.2,0.1,0,0,0,0 | 2008/8/1 15:36:22.2 |
| . . | . . | . . | . . | . . |
| 1 | 19 | 0.1,0.1,0.4,0,0,0 | 0.1,0.1,0.4,0,0,0 | 2008/8/1 15:36:23.8 |
| 1 | 20 | 0.1,0.2,0.1,0,0,0 | 0.1,0.2,0.1,0,0,0 | 2008/8/1 15:36:24.0 |
| . . | . . | . . | . . | . . |
| 2 | 1 | 0.2,0.2,0.4,0,0,0 | 0.2,0.2,0.4,0,0,0 | 2008/8/1 15:36:27.0 |
| 2 | 2 | 0.1,0.1,0,0,0,0 | 0.1,0.1,0,0,0,0 | 2008/8/1 15:36:27.2 |
| 2 | 3 | 0.1,0.2,0,0,0,0 | 0.1,0.2,0,0,0,0 | 2008/8/1 15:36:27.4 |
| . . | . . | . . | . . | . . |
| 2 | 10 | 0.2,0.3,0,0,0,0 | 0.2,0.3,0,0,0,0 | 2008/8/1 15:36:27.8 |
| 2 | 11 | 0.2,0.1,0,0,0,0 | 0.2,0.1,0,0,0,0 | 2008/8/1 15:36:28.0 |
| . . | . . | . . | . . | . . |
| 3 | 1 | 0.2,0.2,0.4,0,0,0 | 0.2,0.2,0.4,0,0,0 | 2008/8/1 15:36:33.0 |
| 3 | 2 | 0.1,0.1,0,0,0,0 | 0.1,0.1,0,0,0,0 | 2008/8/1 15:36:33.2 |
| 3 | 3 | 0.1,0.2,0,0,0,0 | 0.1,0.2,0,0,0,0 | 2008/8/1 15:36:33.4 |
| . . | . . | . . | . . | . . |
| 3 | 10 | 0.2,0.3,0,0,0,0 | 0.2,0.3,0,0,0,0 | 2008/8/1 15:36:33.8 |
| 3 | 11 | 0.2,0.1,0,0,0,0 | 0.2,0.1,0,0,0,0 | 2008/8/1 15:36:34.0 |

FIRST CORRECTION (rows manipulation ID 1)

SECOND CORRECTION (rows manipulation ID 2)

THIRD CORRECTION (rows manipulation ID 3)

Fig.31

*Fig. 32A*

5

30

9

3

*Fig. 32B*

4

30

5

9

3

Fig.32C

## Fig.33

| OPERATION CORRECTING INFORMATION ID | CORRECTING SECTION | | | | CORRECTING METHOD | JOB ID |
|---|---|---|---|---|---|---|
| | DISSATISFACTORY SECTION | | | THRESHOLD VALUE OF VELOCITY VARIATION $(d_x, d_y, d_z, d_\phi, d_\theta, d_\psi)$ | | |
| | TIME (sec) | NUMBER OF TIMES (LOWER LIMIT) | NUMBER OF TIMES (UPPER LIMIT) | | | |
| 1 | 30 | 3 | 10 | (0.3,0.3,0.3, 0.3,0.3,0.3) | CONSTANT CORRECTION (m/sec) 0.5 | 1 |
| 2 | 25 | 2 | 8 | (0.2,0.2,0.2, 0.2,0.2,0.2) | CONSTANT CORRECTION (m/sec) 0.3 | 2,3 |

EP 2 390 064 A1

EP 2 390 064 A1

*Fig.34*

| MANIPULATION ID | ID | POSITION-ORIENTATION (m) $(x,y,z,\phi,\theta,\psi)$ | TIME AND DATE |
|---|---|---|---|
| 1 | 1 | 0.1,0.1,0,0,0,0 | 2008/8/1 15:36:20.2 |
| 1 | 2 | 0.1,0.2,0,0,0,0 | 2008/8/1 15:36:20.4 |
| . . | . . | . . | . . |
| 1 | 4 | 0.2,0.3,0,0,0,0 | 2008/8/1 15:36:20.8 |
| 1 | 5 | 0.2,0.1,0,0,0,0 | 2008/8/1 15:36:21.0 |
| . . | . . | . . | . . |
| 1 | 10 | 0.2,0.3,0,0,0,0 | 2008/8/1 15:36:22.0 |
| 1 | 11 | 0.2,0.1,0,0,0,0 | 2008/8/1 15:36:22.2 |
| . . | . . | . . | . . |
| 1 | 19 | 0.1,0.1,0.4,0,0,0 | 2008/8/1 15:36:23.8 |
| 1 | 20 | 0.1,0.2,0.1,0,0,0 | 2008/8/1 15:36:24.0 |
| . . | . . | . . | . . |
| 2 | 1 | 0.2,0.2,0.4,0,0,0 | 2008/8/1 15:36:27.0 |
| 2 | 2 | 0.1,0.1,0,0,0,0 | 2008/8/1 15:36:27.2 |
| 2 | 3 | 0.1,0.2,0,0,0,0 | 2008/8/1 15:36:27.4 |
| . . | . . | . . | . . |
| 2 | 10 | 0.2,0.3,0,0,0,0 | 2008/8/1 15:36:27.8 |
| 2 | 11 | 0.2,0.1,0,0,0,0 | 2008/8/1 15:36:28.0 |
| . . | . . | . . | . . |
| 3 | 1 | 0.2,0.2,0.4,0,0,0 | 2008/8/1 15:36:33.0 |
| 3 | 2 | 0.1,0.1,0,0,0,0 | 2008/8/1 15:36:33.2 |
| 3 | 3 | 0.1,0.2,0,0,0,0 | 2008/8/1 15:36:33.4 |
| . . | . . | . . | . . |
| 3 | 10 | 0.2,0.3,0,0,0,0 | 2008/8/1 15:36:33.8 |
| 3 | 11 | 0.2,0.1,0,0,0,0 | 2008/8/1 15:36:34.0 |

FIRST CORRECTION (manipulation ID 1)

SECOND CORRECTION (manipulation ID 2)

THIRD CORRECTION (manipulation ID 3)

*Fig.35*

| NUMBER OF MANIPULATIONS | ASSIST VALUE (N) |
|---|---|
| 3-6 | 5 |
| 7-10 | 7 |
| 11-14 | 9 |
| 15-18 | 10 |
| 19-22 | 12 |
| . . | . . |
| . . | . . |

*Fig.36*

| NUMBER OF MANIPULATIONS | ASSIST VALUE (m/sec) |
|---|---|
| 3-6 | 0.5 |
| 7-10 | 0.7 |
| 11-14 | 0.9 |
| 15-18 | 1.0 |
| 19-22 | 1.2 |
| . . | . . |
| . . | . . |

## Fig.37

| OPERATION CORRECTING INFORMATION ID | CORRECTING SECTION | | | | CORRECTING METHOD | JOB ID |
|---|---|---|---|---|---|---|
| | DISSATISFACTORY SECTION | | | THRESHOLD VALUE OF VELOCITY VARIATION $(d_x, d_y, d_z, d_\phi, d_\theta, d_\psi)$ | | |
| | TIME (sec) | NUMBER OF TIMES (LOWER LIMIT) | NUMBER OF TIMES (UPPER LIMIT) | | | |
| 1 | 30 | 11 | -1 | (0.3,0.3,0.3, 0.3,0.3,0.3) | NO CORRECTION | 1 |
| 2 | 25 | 8 | -1 | (0.3,0.3,0.3, 0.3,0.3,0.3) | NO CORRECTION | 2,3 |

EP 2 390 064 A1

Fig. 38A

*Fig. 38B*

Fig.39

| MANIPULATION ID | ID | POSITION-ORIENTATION (m) $(x,y,z,\phi,\theta,\psi)$ | TIME AND DATE |
|---|---|---|---|
| 1 | 1 | 0.1,0.1,0,0,0,0 | 2008/8/1 15:36:20.2 |
| 1 | 2 | 0.1,0.2,0,0,0,0 | 2008/8/1 15:36:20.4 |
| . . | . . | . . | . . |
| 1 | 4 | 0.2,0.3,0,0,0,0 | 2008/8/1 15:36:20.8 |
| 1 | 5 | 0.2,0.1,0,0,0,0 | 2008/8/1 15:36:21.0 |
| . . | . . | . . | . . |
| 1 | 10 | 0.2,0.3,0,0,0,0 | 2008/8/1 15:36:22.0 |
| 1 | 11 | 0.2,0.1,0,0,0,0 | 2008/8/1 15:36:22.2 |
| . . | . . | . . | . . |
| 1 | 19 | 0.1,0.1,0.4,0,0,0 | 2008/8/1 15:36:23.8 |
| 1 | 20 | 0.1,0.2,0.1,0,0,0 | 2008/8/1 15:36:24.0 |
| . . | . . | . . | . . |
| 2 | 1 | 0.2,0.2,0.4,0,0,0 | 2008/8/1 15:36:27.0 |
| 2 | 2 | 0.1,0.1,0,0,0,0 | 2008/8/1 15:36:27.2 |
| 2 | 3 | 0.1,0.2,0,0,0,0 | 2008/8/1 15:36:27.4 |
| . . | . . | . . | . . |
| 2 | 10 | 0.2,0.3,0,0,0,0 | 2008/8/1 15:36:27.8 |
| 2 | 11 | 0.2,0.1,0,0,0,0 | 2008/8/1 15:36:28.0 |
| . . | . . | . . | . . |
| 3 | 1 | 0.2,0.2,0.4,0,0,0 | 2008/8/1 15:36:33.0 |
| 3 | 2 | 0.1,0.1,0,0,0,0 | 2008/8/1 15:36:33.2 |
| 3 | 3 | 0.1,0.2,0,0,0,0 | 2008/8/1 15:36:33.4 |
| . . | . . | . . | . . |
| 3 | 10 | 0.2,0.3,0,0,0,0 | 2008/8/1 15:36:33.8 |
| 3 | 11 | 0.2,0.1,0,0,0,0 | 2008/8/1 15:36:34.0 |

FIRST CORRECTION

SECOND CORRECTION

THIRD CORRECTION

Fig. 40

*Fig. 41*

Fig.42

EP 2 390 064 A1

## Fig.43A

| OPERATION CORRECTING INFORMATION ID | CORRECTING SECTION | | CORRECTING METHOD | JOB ID | NUMBER OF APPLICATION TIMES |
|---|---|---|---|---|---|
| | THRESHOLD VALUE OF FORCE (N) | THRESHOLD VALUE OF TIME (Sec) | | | |
| 1 | 3 | 3 | DELETION | 2 | 0 |
| 2 | 12 | 5 | DELETION | 1,3 | 0 |

EP 2 390 064 A1

## Fig.43B

| OPERATION CORRECTING INFORMATION ID | CORRECTING SECTION | | CORRECTING METHOD | JOB ID | NUMBER OF APPLICATION TIMES |
|---|---|---|---|---|---|
| | PRESENCE OR ABSENCE OF BIAS | | | | |
| 3 | 1 | | AVERAGED | 1 | 3 |
| 4 | 1 | | MINIMUM VALUE | 2,3 | 3 |

EP 2 390 064 A1

## Fig.44

MIX CIRCULARLY

MIX WITH
BIASED FORCE.
MANIPULATE WITH
FIRM GRIP.

(a)                    (b)

*Fig. 45A*

*Fig. 45B*

Fig. 45C

# Fig.46

START CORRECTION BY PERSON

S101 — DELETE START-COMPLETION TIME

S102 — DELETE COLLISION TIME

S103 — DELETE UNLESS FORCE APPLIED BY PERSON THAT IS EQUAL TO A CERTAIN THRESHOLD VALUE OR MORE IS CONTINUOUSLY MAINTAINED FOR A PERIOD OF TIME NOT LESS THAN A CERTAIN THRESHOLD VALUE.

S104 — CORRECT ONLY TYPE DETERMINED BY CORRECTING METHOD TYPE DETERMINATION UNIT.

S105 — CORRECT MOVABLE RANGE

S106 — ASSIST FORCE

S107 — ASSIST VELOCITY

S108 — AVERAGE BIAS

S109 — AVERAGE REPETITION

COMPLETION OF CORRECTION BY PERSON

<table>
<tr><td align="center">**INTERNATIONAL SEARCH REPORT**</td><td>International application No.<br><br>PCT/JP2010/000293</td></tr>
</table>

A. CLASSIFICATION OF SUBJECT MATTER
*B25J9/10*(2006.01)i, *B25J9/22*(2006.01)i

According to International Patent Classification (IPC) or to both national classification and IPC

B. FIELDS SEARCHED

Minimum documentation searched (classification system followed by classification symbols)
B25J9/10, B25J9/22

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-148466 A (Yaskawa Electric Corp.),<br>27 May 2004 (27.05.2004),<br>entire text; all drawings<br>(Family: none) | 1-25 |
| A | JP 2008-110406 A (Yaskawa Electric Corp.),<br>15 May 2008 (15.05.2008),<br>entire text; all drawings<br>(Family: none) | 1-25 |
| A | JP 2008-238338 A (Gifu University),<br>09 October 2008 (09.10.2008),<br>entire text; all drawings<br>& WO 2008/123200 A1 | 1-25 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>03 February, 2010 (03.02.10) | Date of mailing of the international search report<br>16 February, 2010 (16.02.10) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
|---|
| PCT/JP2010/000293 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2008-296308 A  (Panasonic Corp.),<br>11 December 2008 (11.12.2008),<br>entire text; all drawings<br>(Family: none) | 1-25 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59157715 A